(19) Europäisches Patentamt
European Patent Office
Office européen des brevets

(11) **EP 3 096 487 B1**

(12) **EUROPEAN PATENT SPECIFICATION**

(45) Date of publication and mention of the grant of the patent:
**29.04.2020 Bulletin 2020/18**

(21) Application number: **14878594.2**

(22) Date of filing: **14.01.2014**

(51) Int Cl.:
*H04L 9/08* (2006.01)       *H04L 9/14* (2006.01)
*H04L 9/30* (2006.01)

(86) International application number:
**PCT/JP2014/050445**

(87) International publication number:
**WO 2015/107620 (23.07.2015 Gazette 2015/29)**

(54) **CRYPT-SYSTEM, RE-ENCRYPTION KEY GENERATION APPARATUS, RE-ENCRYPTION APPARATUS, AND CRYPT-PROGRAM**

KRYPT-SYSTEM, WIEDERVERSCHLÜSSELUNGSSCHLÜSSELERZEUGUNGSVORRICHTUNG, WIEDERVERSCHLÜSSELUNGSVORRICHTUNG UND KRYPT-PROGRAM

SYSTÈME CRYPTOGRAPHIQUE, APPAREIL DE GÉNÉRATION DE CLÉ DE RECRYPTAGE, APPAREIL DE RECRYPTAGE ET PROGRAMME CRYPTOGRAPHIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.11.2016 Bulletin 2016/47**

(73) Proprietor: **Mitsubishi Electric Corporation Tokyo 100-8310 (JP)**

(72) Inventors:
• **KAWAI, Yutaka**
  **Tokyo 100-8310 (JP)**
• **TAKASHIMA, Katsuyuki**
  **Tokyo 100-8310 (JP)**

(74) Representative: **Pfenning, Meinig & Partner mbB Patent- und Rechtsanwälte Theresienhöhe 11a 80339 München (DE)**

(56) References cited:
**WO-A1-2011/045723    JP-A- 2013 105 065**

• **SONG LUO ET AL: "Ciphertext Policy Attribute-Based Proxy Re-encryption", 15 December 2010 (2010-12-15), INFORMATION AND COMMUNICATIONS SECURITY, SPRINGER BERLIN HEIDELBERG, BERLIN, HEIDELBERG, PAGE(S) 401 - 415, XP019159016, ISBN: 978-3-642-17649-4 * the whole document ***
• **YUTAKA KAWAI ET AL.: 'Fully-Anonymous Functional Proxy-Re-Encryption' CRYPTOLOGY EPRINT ARCHIVE, [Online] pages 1 - 16, XP061008268 Retrieved from the Internet: <URL:http://eprint.iacr.org/2013/318/20131011:005627> [retrieved on 2014-02-27]**
• **XIAOHUI LIANG ET AL.: 'Attribute based proxy re-encryption with delegating capabilities' PROCEEDINGS OF THE 4TH INTERNATIONAL SYMPOSIUM ON INFORMATION, COMPUTER, AND COMMUNICATIONS SECURITY (ASIACCS '09 March 2009, NEW YORK, pages 276 - 286, XP058026506**

## Description

### Technical Field

The present invention relates to a functional proxy re-encryption (FPRE) scheme.

### Background Art

Proxy re-encryption (PRE) is a system which allows decryption rights for ciphertexts to be delegated to third parties without decrypting the ciphertexts. Non-Patent Literature 1 describes an identity-based PRE (IBPRE) scheme. Non-Patent Literature 2 describes an attribute-based PRE (ABPRE) scheme. According to the PRE scheme described in Non-Patent Literature 2, only attributes consisting of AND and negative elements can be specified for ciphertexts.

Patent Literature 1 describes a functional encryption (FE) scheme. Non-Patent Literature 3 describes an FPRE scheme.

Patent Literature 2 describes a ciphertext-policy attribute-based encryption system, comprising a re-encrypter for cryptographically transforming a first ciphertext associated with a first access policy into a second ciphertext associated with a second access policy by means of a re-encryption key. The system further comprises a re-encryption key generator for generating the re-encryption key, wherein the re-encryption key enables the re-encrypter to cryptographically transform the first ciphertext associated with the first access policy into the second ciphertext associated with the second access policy. Said re-encryption key generator comprises a subsystem for encrypting a value derived from a pseudorandom number, thereby generating a further ciphertext associated with the second access policy.

Non-Patent Literature 8 describes an attribute based Proxy Re-encryption algorithm, in which a secret key $SK_L$ is associated with a set of attributes L corresponding to a user, and a re-encryption key needs to be generated for every user.

### Citation List

### Patent Literature

Patent Literature 1: JP 2012-133214 A
Patent Literature 2: WO 2011/045723 A1

### Non-Patent Literature

Non-Patent Literature 1: M. Green, and G. Ateniese, Identity-Based Proxy Re-encryption. In Applied Cryptography and Network Security. volume 4521 of LNCS, pp 288-306, 2007.

Non-Patent Literature 2: Xiaohui Liang, Zhenfu Cao, Huang Lin, Jun Shao. Attribute based proxy re-encryption with delegating capabilities. ASIA CCS 2009 pp.276-286.

Non-Patent Literature 3: Yutaka Kawai and Katsuyuki Takashima, Fully-Anonymous Functional Proxy-Re-Encryption. Cryptology ePrint Archive: Report 2013/318

Non-Patent Literature 4: Canetti and S. Hohenberger. Chosen-Ciphertext Secure Proxy Re-encryption. In ACMCCS 2007.

Non-Patent Literature 5: Okamoto, T Takashima, K.: Decentralized Attribute-Based Signatures. ePrint http://eprint.iacr.org/2011/701

Non-Patent Literature 6: Okamoto, T Takashima, K.: Fully Secure Unbounded Inner-Product and Attribute-Based Encryption. ePrint http://eprint.iacr.org/2012/671

Non-Patent Literature 7: Okamoto, T., Takashima, K.: Achieving Short Ciphertexts or Short Secret-Keys for Adaptively Secure General Inner-Product Encryption. CANS 2011, LNCS, vol. 7092, pp. 138-159 Springer Heidelberg (2011).

Non-Patent Literature 8: SONG LUO ET AL, Ciphertext Policy Attribute-Based Proxy Re-encryption, INFORMATION AND COMMUNICATIONS SECURITY, SPRINGER BERLIN HEIDELBERG, BERLIN, HEIDELBERG, PAGE(S) 401 - 415, (20101215), ISBN 978-3-642-17649-4, XP019159016.

## Summary of Invention

### Technical Problem

In the FPRE scheme described in Non-Patent Literature 3, when an original ciphertext created by an encryption algorithm is re-encrypted, the size of the ciphertext increases threefold. When the re-encrypted ciphertext is further re-encrypted, the size of the ciphertext further increases threefold. That is, when re-encryption is executed n times, the size of the ciphertext becomes $3^n$ times as large compared to the size of the original ciphertext. The size of the ciphertext increases exponentially with the number of re-encryption times.

It is an object of the present invention to implement an FPRE scheme that reduces the amount of increase in the size of a ciphertext caused by re-encryption.

### Solution to Problem

The aforementioned problem is solved by the features of the independent claims. Further embodiments are the subject-matter of the dependent claims.

A cryptographic system according to the present invention implements a proxy re-encryption function in a cryptographic scheme according to which when two pieces of information correspond to each other, a ciphertext in which is set one of the two pieces of information is capable of being decrypted with a decryption key in which is set the other one of the two pieces of information, and the cryptographic system includes:

an encryption device to output a ciphertext $ct_0$ in which is set one of attribute information $x_0$ and attribute information $v_0$ corresponding to each other;

a re-encryption key generation device to acquire a decryption key $k^*$ in which is set the other one of the attribute information $x_0$ and the attribute information $v_0$, and output a re-encryption key $rk_1$ that includes a decryption key $k^{*rk}_0$ obtained by converting the acquired decryption key $k^*$ with conversion information $r_1$, and includes a ciphertext $ct'_1$ obtained by encrypting the conversion information $r_1$ with one of attribute information $x_1$ and attribute information $v_1$ corresponding to each other being set; and

a re-encryption device to output a re-encrypted ciphertext $ct_1$ that includes a session key $K'_0$ obtained by decrypting the ciphertext $ct_0$ with the decryption key $k^{*rk}_0$, and includes the ciphertext $ct'_1$.

### Advantageous Effects of Invention

In a cryptographic system according to the present invention, a re-encryption key rk includes a session key obtained by decrypting a ciphertext with a decryption key converted with conversion information, and also includes a ciphertext obtained by encrypting the conversion information so as to allow decryption by a user at a forwarding destination. This makes it possible to reduce the amount of increase in the size of a ciphertext caused by re-encryption.

### Brief Description of Drawings

Fig. 1 is an explanatory drawing of a matrix M^;
Fig. 2 is an explanatory drawing of a matrix $M_\delta$;
Fig. 3 is an explanatory drawing of $s_0$;
Fig. 4 is an explanatory drawing of $s^{\rightarrow T}$;
Fig. 5 is a configuration diagram of a cryptographic system 10 that implements a CP-FPRE scheme;
Fig. 6 is a functional block diagram illustrating the function of a key generation device 100;
Fig. 7 is a functional block diagram illustrating the function of an encryption device 200;
Fig. 8 is a functional block diagram illustrating the function of a decryption device 300;
Fig. 9 is a functional block diagram illustrating the function of a re-encryption device 400;
Fig. 10 is a functional block diagram illustrating the function of a re-encrypted ciphertext decryption device 500;
Fig. 11 is a flowchart illustrating the process of a Setup algorithm;
Fig. 12 is a flowchart illustrating the process of a KG algorithm;
Fig. 13 is a flowchart illustrating the process of an Enc algorithm;
Fig. 14 is a flowchart illustrating the process of an RKG algorithm;
Fig. 15 is a flowchart illustrating the process of an REnc algorithm;
Fig. 16 is a flowchart illustrating the process of a Dec1 algorithm;

Fig. 17 is a flowchart illustrating the process of a Dec2 algorithm;

Fig. 18 is a flowchart illustrating the process of the Setup algorithm;

Fig. 19 is a configuration diagram of a cryptographic system 10 that implements a KP-FPRE scheme;

Fig. 20 is a functional block diagram illustrating the function of a key generation device 100;

Fig. 21 is a functional block diagram illustrating the function of an encryption device 200;

Fig. 22 is a functional block diagram illustrating the function of a decryption device 300;

Fig. 23 is a functional block diagram illustrating the function of a re-encryption device 400;

Fig. 24 is a functional block diagram illustrating the function of a re-encrypted ciphertext decryption device 500;

Fig. 25 is a flowchart illustrating the process of a KG algorithm;

Fig. 26 is a flowchart illustrating the process of an Enc algorithm;

Fig. 27 is a flowchart illustrating the process of an RKG algorithm;

Fig. 28 is a flowchart illustrating the process of an REnc algorithm;

Fig. 29 is a flowchart illustrating the process of a Dec1 algorithm;

Fig. 30 is a flowchart illustrating the process of a Dec2 algorithm; and

Fig. 31 is a diagram illustrating an example of a hardware configuration of each device of the cryptographic system 10 presented in Embodiments 1 to 4.

**Description of Embodiments**

Notations to be used in the following description will be described.

When A is a random variable or distribution, Formula 101 denotes that y is randomly selected from A according to the distribution of A. That is, y is a random number in Formula 101.

[Formula 101]

$$ y \xleftarrow{R} A $$

When A is a set, Formula 102 denotes that y is uniformly selected from A. That is, y is a uniform random number in Formula 102.

[Formula 102]

$$ y \xleftarrow{U} A $$

Formula 103 denotes that y is set, defined, or substituted by z.

[Formula 103]

$$ y := z $$

When a is a fixed value, Formula 104 denotes that a machine (algorithm) A outputs a on input x.

[Formula 104]

$$ A(x) \rightarrow a $$

For example,

$A(x) \rightarrow 1$

Formula 105, namely $F_q$, denotes a finite field of order q.

[Formula 105]

$$\mathbb{F}_q$$

A vector symbol denotes a vector representation over the finite field $F_q$, as indicated in Formula 106.

[Formula 106]

$$\vec{x} \quad \text{denotes}$$

$$(x_1, \ldots, x_n) \in \mathbb{F}_q^n .$$

Formula 107 denotes that the inner-product, indicated in Formula 109, of two vectors $x^{\rightarrow}$ and $v^{\rightarrow}$ indicated in Formula 108.

[Formula 107]

$$\vec{x} \cdot \vec{v}$$

[Formula 108]

$$\vec{x} = (x_1, \ldots, x_n) ,$$

$$\vec{v} = (v_1, \ldots, v_n)$$

[Formula 109]

$$\sum_{i=1}^{n} x_i v_i$$

Note that $X^T$ denotes the transpose of a matrix X.

For a basis B and a basis $B^*$ indicated in Formula 110, Formula 111 is established.

[Formula 110]

$$\mathbb{B} := (b_1, \ldots, b_N),$$

$$\mathbb{B}^* := (b_1^*, \ldots, b_N^*)$$

[Formula 111]

$$(x_1, \ldots, x_N)_{\mathbb{B}} := \sum_{i=1}^{N} x_i b_i ,$$

$$(y_1, \ldots, y_N)_{\mathbb{B}^*} := \sum_{i=1}^{N} y_i b_i^*$$

Note that $c^{\rightarrow}_j$ denotes a normal basis vector indicated in Formula 112.

[Formula 112]

$$\vec{e_j} : ( \overbrace{0 \cdots 0}^{j-1} ,1, \overbrace{0 \cdots 0}^{n-j} ) \in \mathbb{F}_q^n \ \text{for } j = 1,...,n,$$

In the following description, when Vt, nt, wt, zt, nu, wu, and zu are each represented as a subscript or superscript, these Vt, nt, wt, zt, nu, wu, and zu respectively denote $V_t$, $n_t$, $w_t$, $z_t$, $n_u$, $w_u$, and $z_u$. Likewise, when $\delta_{i,j}$ is represented as a superscript, this $\delta_{i,j}$ denotes $\delta_{i,j}$. Likewise, when $\varphi_j$ is represented as a superscript, this $\varphi_j$ denotes $\varphi_j$.

When → denoting a vector is attached to a subscript or superscript, it is meant that this → is attached as a superscript to the subscript or superscript.

Embodiment 1

This embodiment describes a basic concept for implementing an FPRE scheme, and then describes a structure of the FPRE scheme according to this embodiment.

First, FPRE will be briefly described.

Second, a space having a rich mathematical structure called "dual pairing vector spaces (DPVS)" which is a space for implementing the FPRE scheme will be described.

Third, a concept for implementing the FPRE scheme will be described. Here, a span program, an inner-product of attribute vectors and an access structure, and a secret distribution scheme (secret sharing scheme) will be described.

Fourth, the FPRE scheme according to this embodiment will be described. In this embodiment, a ciphertext-policy FPRE scheme (CP-FPRE) scheme will be described. First, a basic structure of the CP-FPRE scheme will be described. Then, a basic configuration of a cryptographic system 10 that implements the CP-FPRE scheme will be described. Then, the CP-FPRE scheme and the cryptographic system 10 according to this embodiment will be described in detail.

<1. FPRE>

FPRE is a proxy re-encryption scheme which provides more sophisticated and flexible relations among an encryption key (ek), a decryption key (dk), and a re-encryption key (rk).

FPRE has the following two properties.

First, attribute information x and attribute information v are respectively set in an encryption key and a decryption key. If and only if a relation R(x, v) holds, a decryption key $dk_v$ can decrypt a ciphertext encrypted with an encryption key $ek_x$.

Second, in addition to the attribute information x and the attribute information v being respectively set in the encryption key and the decryption key, two pieces of attribute information (x', v) are set in a re-encryption key. If and only if R(x, v) holds, a re-encryption key $rk_{(x',v)}$ can transform a ciphertext encrypted with the encryption key $ek_x$ to a ciphertext which can be decrypted with a decryption key $dk_{v'}$ with which R(x', v') holds, that is, to a ciphertext encrypted with an encryption key $ek_{x'}$.

In a case where a relation R is an equality relation, that is, R(x, v) holds if and only if x = v, this PRE scheme is IDPRE.

ABPRE is available as more generalized PRE than IDPRE. In ABPRE, attribute information which is set in an encryption key and attribute information which is set in a decryption key are each a set of attribute information. For example, the attribute information which is set in the encryption key is X := (x1, ..., xd), and the attribute information which is set in the decryption key is V := (v1, ..., vd)

An equality relation for each pair of components of the attribute information (for example, $\{x_t = v_t\}t \in \{1, ..., d\}$) is input to an access structure S, and R(X, V) holds if and only if the access structure S accepts this input. That is, a ciphertext encrypted with the encryption key can be decrypted with the decryption key. Non-Patent Literature 2 proposes a ciphertext-policy PRE scheme according to which an access structure S is embedded in a ciphertext. The access structure in this case consists of only AND and negative elements.

There is ordinary FE in which a ciphertext forwarding function does not exist, that is, a re-encryption key does not exist. In FE, a re-encryption key and a re-encryption process do not exist, and attribute information x and attribute information v are respectively set in an encryption key and a decryption key. If and only if a relation R(x, v) holds, a decryption key $dk_v$ := (dk, v) can decrypt a ciphertext encrypted with an encryption key $ek_x$ := (ek, x).

<2. Dual Pairing Vector Spaces >

First, symmetric bilinear pairing groups will be described.

Symmetric bilinear pairing groups (q, G, $G^T$, g, e) are a tuple of a prime q, a cyclic additive group G of order q, a cyclic multiplicative group $G^T$ of order q, $g \neq 0 \in G$, and a polynomial-time computable nondegenerate bilinear pairing e : G $\times$ G $\to G_T$. The nondegenerate bilinear pairing signifies e(sg, tg) = e(g, g)$^{st}$, and e(g, g) $\neq$ 1.

In the following description, let $G_{bpg}$ be an algorithm that takes as input $1^\lambda$ and outputs values of a parameter $param_G$ := (q, G, $G_T$, g, e) of bilinear pairing groups with a security parameter $\lambda$.

Dual pairing vector spaces will now be described.

Dual pairing vector spaces (q, V, $G_T$, A, e) can be constructed by a direct product of the symmetric bilinear pairing groups ($param_G$:=(q, G, $G_T$, g, e)). The dual pairing vector spaces (q, V, $G_T$, A, e) are a tuple of a prime q, an N-dimensional vector space V over $F_q$ indicated in Formula 113, a cyclic group $G_T$ of order q, and a canonical basis A:= ($a_1$, ..., $a_N$) of the space V, and have the following operations (1) and (2), where $a_i$ is as indicated in Formula 114.

[Formula 113]

$$\mathbb{V} := \overbrace{\mathbb{G} \times \cdots \times \mathbb{G}}^{N}$$

[Formula 114]

$$a_i := (\overbrace{0,\ldots,0}^{i-1}, g, \overbrace{0,\ldots,0}^{N-i})$$

Operation (1): Nondegenerate bilinear pairing

A pairing in the space V is defined by Formula 115.

[Formula 115]

$$e(x, y) := \prod_{i=1}^{N} e(G_i, H_i) \in \mathbb{G}_T$$

where

$$(G_1, \ldots, G_N) := x \in \mathbb{V},$$

$$(H_1, \ldots, H_N) := y \in \mathbb{V}$$

This is nondegenerate bilinear, that is, e(sx, ty) = e(x, y)$^{st}$ and if e(x, y) = 1 for all y $\in$ V, then x = 0. For all i and j, e($a_i$, $a_j$) = e(g, g)$^{\delta_{i,j}}$, where $\delta_{i,j}$ = 1 if i = j, and $\delta_{i,j}$ = 0 if i $\neq$ j, and e(g, g) $\neq$ 1 $\in G_T$.

Operation (2): Distortion maps

Linear transformations $\varphi_{i,j}$ on the space V indicated in Formula 116 can achieve Formula 117.

[Formula 116]

$$\text{If } \phi_{i,j}(a_j) = a_i \text{ and}$$

$$k \neq j, \text{ then } \phi_{i,j}(a_k) = 0.$$

[Formula 117]

$$\phi_{i,j}(x) := (\overbrace{0,...,0}^{i-1}, g_j, \overbrace{0,...,0}^{N-i})$$

where

$$(g_1, ... g_N) := x.$$

The linear transformations $\varphi_{i,j}$ will be called distortion maps.

In the following description, let $G_{dpvs}$ be an algorithm that takes as input $1^\lambda$ ($\lambda \in$ natural number), $N \in$ natural number, and values of a parameter $param_G := (q, G, G_T, g, e)$ of bilinear pairing groups, and outputs values of a parameter $param_V := (q, V, G_T, A, e)$ of dual pairing vector spaces with a security parameter $\lambda$ and an N-dimensional space V.

Description will be directed herein to a case where the dual pairing vector spaces are constructed using the above-described symmetric bilinear pairing groups. The dual pairing vector spaces can also be constructed using asymmetric bilinear pairing groups. The following description can easily be adapted to a case where the dual pairing vector spaces are constructed using asymmetric bilinear pairing groups.

<3. Concept for Implementing FPRE Scheme >

<3-1. Span Program>

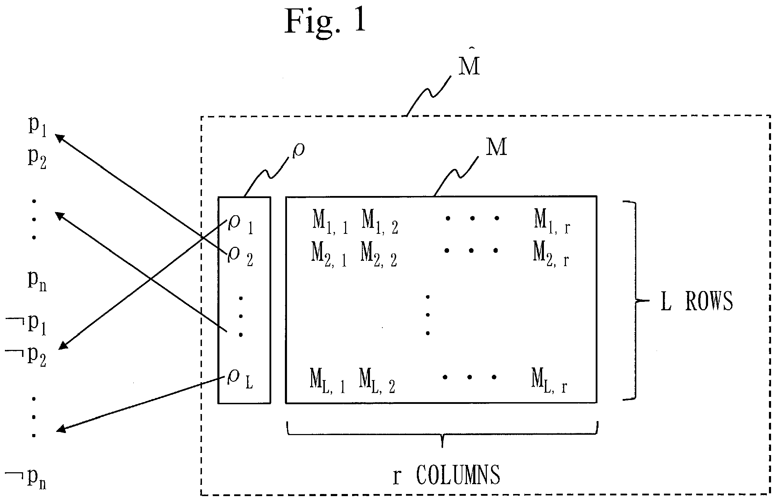

Fig. 1 is an explanatory drawing of a matrix M^.

Let $\{p_1, ..., p_n\}$ be a set of variables. M^ := (M, $\rho$) is a labeled matrix. The matrix M is an (L rows $\times$ r columns) matrix over $F_q$, and $\rho$ is a label of columns of the matrix M and is related to one of literals $\{p_1, ..., p_n, \neg p_1, ..., \neg p_n\}$. A label $\rho_i$ (i = 1, ..., L) of each row of M is related to one of the literals. That is, $\rho : \{1, ..., L\} \rightarrow \{p_1, ..., p_n, \neg p_1, ..., \neg p_n\}$.

For every input sequence $\delta \in \{0, 1\}^n$, a submatrix $M_\delta$ of the matrix M is defined. The matrix $M_\delta$ is a submatrix consisting of those rows of the matrix M the labels $\rho$ of which are related to a value "1" by the input sequence $\delta$. That is, the matrix $M_\delta$ is a submatrix consisting of the rows of the matrix M which are related to $p_i$ such that $\delta_i = 1$ and the rows of the matrix M which are related to $\neg p_i$ such that $\delta_i = 0$.

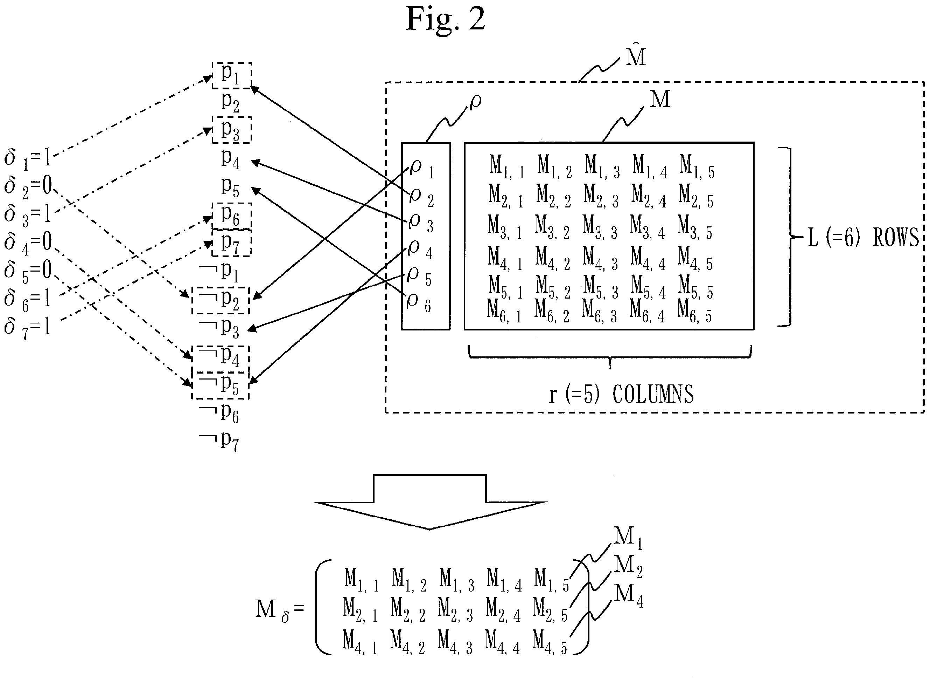

Fig. 2 is an explanatory drawing of the matrix $M_\delta$. In Fig. 2, note that n = 7, L = 6, and r = 5. That is, the set of variables is $\{p_1, ..., p_7\}$, and the matrix M is a (6 rows $\times$ 5 columns) matrix. In Fig. 2, assume that the labels $\rho$ are related such that $\rho_1$ is related to $\neg p_2$, $\rho_2$ to $p_1$, $\rho_3$ to $q_4$, $\rho_4$ to $\neg p_5$, $\rho_5$ to $\neg p_3$, and $\rho_6$ to ps.

Assume that in an input sequence $\delta \in \{0, 1\}^7$, $\delta_1 = 1$, $\delta_2 = 0$, $\delta_3 = 1$, $\delta_4 = 0$, $\delta_5 = 0$, $\delta_6 = 1$, and $\delta_7 = 1$. In this case, a submatrix consisting of the rows of the matrix M which are related to literals $(p_1, p_3, p_6, p_7, \neg p_2, \neg p_4, \neg p_5)$ surrounded by broken lines is the matrix $M_\delta$. That is, the submatrix consisting of the first row ($M_1$), second row ($M_2$), and fourth row ($M_4$) of the matrix M is the matrix $M_\delta$.

In other words, when map $\gamma : \{1, ..., L\} \rightarrow \{0, 1\}$ is $[\rho(j) = p_i] \wedge [\delta_i = 1]$ or $[\rho(j) = \neg p_i] \wedge [\delta_i = 0]$, then $\gamma(j) = 1$; otherwise $\gamma(j) = 0$. In this case, $M_\delta := (M_j)_{\gamma(j)=1}$. Note that $M_j$ is the j-th row of the matrix M.

That is, in Fig. 2, map $\gamma(j) = 1$ (j = 1, 2, 4), and map $\gamma(j) = 0$ (j = 3, 5, 6). Hence, $(M_j)_{\gamma(j)=1}$ is $M_1$, $M_2$, and $M_4$, and is the matrix $M_\delta$.

More specifically, whether or not the j-th row of the matrix M is included in the matrix $M_\delta$ is determined by whether the value of the map $\gamma(j)$ is "0" or "1".

The span program M^ accepts an input sequence $\delta$ if and only if $1^\rightarrow \in span<M_\delta>$, and rejects the input sequence $\delta$ otherwise. That is, the span program M^ accepts the input sequence $\delta$ if and only if linear combination of the rows of the matrix $M_\delta$ which are obtained from the matrix M^ by the input sequence $\delta$ gives $1^\rightarrow$. $1^\rightarrow$ is a row vector which has a value "1" in each element.

For example, in an example of Fig. 2, the span program M^ accepts the input sequence $\delta$ if and only if linear combination of the respective rows of the matrix $M_\delta$ consisting of the first, second, and fourth rows of the matrix M gives $1^\to$. That is, if there exist $\alpha_1$, $\alpha_2$, and $\alpha_4$ with which $\alpha_1(M_1) + \alpha_2(M_2) + \alpha_4(M_4) = 1^\to$, the span program M^ accepts the input sequence $\delta$.

The span program is called monotone if its labels $\rho$ are related to only positive literals $\{p_1, ..., p_n\}$. The span program is called non-monotone if its labels $\rho$ are related to the literals $\{p_1, ..., p_n, \neg p_1, ..., \neg p_n\}$. It is assumed herein that the span program is non-monotone. An access structure (non-monotone access structure) is constructed using the non-monotone span program. Briefly, an access structure controls access to encryption, that is, it controls whether a ciphertext is to be decrypted or not.

As will be described in detail later, the span program being non-monotone, instead of being monotone, allows for a wider range of applications of the FPRE scheme constructed using the span program.

<3-2. Inner-Product of Attribute Information and Access Structure >

The above-described map $\gamma(j)$ is computed using the inner-product of attribute information. That is, the inner-product of attribute information is used to determine which row of the matrix M is to be included in the matrix $M_\delta$.

$U_t$ ($t = 1, ..., d$ and $U_t \subset \{0, 1\}^*$) is a sub-universe and a set of attributes. Each $U_t$ includes identification information (t) of the sub-universe and an n-dimensional vector ($v^\to$). That is, $U_t$ is (t, $v^\to$), where $t \in \{1, ..., d\}$ and $v^\to \in F_q{}^n$.

Let $U_t := (t, v^\to)$ be a variable p of the span program M^ := (M, $\rho$). That is, p := (t, $v^\to$). Let the span program M^ := (M, $\rho$) having the variable (p := (t, $v^\to$), (t, $v'^\to$), ...) be an access structure S.

That is, the access structure S := (M, $\rho$) and $\rho$ : $\{1, ..., L\} \to \{(t, v^\to), (t, v'^\to), ..., \neg(t, v^\to), \neg(t, v'^\to), ...\}$.

Let $\Gamma$ be a set of attributes. That is, $\Gamma := \{(t, x^\to_t) \mid x^\to_t \in F_q{}^n, 1 \le t \le d\}$.

When $\Gamma$ is given to the access structure S, map $\gamma$: $\{1, ..., L\} \to \{0, 1\}$ for the span program M^ := (M, $\rho$) is defined as follows. For each integer i = 1, ..., L, set $\gamma(j) = 1$ if $[\rho(i) = (t, v^\to_i)] \wedge [(t, x^\to_t) \in \Gamma] \wedge [v^\to_i \cdot x^\to_t = 0]$ or $[\rho(i) = \neg(t, v^\to_i)] \wedge [(t, x^\to_t) \in \Gamma] \wedge [v^\to_i \cdot x^\to_t \ne 0]$. Set $\gamma(j) = 0$ otherwise.

That is, the map $\gamma$ is computed based on the inner-product of the attribute information $v^\to$ and $x^\to$. As described above, which row of the matrix M is to be included in the matrix $M_\delta$ is determined by the map $\gamma$. More specifically, which row of the matrix M is to be included in the matrix $M_\delta$ is determined by the inner-product of the attribute information $v^\to$ and $x^\to$. The access structure S := (M, $\rho$) accepts $\Gamma$ if and only if $1^\to \in \text{span}<(M_i)_{\gamma(i)=1}>$.

<3-3. Secret Distribution Scheme>

A secret distribution scheme for the access structure S := (M, $\rho$) will be described.

The secret distribution scheme is distributing secret information to render it nonsense distributed information. For example, secret information s is distributed into 10 pieces to generate 10 pieces of distributed information. Each of the 10 pieces of distributed information does not have information on the secret information s. Hence, even when one of the pieces of distributed information is obtained, no information can be obtained on the secret information s. On the other hand, if all of the 10 pieces of distributed information are obtained, the secret information s can be recovered.

There is another secret distribution scheme according to which the secret information s can be recovered if some (for example, 8 pieces) of distributed information can be obtained, without obtaining all of the 10 pieces of distributed information. A case like this where the secret information s can be recovered using 8 pieces out of 10 pieces of distributed information will be called 8-out-of-10. That is, a case where the secret information s can be recovered using t pieces out of n pieces of distributed information will be called t-out-of-n. This t will be called a threshold.

There is still another secret distribution scheme according to which when 10 pieces of distributed information $d_1, ..., d_{10}$ are generated, the secret information s can be recovered with 8 pieces of distributed information $d_1, ..., d_8$, but the secret information s cannot be recovered with 8 pieces of distributed information $d_3, ..., d_{10}$. In other words, secret distribution schemes include a scheme according to which whether or not the secret information s can be recovered is controlled not only by the number of pieces of distributed information obtained, but also the combination of distributed information obtained.

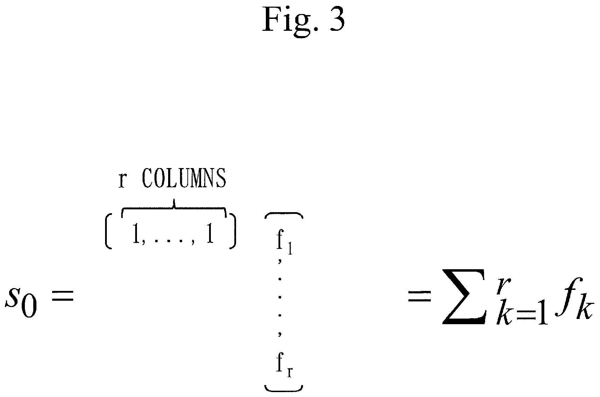

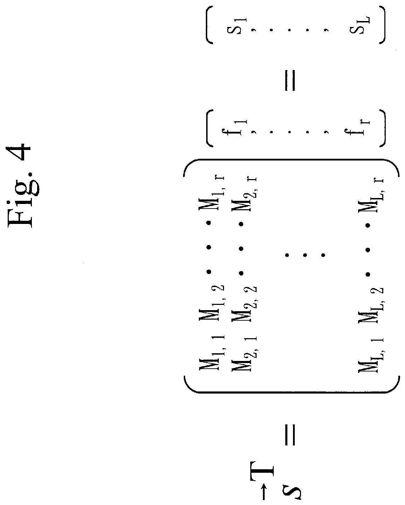

Fig. 3 is an explanatory drawing of $s_0$. Fig. 4 is an explanatory drawing of $s^\to{}^T$.

Let a matrix M be an (L rows $\times$ r columns) matrix. Let $f^\to{}^T$ be a column vector indicated in Formula 118.

[Formula 118]

$$\vec{f}^{\mathrm{T}} := (f_1, \ldots f_r)^{\mathrm{T}} \xleftarrow{\;U\;} \mathbb{F}_q^r$$

Let $s_0$ indicated in Formula 119 be secret information to be shared.

[Formula 119]

$$s_0 := \vec{1} \cdot \vec{f}^{\mathrm{T}} := \sum_{k=1}^{r} f_k$$

Let $s^{\rightarrow \mathrm{T}}$ indicated in Formula 120 be a vector of L pieces of distributed information of $s_0$.

[Formula 120]

$$\vec{s}^{\mathrm{T}} := (s_1, \ldots s_L)^{\mathrm{T}} := M \cdot \vec{f}^{\mathrm{T}}$$

Let the distributed information $s_i$ belong to p(i).

If the access structure S := (M, p) accepts $\Gamma$, that is, $1^\rightarrow \in$ span$<(M_i)_{\gamma(i)=1}>$ for $\gamma : \{1, \ldots, L\} \to \{0, 1\}$, then there exist constants $\{\alpha_i \in F_q \mid i \in I\}$ such that $I \subseteq \{i \in \{1, \ldots, L\} \mid \gamma(i) -=1\}$.

This is obvious from the explanation about the example of Fig. 2 that if there exist $\alpha_1$, $\alpha_2$, and $\alpha_4$ with which $\alpha_1(M_1) + \alpha_2(M_2) + \alpha_4(M_4) = 1^\rightarrow$, the span program M^ accepts the input sequence $\delta$. That is, if the span program M^ accepts the input sequence $\delta$ when there exist $\alpha_1$, $\alpha_2$, and $\alpha_4$ with which $\alpha_1(M_1) + \alpha_2(M_2) + \alpha_4(M_4) = 1^\rightarrow$, then there exist $\alpha_1$, $\alpha_2$, and $\alpha_4$ with which $\alpha_1(M_1) + \alpha_2(M_2) + \alpha_4(M_4) = 1^\rightarrow$.

Note Formula 121.

[Formula 121]

$$\sum_{i \in I} \alpha_i s_i := s_0$$

Note that the constants $\{\alpha_i\}$ can be computed in time polynomial in the size of the matrix M.

With the FPRE scheme according to the following embodiments, an access structure is constructed by applying the inner-product predicate and the secret distribution scheme to the span program, as described above. Therefore, access control can be designed flexibly by designing the matrix M in the span program and the attribute information x and the attribute information v (predicate information) in the inner-product predicate. That is, access control can be designed very flexibly. Designing of the matrix M corresponds to designing of conditions such as a threshold of the secret distribution scheme.

For example, the attribute-based encryption scheme described above corresponds to a case where designing of the inner-product predicate is limited to a certain condition in the access structure in the FPRE scheme according to the following embodiments. That is, when compared to the access structure in the FPRE scheme according to the following embodiments, the access structure in the attribute-based encryption scheme has a lower flexibility in access control design because it lacks the flexibility in designing the attribute information x and the attribute information v (predicate information) in the inner-product predicate. More specifically, the attribute-based encryption scheme corresponds to a case where attribute information $\{x^\rightarrow{}_t\}_{t \in \{1,\ldots,d\}}$ and $\{v^\rightarrow{}_t\}_{t \in \{1,\ldots,d\}}$ are limited to two-dimensional vectors for the equality relation, for example, $x^\rightarrow{}_t := (1, x_t)$ and $v^\rightarrow{}_t := (v_t, -1)$.

An inner-product predicate PRE scheme corresponds to a case where designing of the matrix M in the span program is limited to a certain condition in the access structure in the FPRE scheme according to the following embodiments. That is, when compared to the access structure in the FPRE scheme according to the following embodiments, the access structure in the inner-product predicate encryption scheme has a lower flexibility in access control design because it lacks the flexibility in designing the matrix M in the span program. More specifically, the inner-product predicate encryption scheme corresponds to a case where the secret distribution scheme is limited to 1-out-of-1 (or d-out-of-d).

In particular, the access structure in the FPRE scheme according to the following embodiments constitutes a non-monotone access structure that uses a non-monotone span program. Thus, the flexibility in access control designing improves.

More specifically, since the non-monotone span program includes a negative literal ($\neg$p), a negative condition can be set. For example, assume that First Company includes four departments, A, B, C, and D. Assume that access control is to be performed such that only users belonging to departments other than department B of First Company are capable of access (capable of decryption). In this case, if a negative condition cannot be set, a condition that "the user belongs to any one of departments A, C, and D of First Company" must be set. On the other hand, if a negative condition can be set, a condition that "the user is an employee of First Company and belongs to a department other than department B" can be set. In other words, since a negative condition can be set, natural condition setting is possible. Although the number of departments is small in this case, this scheme is very effective in a case where the number of departments is large.

<4. Basic Structure of FPRE Scheme>

<4-1. Basic Structure of CP-FPRE Scheme>

The structure of the CP-FPRE scheme will be briefly described. Note that CP (ciphertext policy) means that a policy, namely an access structure, is embedded in a ciphertext.

The CP-FPRE scheme includes seven algorithms: Setup, KG, Enc, RKG, REnc, Dec1, and Dec2.

(Setup)

A Setup algorithm is a probabilistic algorithm that takes as input a security parameter $\lambda$, an attribute format $n^{\rightarrow} := (d; n_1, ..., n_d; u_1, ..., u_d; z_1, ..., z_d)$, and a value Q indicating an upper limit value of the number of re-encryption times, and outputs a public parameter pk and a master key sk.

(KG)

A KG algorithm is a probabilistic algorithm that takes as input an attribute set $\Gamma := \{(t, x^{\rightarrow}_t) \mid x^{\rightarrow} \in F_q^{nt}, 1 \le t \le d\}$, the public parameter pk, and the master key sk, and outputs a decryption key $sk_\Gamma$.

(Enc)

An Enc algorithm is a probabilistic algorithm that takes as input a message m, an access structure S = (M, $\rho$), and the public parameter pk, and outputs a ciphertext $ct^n_S$.

(RKG)

An RKG algorithm is a probabilistic algorithm that takes as input the decryption key $sk_\Gamma$, an access structure S' := (M', $\rho$'), the public parameter pk, and a value n indicating the number of times the ciphertext $ct^n_S$ to be re-encrypted has been re-encrypted, and outputs a re-encryption key $rk^n_{\Gamma.S'}$.

(REnc)

An REnc algorithm is a probabilistic algorithm that takes as input the ciphertext $ct^n_S$, the re-encryption key $rk^n_{\Gamma.S'}$, and the public parameter pk, and outputs a re-encrypted ciphertext $ct^{n+1}_{S'}$.

(Decl)

A Dec1 algorithm is an algorithm that takes as input a re-encrypted ciphertext $ct^n_{S'}$, a decryption key $sk_{\Gamma'}$, and the public parameter pk, and outputs the message m or a distinguished symbol $\perp$.

(Dec2)

A Dec2 algorithm is an algorithm that takes as input the ciphertext $ct^n_S$ ($ct^0_S$), the decryption key $sk_\Gamma$, and the

public parameter pk, and outputs the message m or a distinguished symbol $\perp$.

<4-2. Cryptographic System 10>

The cryptographic system 10 that executes the algorithms of the CP-FPRE scheme will be described.

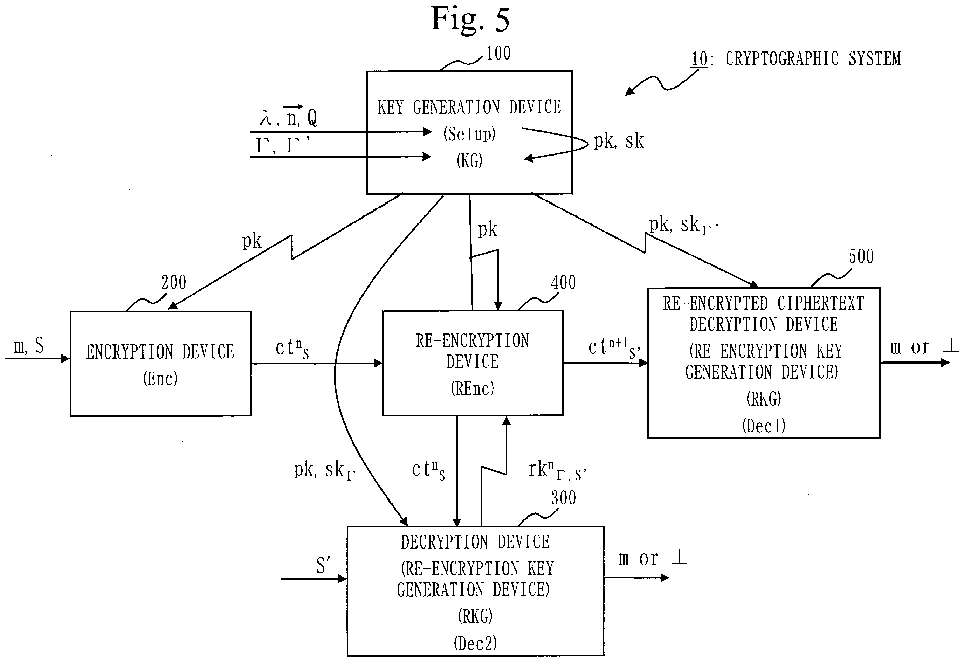

Fig. 5 is a configuration diagram of the cryptographic system 10 that implements the CP-FPRE scheme.

The cryptographic system 10 includes a key generation device 100, an encryption device 200, a decryption device 300 (re-encryption key generation device), a re-encryption device 400, and a re-encrypted ciphertext decryption device 500 (re-encryption key generation device).

The key generation device 100 executes the Setup algorithm taking as input a security parameter $\lambda$, an attribute format $n^\rightarrow := (d; n_1, ..., n_d; u_1, ...,u_d; z_1, ..., z_d)$, and a value Q, and thus generates a public parameter pk and a master key sk.

Then, the key generation device 100 publishes the public parameter pk. The key generation device 100 also executes the KG algorithm taking as input an attribute set $\Gamma$, and thus generates a decryption key $sk_\Gamma$, and transmits the decryption key $sk_\Gamma$ to the decryption device 300 in secrecy. The key generation device 100 also executes the KG algorithm taking as input an attribute set $\Gamma'$, and thus generates a decryption key $sk_{\Gamma'}$, and transmits the decryption key $sk_{\Gamma'}$ to the re-encrypted ciphertext decryption device 500 in secrecy.

The encryption device 200 executes the Enc algorithm taking as input a message m, an access structure S, and the public parameter pk, and thus generates a ciphertext $ct^n_S$. The encryption device 200 transmits the ciphertext $ct^n_S$ to the re-encryption device 400.

The decryption device 300 executes the RKG algorithm taking as input the public parameter pk, the decryption key $sk_\Gamma$, an access structure S', and a value n, and thus generates a re-encryption key $rk^n_{\Gamma,S'}$. The decryption device 300 transmits the re-encryption key $rk^n_{\Gamma,S'}$ to the re-encryption device in secrecy.

The decryption device 300 also executes the Dec2 algorithm taking as input the public parameter pk, the decryption key $sk_\Gamma$, and the ciphertext $ct^n_S$ ($ct^0_S$), and outputs the message m or a distinguished symbol $\perp$.

The re-encryption device 400 executes the REnc algorithm taking as input the public parameter pk, the re-encryption key $rk^n_{\Gamma,S'}$, and the ciphertext $ct^n_S$, and thus generates a re-encrypted ciphertext $ct^{n+1}_{S'}$, The re-encryption device 400 transmits the re-encrypted ciphertext $ct^{n+1}_{S'}$ to the re-encrypted ciphertext decryption device 500.

The re-encrypted ciphertext decryption device 500 executes the Dec1 algorithm taking as input the public parameter pk, the decryption key $sk_{\Gamma'}$, and the re-encrypted ciphertext $ct^{n+1}_{S'}$, and outputs the message m or a distinguished symbol $\perp$.

<4-4. CP-FPRE Scheme and Cryptographic System 10 in Detail>

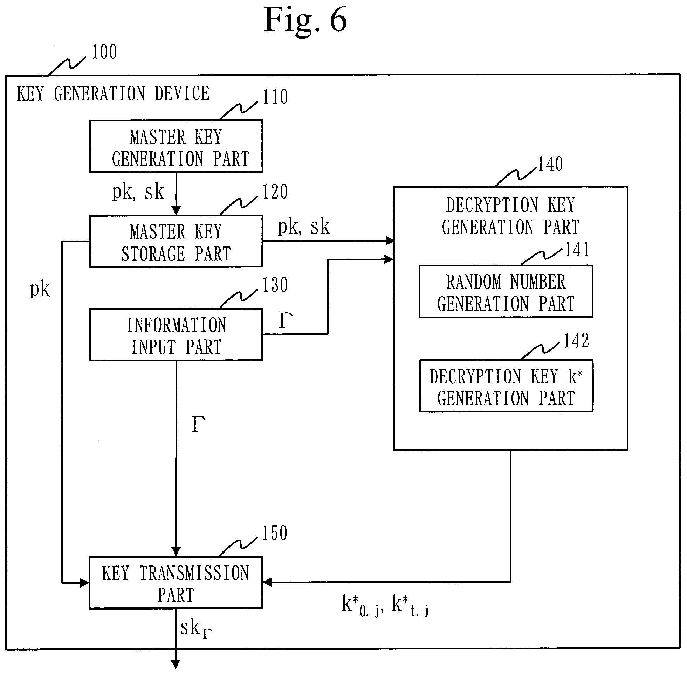

With reference to Fig. 6 through Fig. 17, the CP-FPRE scheme will be described, and the function and operation of the cryptographic system 10 that implements the CP-FPRE scheme will be described.

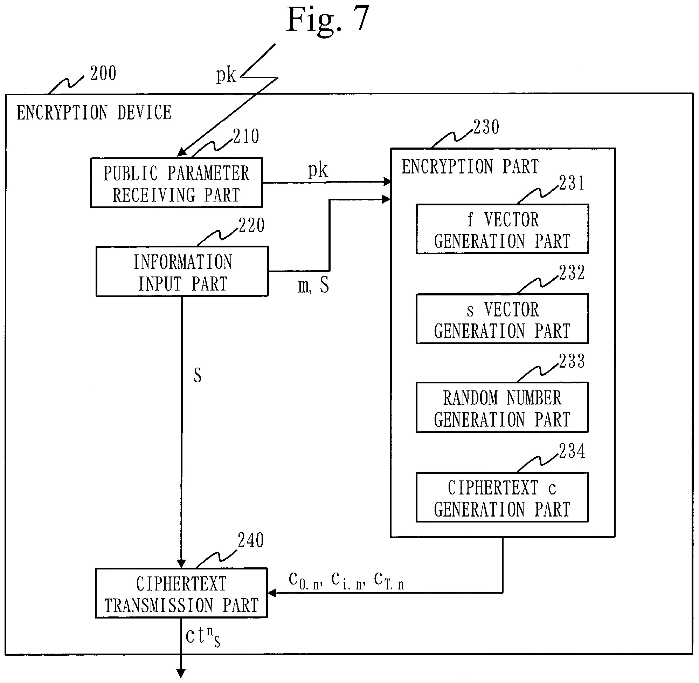

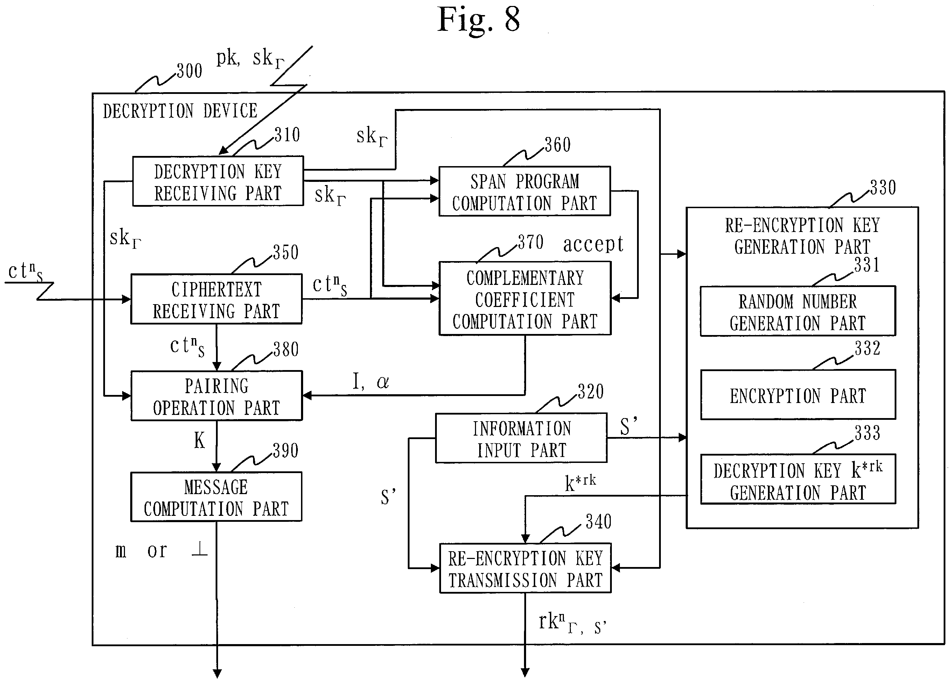

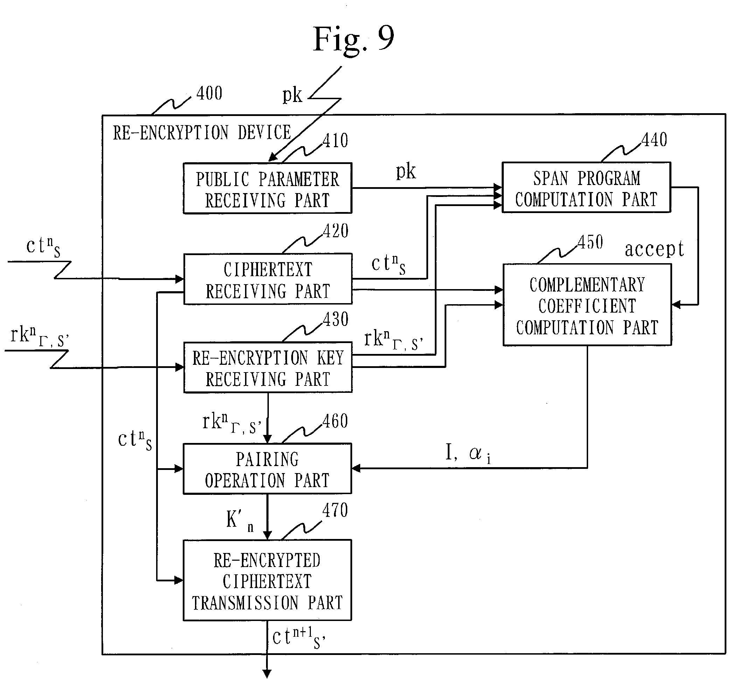

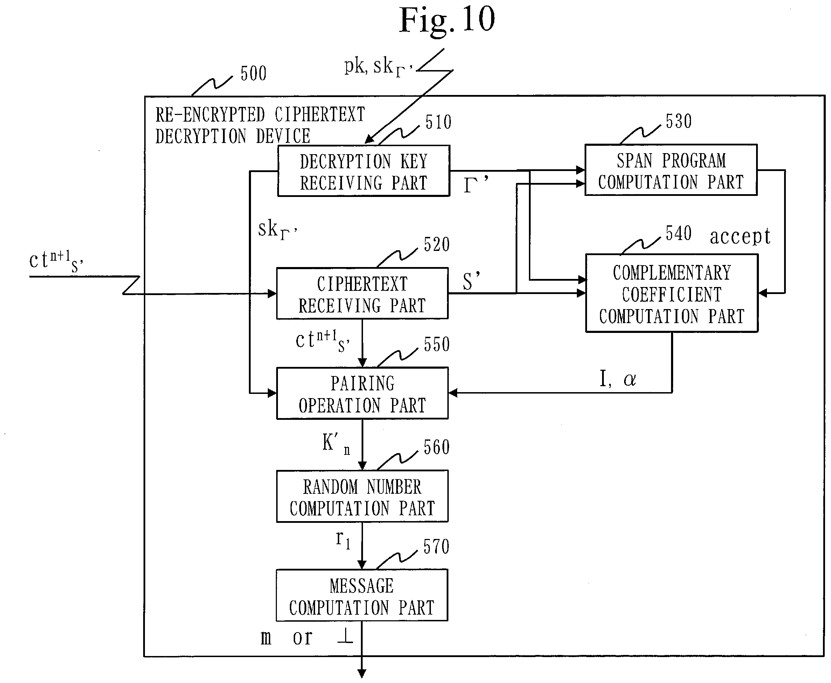

Fig. 6 is a functional block diagram illustrating the function of the key generation device 100. Fig. 7 is a functional block diagram illustrating the function of the encryption device 200. Fig. 8 is a functional block diagram illustrating the function of the decryption device 300. Fig. 9 is a functional block diagram illustrating the function of the re-encryption device 400. Fig. 10 is a functional block diagram illustrating the function of the re-encrypted ciphertext decryption device 500.

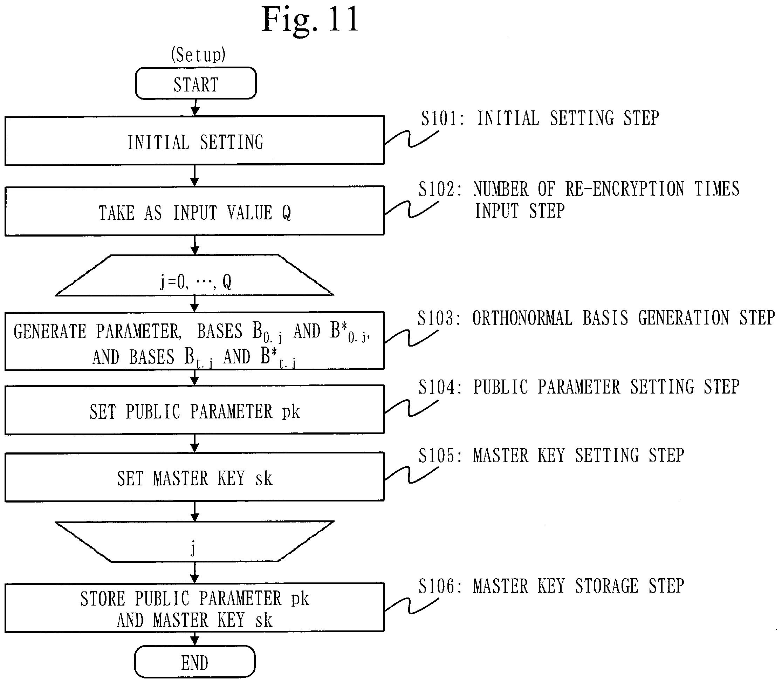

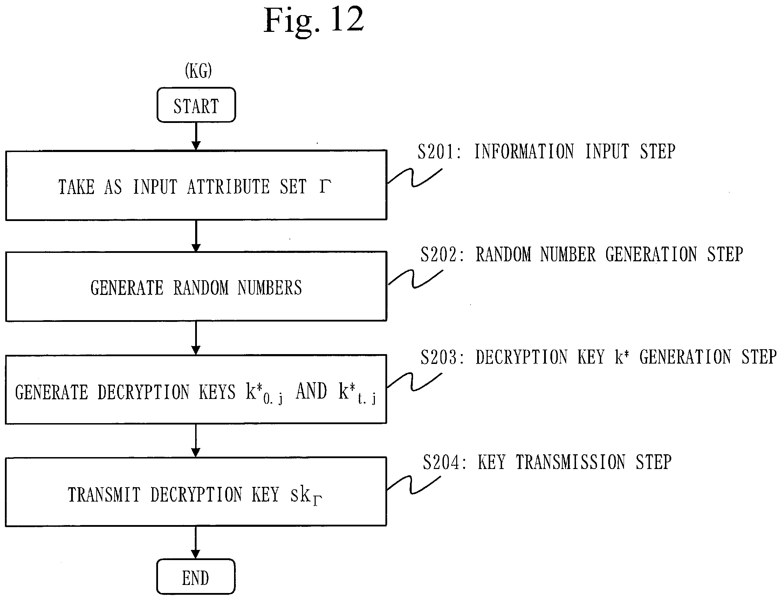

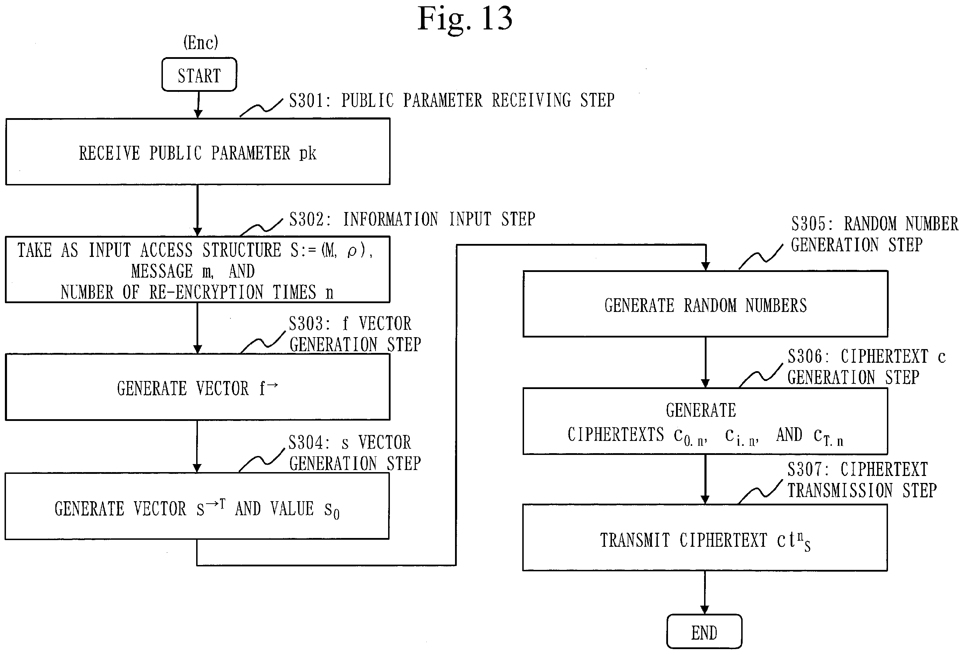

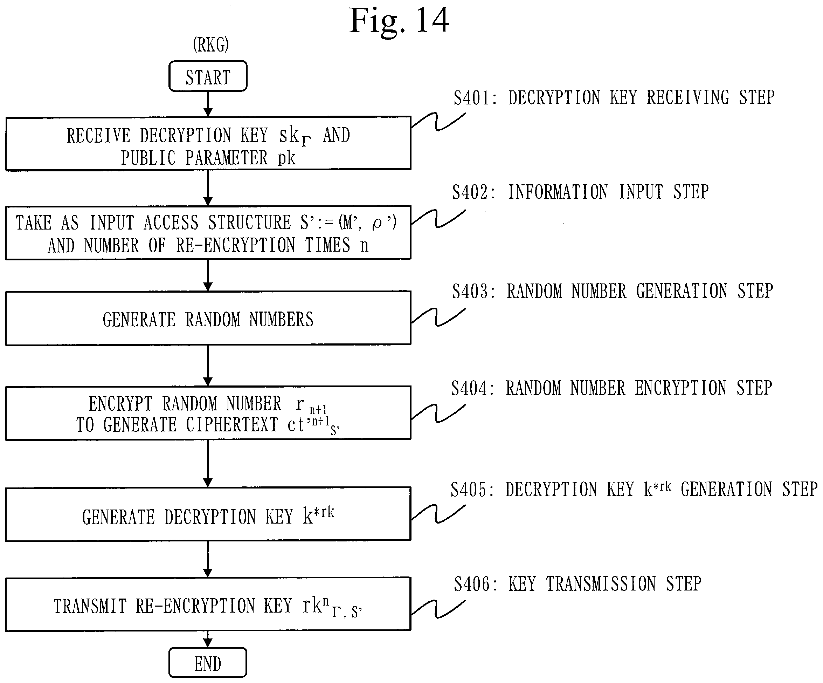

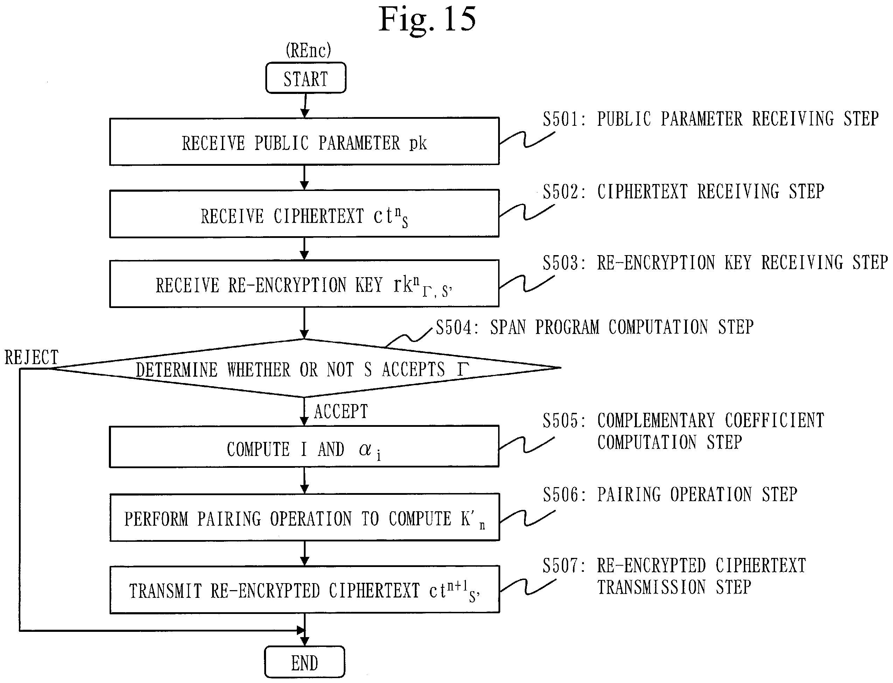

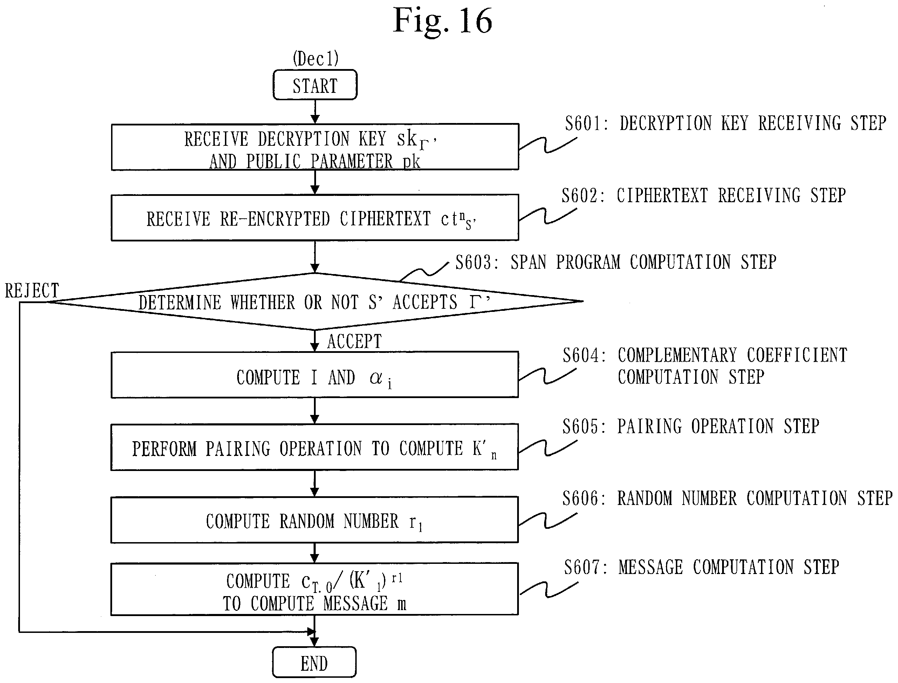

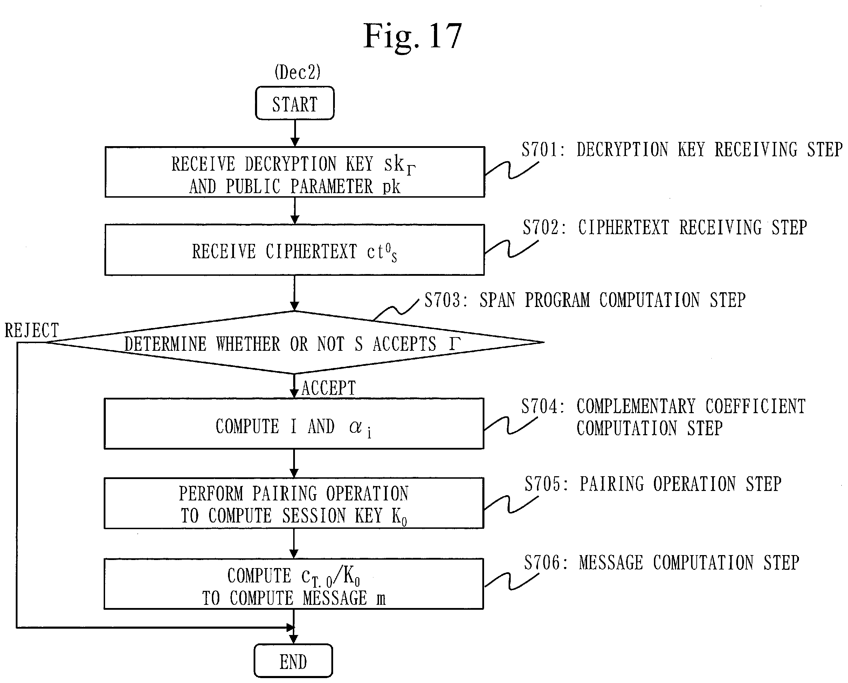

Figs. 11 and 12 are flowcharts illustrating the operation of the key generation device 100. Fig. 11 is a flowchart illustrating the process of the Setup algorithm, and Fig. 12 is a flowchart illustrating the process of the KG algorithm. Fig. 13 is a flowchart illustrating the operation of the encryption device 200 and illustrating the process of the Enc algorithm. Fig. 14 is a flowchart illustrating the operation of the decryption device 300 and illustrating the process of the RKG algorithm. Fig. 15 is a flowchart illustrating the operation of the re-encryption device 400 and illustrating the process of the REnc algorithm. Fig. 16 is a flowchart illustrating the operation of the re-encrypted ciphertext decryption device 500 and illustrating the process of the Dec1 algorithm. Fig. 17 is a flowchart illustrating the operation of the decryption device 300 and illustrating the process of the Dec2 algorithm.

The function and operation of the key generation device 100 will be described.

As illustrated in Fig. 6, the key generation device 100 includes a master key generation part 110, a master key storage part 120, an information input part 130, a decryption key generation part 140, and a key transmission part 150 (key output part). The decryption key generation part 140 includes a random number generation part 141 and a decryption key k* generation part 142.

With reference to Fig. 11, the process of the Setup algorithm will be described.

(S101: Initial Setting Step)

The master key generation part 110 executes initial setting.

Specifically, the master key generation part 110 executes the following process (1) through (3).

(1) Using an input device, the master key generation part 110 takes as input a security parameter $\lambda(1^\lambda)$ and an attribute format $\overrightarrow{n} := (d; n_1, ..., n_d; w_1, ..., w_d; z_1, ..., z_d)$. Note that d is an integer of 1 or more, and that $n_t$ is an integer of 1 or more, and $w_t$ and $z_t$ are each an integer of 0 or more, for each integer $t = 1, ..., d$.
(2) Using a processing device, the master key generation part 110 executes the algorithm $G_{bpg}$ taking as input the security parameter $\lambda$ input in (1), and thus generates values of a parameter $param_G := (q, G, G_T, g, e)$ of bilinear pairing groups.
(3) The master key generation part 110 sets 5 in $N_0$, and sets $n_t + w_t + z_t + 1$ in $N_t$ for each integer $t = 1, ..., d$.

(S102: Number of Re-encryption Times Input Step)

Using the input device, the master key generation part 110 takes as input a value Q indicating an upper limit of the number of re-encryption times. The value Q is an integer of 1 or more.
The master key generation part 110 executes the process of S103 through S105 below repeatedly for $j = 0, ..., Q$.

(S103: Orthonormal Basis Generation Step)

Using the processing device, the master key generation part 110 computes Formula 122 for each integer $t = 0, ..., d$, and thus generates a parameter $param_{\overrightarrow{n}}$, a basis $B_{0.j}$ and a basis $B^*_{0.j}$, and a basis $B_{t.j}$ and a basis $B^*_{t.j}$.

[Formula 122]

$$(1)\ \psi_j \xleftarrow{\ \mathsf{U}\ } \mathbb{F}_q^\times,\ g_{T.j} := e(g,g)^{\psi_j}$$

The process (2) through (4) is executed for each integer $t = 0, ..., d$.

$$(2)\ \mathsf{param}_{\mathbb{V}_t} := (q, \mathbb{V}_t, \mathbb{G}_T, \mathbb{A}_t, e) \xleftarrow{\ \mathsf{R}\ } \mathcal{G}_{\mathsf{dpvs}}(1^\lambda, N_t, \mathsf{param}_{\mathbb{G}})$$

$$(3)\ X_t = \begin{pmatrix} \vec{\chi}_{t,1} \\ \vdots \\ \vec{\chi}_{t,N_t} \end{pmatrix} := (\chi_{t,i,j'})_{i,j'} \xleftarrow{\ \mathsf{U}\ } GL(N_t, \mathbb{F}_q)$$

$$(4)\ \begin{pmatrix} \vec{v}_{t,1} \\ \vdots \\ \vec{v}_{t,N_t} \end{pmatrix} := (v_{t,i,j'})_{i,j'} := \psi \cdot (X_t^T)^{-1}$$

$$(5)\ b_{t.j,i} := \sum_{j=1}^{N_t} \chi_{t,i,j'} a_{t,j'}, \mathbb{B}_{t.j} := (b_{t.j,1}, ..., b_{t.j,N_t}),$$

$$b^*_{t.j,i} := \sum_{j=1}^{N_t} v_{t,i,j} a_{t,j}, \mathbb{B}^*_{t.j} := (b^*_{t.j,1},...,b^*_{t.j,N_t})$$

$$(6) \quad \mathrm{param}_{\vec{n}.j} := (g_{T.j}, \{\mathrm{param}_{\mathbb{V}_t}\}_{t=0,...,d})$$

That is, the master key generation part 110 executes the following process.

(1) The master key generation part 110 generates a random number $\psi_j$. The master key generation part 110 also sets $e(G,G)^{\psi j}$ in $g_{T.j}$.

The process (2) through (5) is executed for each integer $t = 0, ..., d$.

(2) The master key generation part 110 executes the algorithm $G_{dpvs}$ taking as input the security parameter $\lambda$, $N_t$, and the values of $\mathrm{param}_G := (q, G, G_T, g, e)$, and thus generates values of a parameter $\mathrm{param}_{Vt} := (q, V_t, G_T, A_t, e)$ of dual pairing vector spaces.

(3) The master key generation part 110 takes as input $N_t$ and $F_q$, and randomly generates a linear transformation $X_t := (\chi_{t,i,j'})_{i,j'}$. Note that GL stands for general linear. In other words, GL is a general linear group, a set of square matrices with nonzero determinants, and a group under multiplication. Note that $(\chi_{t,i,j'})_{i,j'}$ denotes a matrix concerning the suffixes i and j' of the matrix $\chi_{t,i,j'}$. Note that i,j' = 1, ..., $N_t$ in $(\chi_{t,i,j'})_{i,j'}$.

(4) Based on the random number $\psi$ and the linear transformation $X_t$, the master key generation part 110 generates $(v_{t,i,j})_{i,j'} := \psi \cdot (X_t^T)^{-1}$. Like $(\chi_{t,i,j'})_{i,j'}$, $(v_{t,i,j})_{i,j'}$ denotes a matrix concerning the suffixes i and j' of the matrix $v_{t,i,j'}$. Note that i, j' = 1, ..., $N_t$ in $(v_{t,i,j})_{i,j'}$.

(5) Based on the linear transformation $X_t$ generated in (3), the master key generation part 110 generates a basis $B_{t,j}$ from the canonical basis $A_t$ generated in (2). Based on $(v_{t,i,j})_{i,j'}$ generated in (4), the master key generation part 110 generates a basis $B^*_{t,j}$ from the canonical basis $A_t$ generated in (2).

(6) The master key generation part 110 sets $g_{T.j}$ generated in (1) and $\{\mathrm{param}_{Vt}\}_t = 0,...,d$ generated in (2) in $\mathrm{param}_{n \to .j}$.

(S104: Public Parameter Generation Step)

Using the processing device, the master key generation part 110 generates a subbasis $B^\wedge_{0.j}$ of the basis $B_{0.j}$, a subbasis $B^\wedge_{t.j}$ of the basis $B_{t.j}$, a subbasis $B^{\wedge *}_{0.j}$ of the basis $B^*_{0.j}$, and a subbasis $B^{\wedge *}_{t.j}$ of the basis $B^*_{t.j}$, as indicated in Formula 123.

[Formula 123]

$$\hat{\mathbb{B}}_{0.j} := (b_{0.j,1}, b_{0.j,2}, b_{0.j,5}),$$

$$\hat{\mathbb{B}}_{t.j} := (b_{t.j,1},...,b_{t.j,n_t}, b_{t.j,N_t}) \text{ for } t = 1,...,d,$$

$$\hat{\mathbb{B}}^*_{0.j} := (b^*_{0.j,2}, b^*_{0.j,4}),$$

$$\hat{\mathbb{B}}^*_{t.j} := (b^*_{t.j,1},...,b^*_{t.j,n_t}, b^*_{t.j,n_t+w_t+1},...,b^*_{t.j,n_t+w_t+z_t}) \text{ for } t = 1,...,d,$$

The master key generation part 110 generates a public parameter pk which is constituted by the security parameter $\lambda$, $\mathrm{param}_{n \to .j}$, and the subbases $B^\wedge_{0.j}$, $B^\wedge_{t.j}$, $B^{\wedge *}_{0.j}$, and $B^{\wedge *}_{t.j}$.

(S105: Master Key Generation Step)

The master key generation part 110 generates a master key sk which is constituted by a basis vector $b^*_{0.j.1}$.

(S106: Master Key Storage Step)

The master key storage part 120 stores the public parameter pk generated in (S104) in a storage device. The master key storage part 120 also stores the master key sk generated in (S105) in the storage device.

In brief, in (S101) through (S105), the key generation device 100 generates the public parameter pk and the master key sk by executing the Setup algorithm indicated in Formula 124. In (S106), the key generation device 100 stores the generated public parameter pk and master key sk in the storage device.

The public parameter is published, for example, via a network, and is made available for the encryption device 200, the decryption device 300, the re-encryption device 400, and the re-encrypted ciphertext decryption device 500.

[Formula 124]

$$\mathsf{Setup}(1^\lambda, \vec{n} = (d; n_1, ..., n_d; w_1, ..., w_d; z_1, ..., z_d)):$$

$$\mathsf{param}_{\mathbb{G}} := (q, \mathbb{G}, \mathbb{G}_T, g, e) \xleftarrow{\;\mathsf{R}\;} \mathcal{G}_{\mathsf{bpg}}(1^\lambda),$$

$$N_0 := 5, \quad N_t := n_t + w_t + z_t + 1 \text{ for } t = 1, ..., d,$$

$$\text{for } j = 0, ..., Q,$$

$$\psi_j \xleftarrow{\;\mathsf{U}\;} \mathbb{F}_q^\times, \quad g_{T.j} := e(g, g)^{\psi_j},$$

$$\text{for } t = 0, ..., d$$

$$\mathsf{param}_{\mathbb{V}_t} := (q, \mathbb{V}_t, \mathbb{G}_T, \mathbb{A}_t, e) \xleftarrow{\;\mathsf{R}\;} \mathcal{G}_{\mathsf{dpvs}}(1^\lambda, N_t, \mathsf{param}_{\mathbb{G}}),$$

$$X_t = \begin{pmatrix} \vec{\chi}_{t,1} \\ \vdots \\ \vec{\chi}_{t,N_t} \end{pmatrix} := (\chi_{t,i,j'})_{i,j'} \xleftarrow{\;\mathsf{U}\;} GL(N_t, \mathbb{F}_q),$$

$$\begin{pmatrix} \vec{v}_{t,1} \\ \vdots \\ \vec{v}_{t,N_t} \end{pmatrix} := (v_{t,i,j'})_{i,j'} := \psi \cdot (X_t^T)^{-1},$$

$$b_{t.j,i} := \sum\nolimits_{j=1}^{N_t} \chi_{t,i,j'} a_{t,j'}, \mathbb{B}_{t.j} := (b_{t.j,1}, ..., b_{t.j,N_t}),,$$

$$b^*_{t.j,i} := \sum\nolimits_{j=1}^{N_t} v_{t,i,j'} a_{t,j'}, \mathbb{B}^*_{t.j} := (b^*_{t.j,1}, ..., b^*_{t.j,N_t}),$$

$$\mathsf{param}_{\vec{n}.j} := (g_{T.j}, \{\mathsf{param}_{\mathbb{V}_t}\}_{t=0,...,d}),$$

$$\hat{\mathbb{B}}_{0.j} := (b_{0.j,1}, b_{0.j,2}, b_{0.j,5}),$$

$$\hat{\mathbb{B}}_{t.j} := (b_{t.j,1}, ..., b_{t.j,n_t}, b_{t.j,N_t}) \text{ for } t = 1, ..., d,$$

$$\hat{\mathbb{B}}^*_{0.j} := (b^*_{0.j,2}, b^*_{0.j,4}),$$

$$\hat{\mathbb{B}}^*_{t.j} := (b^*_{t.j,1}, ..., b^*_{t.j,n_t}, b^*_{t.j,n_t+w_t+1}, ..., b^*_{t.j,n_t+w_t+z_t}) \text{ for } t = 1, ..., d,$$

$$\mathsf{return}\ \mathsf{pk} = (1^\lambda, \{\mathsf{param}_{\vec{n}.j}\}_{j=0,...,Q}, \{\hat{\mathbb{B}}_{t.j}, \hat{\mathbb{B}}^*_{t.j}\}_{t=0,...,d; j=0,...,Q}),$$

$$\mathsf{sk} = (\{b^*_{0.j,1}\}_{j=0,...,Q}).$$

With reference to Fig. 12, the process of the KG algorithm will now be described.

(S201: Information Input Step)

Using the input device, the information input part 130 takes as input an attribute set $\Gamma := \{(t, \vec{x}_t := (x_{t,1}, ..., x_{t,nt} \in \mathbb{F}_q^{nt} \setminus \{\vec{0}\}))|1 \le t \le d\}$. Note that t may be at least some of integers from 1 to d, instead of being all of integers 1 to d. Attribute information of a user of a decryption key $sk_\Gamma$ is set in the attribute set $\Gamma$, for example.

(S202: Random Number Generation Step)

Using the processing device, the random number generation part 141 generates random numbers, as indicated in Formula 125.

[Formula 125]

$$\delta_j, \varphi_{0.j} \xleftarrow{\;\;U\;\;} \mathbb{F}_q \text{ for } j = 0, ..., Q,$$

$$\vec{\varphi}_{t.j} \xleftarrow{\;\;U\;\;} \mathbb{F}_q^{z_t} \text{ for } j = 0, ..., Q; (t, \vec{x}_t) \in \Gamma$$

(S203: Decryption Key $k^*$ Generation Step)

Using the processing device, the decryption key k* generation part 142 generates a decryption key $k^*_{0,j}$ for each integer j = 0, ..., Q, as indicated in Formula 126.

[Formula 126]

$$k^*_{0,j} := (1, \delta_j, 0, \varphi_{0.j}, 0)_{\mathbb{B}^*_{0.j}} \text{ for } j = 0, ..., Q$$

For the basis B and the basis B* indicated in Formula 110, Formula 111 is established. Thus, Formula 126 means that 1 is set as the coefficient of the basis vector $b^*_{0.j.1}$ of the basis $B^*_0$, $\delta_j$ is set as the coefficient of the basis vector $b^*_{0.j.2}$, 0 is set as the coefficient of the basis vector $b^*_{0.j.3}$, $\varphi_{0.j}$ is set as the coefficient of the basis vector $b^*_{0.j.4}$, and 0 is set as the coefficient of the basis vector $b^*_{0.j.5}$.

Using the processing device, the decryption key k* generation part 142 also generates a decryption key $k^*_{t.j}$ for each integer t included in the attribute set $\Gamma$ and each integer j = 0, ..., Q, as indicated in Formula 127.

[Formula 127]

$$k^*_{t.j} := (\overbrace{\delta_j \vec{x}_t,}^{n_t} \overbrace{0^{w_t},}^{w_t} \overbrace{\vec{\varphi}_{t.j},}^{z_t} \overbrace{0}^{1})_{\mathbb{B}^*_{t.j}} \text{ for } (t, \vec{x}_t), \in \Gamma; j = 0, ..., Q$$

Formula 127 means that $\delta_j x_{t.1}, ..., \delta_j x_{t.nt}$ are respectively set as the coefficient of the basis vectors $\delta^*_{t.j.1}, ..., b^*_{t.j.nt}$ of the basis $B^*_t$, 0 is set as the coefficient of each of the basis vectors $b^*_{t.j.nt+1}, ..., b^*_{t.j.nt+wt}$, $\varphi_{t.j.1}, ..., \varphi_{t.j.zt}$ are respectively set as the coefficient of the basis vectors $b^*_{t.j.nt+wt+1}, ..., b^*_{t.j.nt+wt+zt}$, and 0 is set as the coefficient of the basis vector $b^*_{t.j.nt+wt+zt+1}$.

(S204: Key Transmission Step)

Using a communication device and via the network, for example, the key transmission part 150 transmits the decryption key $sk_\Gamma$, having as elements, the attribute set $\Gamma$ and the decryption keys $k^*_{0.j}$ and $k^*_{t.j}$ to the decryption device 300 in secrecy. As a matter of course, the decryption key $sk_\Gamma$ may be transmitted to the decryption device 300 by another method.

In brief, in (S201) through (S203), the key generation device 100 generates the decryption key $sk_\Gamma$ by executing the KG algorithm indicated in Formula 128. In (S204), the key generation device 100 transmits the decryption key $sk_\Gamma$ to the decryption device 300.

[Formula 128]

$$KG = (pk, sk, \Gamma = (\{t, \vec{x}_t\} \mid \vec{x}_t \in \mathbb{F}_q^{n_t} \setminus \{\vec{0}\}, 1 \leq t \leq d)):$$

$$\text{for } j = 0, ..., Q$$

$$\delta_j, \varphi_{0.j} \xleftarrow{\;\;U\;\;} \mathbb{F}_q, \vec{\varphi}_{t.j} \xleftarrow{\;\;U\;\;} \mathbb{F}_q^{z_t} \text{ for } (t, \vec{x}_t) \in \Gamma,$$

$$k_{0.j}^* := (1, \delta_j, 0, \varphi_{0.j}, 0)_{\mathbb{B}_{0.j}^*},$$

$$k_{t.j}^* := (\overbrace{\delta_j \vec{x}_t}^{n_t}, \overbrace{0^{w_t}}^{w_t}, \overbrace{\vec{\varphi}_{t.j}}^{z_t}, \overbrace{0}^{1})_{\mathbb{B}_{t.j}^*} \text{ for } (t, \vec{x}_t), \in \Gamma,$$

$$\text{return } sk_\Gamma := (\Gamma, \{k_{0.j}^*, \{k_{t.j}^*\}_{(t,\vec{x}_t) \in \Gamma}\}_{j=0,...,Q}).$$

In (S201), the key generation device 100 generates a decryption key $sk_{\Gamma'}$ by executing the KG algorithm taking as input an attribute set $\Gamma' := \{(t, x'^\rightarrow_t := (x'_{t,1}, ..., x'_{t,nt} \in \mathbb{F}_q^{nt} \setminus \{0^\rightarrow\}))\mid 1 \leq t \leq d\}$ in which attribute information of a user of the decryption key $sk_{\Gamma'}$ is set. Then, the key generation device 100 transmits the decryption key $sk_{\Gamma'} := (\Gamma', \{k^{'*}_{0.j}, \{k^{'*}_{t.j}\}_{(t,x\rightarrow t)\in\Gamma'}\}_{j=0,...,Q})$ to the re-encrypted ciphertext decryption device 500.

The function and operation of the encryption device 200 will be described.

As illustrated in Fig. 7, the encryption device 200 includes a public parameter receiving part 210, an information input part 220, an encryption part 230, and a ciphertext transmission part 240 (ciphertext output part). The encryption part 230 includes an f vector generation part 231, an s vector generation part 232, a random number generation part 233, and a ciphertext c generation part 234.

With reference to Fig. 13, the process of the Enc algorithm will be described.

(S301: Public Parameter Receiving Step)

Using the communication device and via the network, for example, the public parameter receiving part 210 receives the public parameter pk generated by the key generation device 100.

(S302: Information Input Step)

Using the input device, the information input part 220 takes as input an access structure $\mathbb{S} := (M, \rho)$. The access structure $\mathbb{S}$ is to be set according to the conditions of a system to be implemented. Attribute information of a user capable of decrypting a ciphertext $ct^0_{\mathbb{S}}$ is set in $\rho$ of the access structure $\mathbb{S}$, for example. Note that $\rho(i) = (t, v^\rightarrow_i := (v_{i,1}, ..., v_{i,nt}) \in \mathbb{F}_q^{nt}\setminus\{0^\rightarrow\})$ $(v_{i,nt} \neq 0)$. Note that M is an L-row and r-column matrix.

Using the input device, the information input part 220 also takes as input a message m to be transmitted to the decryption device 300.

Using the input device, the information input part 220 also takes as input the number of re-encryption times n. The number of re-encryption times n to be input here is normally 0, and takes a value specified in the RKG algorithm when the Enc algorithm is invoked in the RKG algorithm to be described later.

(S303: f Vector Generation Step)

Using the processing device, the f vector generation part 231 generates a vector $f^{\rightarrow}$, as indicated in Formula 129.

[Formula 129]

$$\vec{f} \xleftarrow{\quad U \quad} \mathbb{F}_q^r$$

(S304: s Vector Generation Step)

Using the processing device, the s vector generation part 232 generates a vector $s^{\rightarrow T}$, as indicated in Formula 130.

[Formula 130]

$$\vec{s}^T := (s_1,...,s_L)^T := M \cdot \vec{f}^T$$

Using the processing device, the s vector generation part 232 also generates a value $s_0$, as indicated in Formula 131.

[Formula 131]

$$s_0 := \vec{1} \cdot \vec{f}^T$$

(S305: Random Number Generation Step)

Using the processing device, the random number generation part 233 generates random numbers, as indicated in Formula 132.

[Formula 132]

$$\eta_{0.n}, \varsigma \xleftarrow{\quad U \quad} \mathbb{F}_q,$$

$$\theta_{i.n}, \eta_{i.n} \xleftarrow{\quad U \quad} \mathbb{F}_q \quad \text{for } i = 1,...,L$$

(S306: Ciphertext c Generation Step)

Using the processing device, the ciphertext c generation part 234 generates a ciphertext $c_{0.n}$, as indicated in Formula 133.

[Formula 133]

$$c_{0.n} := (\varsigma, -s_0, 0, 0, \eta_{0.n})_{\mathbb{B}_{0.n}}$$

Using the processing device, the ciphertext c generation part 234 also generates a ciphertext $c_{i.n}$ for each integer i = 1, ..., L, as indicated in Formula 134.

[Formula 134]

$$\text{for } i = 1, ..., L,$$

$$\text{if } \rho(i) = (t, \vec{v}_i),$$

$$c_{i.n} := (\overbrace{s_i \vec{e}_{t,1} + \theta_{i.n} \vec{v}_t}^{n_t}, \overbrace{0^{w_t}}^{w_t}, \overbrace{0^{z_t}}^{z_t}, \overbrace{\eta_{i.n}}^{1})_{\mathbb{B}_{t.n}},$$

$$\text{if } \rho(i) = \neg(t, \vec{v}_i),$$

$$c_{i.n} := (\overbrace{s_i \vec{v}_t}^{n_t}, \overbrace{0^{w_t}}^{w_t}, \overbrace{0^{z_t}}^{z_t}, \overbrace{\eta_{i.n}}^{1})_{\mathbb{B}_{t.n}}$$

Using the processing device, the ciphertext c generation part 234 also generates a ciphertext $c_{T.n}$, as indicated in Formula 135.

[Formula 135]

$$c_{T.n} := m \cdot g_{T.n}^{\zeta}$$

(S307: Ciphertext Transmission Step)

Using the communication device and via the network, for example, the ciphertext transmission part 240 transmits a ciphertext $ct^n_S$, having as elements, the access structure S, the ciphertexts $c_{0.n}$, $c_{1.n}$, ..., $c_{L.n}$, and $c_{T.n}$, and the number of re-encryption times n to the decryption device 300. As a matter of course, the ciphertext $ct^n_S$ may be transmitted to the decryption device 300 by another method.

In brief, in (S301) through (S306), the encryption device 200 generates the ciphertext $ct^n_S$ by executing the Enc algorithm indicated in Formula 136. In (S307), the encryption device 200 transmits the generated ciphertext $ct^n_S$ to the decryption device 300.

[Formula 136]

$$\mathsf{Enc} = (\mathsf{pk}, m, \mathbb{S} = (M, \rho), n):$$

$$\vec{f} \xleftarrow{\mathsf{U}} \mathbb{F}_q^r,$$

$$\vec{s}^T := (s_1, \dots, s_L)^T := M \cdot \vec{f}^T, s_0 := \vec{1} \cdot \vec{f}^T,$$

$$\eta_{0.n}, \zeta \xleftarrow{\mathsf{U}} \mathbb{F}_q,$$

$$c_{0.n} := (\zeta, -s_0, 0, 0, \eta_{0.n})_{\mathbb{B}_{0.n}}, \quad c_{T.n} := m \cdot g_{T.n}^{\zeta},$$

$$\text{for } i = 1, \dots, L,$$

$$\text{if } \rho(i) = (t, \vec{v}_i), \quad \theta_{i.n}, \eta_{i.n} \xleftarrow{\mathsf{U}} \mathbb{F}_q,$$

$$c_{i.n} := ( \overbrace{s_i \vec{e}_{t,1} + \theta_{i.n} \vec{v}_t}^{n_t}, \overbrace{0^{w_t}}^{w_t}, \overbrace{0^{z_t}}^{z_t}, \overbrace{\eta_{i.n}}^{1} )_{\mathbb{B}_{t.n}},$$

$$\text{if } \rho(i) = \neg(t, \vec{v}_i), \quad \theta_{i.n}, \eta_{i.n} \xleftarrow{\mathsf{U}} \mathbb{F}_q,$$

$$c_{i.n} := ( \overbrace{s_i \vec{v}_t}^{n_t}, \overbrace{0^{w_t}}^{w_t}, \overbrace{0^{z_t}}^{z_t}, \overbrace{\eta_{i.n}}^{1} )_{\mathbb{B}_{t.n}},$$

$$\text{return } \mathsf{ct}_{\mathbb{S}}^n := (\mathbb{S}, \{c_{i.n}\}_{i=0, \dots, L}, c_{T.n}, n).$$

The function and operation of the decryption device 300 will be described.

As illustrated in Fig. 8, the decryption device 300 includes a decryption key receiving part 310 (decryption key acquisition part), an information input part 320, a re-encryption key generation part 330, a re-encryption key transmission part 340 (re-encryption key output part), a ciphertext receiving part 350, a span program computation part 360, a complementary coefficient computation part 370, a pairing operation part 380, and a message computation part 390. The re-encryption key generation part 330 includes a random number generation part 331, an encryption part 332, and a decryption key k*rk generation part 333.

With reference to Fig. 14, the process of the RKG algorithm will now be described. The Dec2 algorithm will be described later.

(S401: Decryption Key Receiving Step)

Using the communication device and via the network, for example, the decryption key receiving part 310 receives the decryption key $\mathsf{sk}_\Gamma$ transmitted by the key generation device 100. The decryption key receiving part 310 also receives the public parameter pk generated by the key generation device 100.

(S402: Information Input Step)

Using the input device, the information input part 320 takes as input an access structure S':= (M', p'). The access structure S' is to be set according to the conditions of the system to be implemented. Attribute information of a user capable of decrypting a re-encrypted ciphertext $\mathsf{ct}^{n+1}{}_{\mathsf{S}'}$ is set in p' of the access structure S', for example. Note that $\rho'(i) = (t, \vec{v'}_i := (v'_{i,1}, \dots, v'_{i,nt}) \in \mathbb{F}_q^{nt} \backslash \{\vec{0}\}) (v'_{i,nt} \neq 0)$.

Using the input device, the information input part 320 also takes as input the number of re-encryption times n. The number of re-encryption times n to be input here indicates the number of times a ciphertext for which a re-encryption key for re-encryption is to be generated has been re-encrypted. Specifically, when a re-encryption key for re-encrypting a ciphertext $ct^0_S$ which has never been re-encrypted is to be generated, 0 is input as the number of re-encryption times n. When a re-encryption key for re-encrypting a ciphertext $ct^1_S$ which has been re-encrypted once is to be generated, 1 is input as the number of re-encryption times n.

(S403: Random Number Generation Step)

Using the processing device, the random number generation part 331 generates random numbers, as indicated in Formula 137.

[Formula 137]

$$r_{n+1}, \delta_n^{\text{ran}}, \varphi_{0.n}^{\text{ran}} \xleftarrow{\ \ \text{U}\ \ } \mathbb{F}_q,$$

$$\vec{\varphi}_{t.n}^{\text{ran}} \xleftarrow{\ \ \text{U}\ \ } \mathbb{F}_q^{z_t} \text{ for } (t, \vec{x}_t) \in \Gamma$$

(S404: Random Number Encryption Step)

Using the processing device, the encryption part 332 encrypts the random number $r_{n+1}$ (conversion information) as indicated in Formula 138, and thus generates a ciphertext $ct'^{n+1}_{S'}$. Note that a function $E_{n+1}$ is an encode function from $F_q$ to $G_{T.n+1}$.

[Formula 138]

$$ct'^{n+1}_{\mathbb{S}'} := (\mathbb{S}', \{c_{i.n+1}\}_{i=0,\ldots,L}, c_{T.n+1})$$

$$\xleftarrow{\ \ \text{R}\ \ } \text{Enc}(\text{pk}, E_{n+1}(r_{n+1}), \mathbb{S}' = (M', \rho'))$$

(S405: Decryption Key $k^{*rk}$ Generation Step)

Using the processing device, the decryption key $k^{*rk}$ generation part 333 generates a decryption key $k^{*rk}_{0.n}$, as indicated in Formula 139.

[Formula 139]

$$k_{0.n}^{*\text{rk}} := (r_{n+1} k_{0.n}^* + (0, \delta_n^{\text{ran}}, 0, \varphi_{0.n}^{\text{ran}}, 0)_{\mathbb{B}_{0.n}^*})$$

Using the processing device, the decryption key $k^{*rk}$ generation part 333 also generates a decryption key $k^{*rk}_{t.n}$ for each integer t included in the attribute set $\Gamma$, as indicated in Formula 140.

[Formula 140]

$$k_{t.n}^{*\text{rk}} := (r_{n+1} k_{t.n}^* + (\delta_n^{\text{ran}} \vec{x}_t, 0^{w_t}, \vec{\varphi}_{t.n}^{\text{ran}}, 0)_{\mathbb{B}_{t.n}^*})) \text{ for } (t, \vec{x}_t) \in \Gamma$$

(S406: Key Transmission Step)

Using the communication device and via the network, for example, the re-encryption key transmission part 340 transmits a re-encryption key $\mathrm{rk}^n{}_{\Gamma,S'}$, having as elements, the attribute set $\Gamma$, the access structure S', the decryption keys $k^{*\mathrm{rk}}{}_{0.n}$ and $k^{*\mathrm{rk}}{}_{t.n}$, the ciphertext $\mathrm{ct}'^{n+1}{}_{S'}$, and the number of re-encryption times n (the value input in (S402) here) to the re-encryption device 400 in secrecy. As a matter of course, the re-encryption key $\mathrm{rk}^n{}_{\Gamma,S'}$ may be transmitted to the re-encryption device 400 by another method.

In brief, in (S401) through (S405), the decryption device 300 generates the re-encryption key $\mathrm{rk}^n{}_{\Gamma,S'}$ by executing the RKG algorithm indicated in Formula 141. In (S406), the decryption device 300 transmits the generated re-encryption key $\mathrm{rk}^n{}_{\Gamma,S'}$ to the re-encryption device 400.

[Formula 141]

$$\mathsf{RKG} = (\mathsf{pk}, \mathsf{sk}_\Gamma, n, \mathbb{S}') :$$

$$r_{n+1}, \delta_n^{\mathsf{ran}}, \varphi_{0.n}^{\mathsf{ran}} \xleftarrow{\ \mathsf{U}\ } \mathbb{F}_q,$$

$$\vec{\varphi}_{t.n}^{\mathsf{ran}} \xleftarrow{\ \mathsf{U}\ } \mathbb{F}_q^{z_t} \ \text{ for } (t, \vec{x}_t) \in \Gamma,$$

$$\mathsf{ct}_{\mathbb{S}'}^{'n+1} := (\mathbb{S}', \{c_{i.n+1}\}_{i=0,\dots,L}, c_{T.n+1})$$

$$\xleftarrow{\ \mathsf{R}\ } \mathsf{Enc}(\mathsf{pk}, E_{n+1}(r_{n+1}), \mathbb{S}' = (M', \rho')),$$

$$k_{0.n}^{*\mathsf{rk}} := (r_{n+1} k_{0.n}^* + (0, \delta_n^{\mathsf{ran}}, 0, \varphi_{0.n}^{\mathsf{ran}}, 0)_{\mathbb{B}_{0.n}^*}),$$

$$k_{t.n}^{*\mathsf{rk}} := (r_{n+1} k_{t.n}^* + (\delta_n^{\mathsf{ran}} \vec{x}_t, 0^{w_t}, \vec{\varphi}_{t.n}^{\mathsf{ran}}, 0)_{\mathbb{B}_{t.n}^*})) \ \text{ for } (t, \vec{x}_t) \in \Gamma,$$

$$\text{return } \mathsf{rk}_{\Gamma,\mathbb{S}'}^{n} := (\Gamma, \mathbb{S}', k_{0.n}^{*\mathsf{rk}}, \{k_{t.n}^{*\mathsf{rk}}\}_{(t,\vec{x}_t)\in\Gamma}, \mathsf{ct}_{\mathbb{S}'}^{'n+1}, n).$$

The function and operation of the re-encryption device 400 will be described.

As illustrated in Fig. 9, the re-encryption device 400 includes a public parameter receiving part 410, a ciphertext receiving part 420 (ciphertext acquisition part), a re-encryption key receiving part 430 (re-encryption key acquisition part), a span program computation part 440, a complementary coefficient computation part 450, a pairing operation part 460, and a re-encrypted ciphertext transmission part 470 (re-encrypted ciphertext output part).

With reference to Fig. 15, the process of the REnc algorithm will be described.

(S501: Public Parameter Receiving Step)

Using the communication device and via the network, for example, the public parameter receiving part 410 receives the public parameter pk generated by the key generation device 100.

(S502: Ciphertext Receiving Step)

Using the communication device and via the network, for example, the ciphertext receiving part 420 receives the ciphertext $\mathrm{ct}^n{}_S$ transmitted by the encryption device 200.

(S503: Re-encryption Key Receiving Step)

Using the communication device and via the network, for example, the re-encryption key receiving part 430 receives the re-encryption key $rk^n_{\Gamma,S'}$ transmitted by the decryption device 300.

(S504: Span Program Computation Step)

Using the processing device, the span program computation part 440 determines whether or not the access structure S included in the ciphertext $ct^n_S$ accepts $\Gamma$ included in the re-encryption key $rk^n_{\Gamma,S'}$. The method for determining whether or not the access structure S accepts $\Gamma$ is as described in "3. Concept for Implementing FPRE" in Embodiment 1.
If the access structure S accepts $\Gamma$ (accept in S504), the span program computation part 440 advances the process to (S505). If the access structure S rejects $\Gamma$ (reject in S504), the span program computation part 440 ends the process.

(S505: Complementary Coefficient Computation Step)

Using the processing device, the complementary coefficient computation part 450 computes I and a constant (complementary coefficient) $\{\alpha_i\}_{i \in I}$ such that Formula 142 is satisfied.

[Formula 142]

$$\vec{1} = \sum_{i \in I} \alpha_i M_i$$

where $M_i$ is the $i$-th row of $M$,

$$\text{and } I \subseteq \{ i \in \{1,...,L\} \mid [\rho(i) = (t,\vec{v}_i) \wedge (t,\vec{x}_t) \in \Gamma \wedge \vec{v}_i \cdot \vec{x}_t = 0]$$
$$\vee [\rho(i) = \neg(t,\vec{v}_i) \wedge (t,\vec{x}_t) \in \Gamma \wedge \vec{v}_i \cdot \vec{x}_t \neq 0]\}$$

(S506: Pairing Operation Step)

Using the processing device, the pairing operation part 460 computes Formula 143, and thus generates a session key $K'_n$.

[Formula 143]

$$K'_n := e(c_{0.n}, k^{*\mathrm{rk}}_{0.n}) \cdot \prod_{i \in I \wedge \rho(i)=(t,\vec{v}_i)} e(c_{i.n}, k^{*\mathrm{rk}}_{t.n})^{\alpha_i}$$
$$\cdot \prod_{i \in I \wedge \rho(i)=\neg(t,\vec{v}_i)} e(c_{i.n}, k^{*\mathrm{rk}}_{t.n})^{\alpha_i/(\vec{v}_i \cdot \vec{x}_t)}$$

(S507: Re-encrypted Ciphertext Transmission Step)

Using the communication device and via the network, for example, the re-encrypted ciphertext transmission part 470 transmits a re-encrypted ciphertext $ct^{n+1}_{S'}$ having, as elements, the session key $K'_n$, the ciphertext $c_{T.n}$, the access structure S', the ciphertext $ct'^{n+1}_{S'}$, and the number of re-encryption times n+1 (a value obtained by adding 1 to the number of re-encryption times n included in the ciphertext $ct^n_S$ received in (S502) or the number of re-encryption times n included in the re-encryption key $rk^n_{\Gamma,S'}$ received in (S503) here) to the re-encrypted ciphertext decryption device 500 in secrecy. As a matter of course, the re-encrypted ciphertext $ct^{n+1}_{S'}$ may be transmitted to the re-encrypted ciphertext decryption device 500 by another method.
The description herein assumes a case where the ciphertext $ct^n_S$ ($ct^0_S$) output by the encryption device 200 is re-encrypted. However, it is also possible to further re-encrypt the re-encrypted ciphertext $ct^{n+1}_{S'}$ output by the re-encryption device 400.

In this case, in (S502), the ciphertext receiving part 420 obtains the re-encrypted ciphertext $ct^{n+1}{}_{S'}$ output by the re-encryption device 400, in place of the ciphertext $ct^{n}{}_{S}$ output by the encryption device 200, as the ciphertext $ct^{n}{}_{S}$. The ciphertext $ct^{n+1}{}_{S'}$ includes the access structure S' as an element. For descriptive purposes, the access structure S' is read as the access structure S. In the ciphertext $ct^{n+1}{}_{S'}$, the number of re-encryption times is n+1. For descriptive purposes, the number of re-encryption times is read as n.

Then, in (S507), the re-encrypted ciphertext transmission part 470 transmits the re-encrypted ciphertext $ct^{n+1}{}_{S'}$ having, as elements, the above-described elements and also the elements included in the ciphertext $ct^{n}{}_{S}$ obtained in (S502) (the session key $\{K'_j\}_{j=1,...,n}$ and the ciphertext $\{c_{T.j}\}_{j=0,...,n-1}$) to the re-encrypted ciphertext decryption device 500

The rest of the process is as described above.

In brief, in (S501) through (S506), the re-encryption device 400 generates the re-encrypted ciphertext $ct^{n+1}{}_{S'}$ by executing the REnc algorithm indicated in Formula 144. In (S507), the re-encryption device 400 transmits the generated re-encrypted ciphertext $ct^{n+1}{}_{S'}$ to the re-encrypted ciphertext decryption device 500.

[Formula 144]

$$\mathsf{REnc} = (\mathsf{pk}, \mathsf{rk}^n_{\Gamma,\mathbb{S}'}, \mathsf{ct}^n_{\mathbb{S}})$$

$$\text{If } \mathbb{S} \text{ accepts } \Gamma, \text{ then compute } I \text{ and } \{\alpha_i\}_{i \in I} \text{ such that}$$

$$\vec{1} = \sum_{i \in I} \alpha_i M_i$$

$$\text{where } M_i \text{ is the } i\text{-th row of } M,$$

$$\text{and } I \subseteq \{ i \in \{1,...,L\} \mid [\rho(i) = (t,\vec{v}_i) \wedge (t,\vec{x}_t) \in \Gamma \wedge \vec{v}_i \cdot \vec{x}_t = 0]$$
$$\vee [\rho(i) = \neg(t,\vec{v}_i) \wedge (t,\vec{x}_t) \in \Gamma \wedge \vec{v}_i \cdot \vec{x}_t \neq 0]\},$$

$$K'_n := e(c_{0.n}, k^{*\mathbf{rk}}_{0.n}) \cdot \prod_{i \in I \wedge \rho(i)=(t,\vec{v}_i)} e(c_{i.n}, k^{*\mathbf{rk}}_{t.n})^{\alpha_i}$$

$$\cdot \prod_{i \in I \wedge \rho(i)=\neg(t,\vec{v}_i)} e(c_{i.n}, k^{*\mathbf{rk}}_{t.n})^{\alpha_i/(\vec{v}_i \cdot \vec{x}_t)},$$

$$\text{return } \mathsf{ct}^{n+1}_{\mathbb{S}'} := (\mathbb{S}', \{c_{T.j}, K'_j\}_{j=0,...,n}, \mathsf{ct}'^{n+1}_{\mathbb{S}'}, n+1).$$

If the number of re-encryption times n included in the ciphertext $ct^{n}{}_{S}$ received in (S502) does not coincide with the number of re-encryption times n included in the re-encryption key $rk^{n}{}_{\Gamma,S'}$ received in (S503), re-encryption is not possible.

The function and operation of the re-encrypted ciphertext decryption device 500 will be described.

As illustrated in Fig. 10, the re-encrypted ciphertext decryption device 500 includes a decryption key receiving part 510, a ciphertext receiving part 520, a span program computation part 530, a complementary coefficient computation part 540, a pairing operation part 550, a random number computation part 560, and a message computation part 570.

With reference to Fig. 16, the process of the Dec1 algorithm will be described.

(S601: Decryption Key Receiving Step)

Using the communication device and via the network, for example, the decryption key receiving part 510 receives the decryption key $sk_{\Gamma'}$ transmitted by the key generation device 100. The decryption key receiving part 310 also receives the public parameter pk generated by the key generation device 100.

(S602: Ciphertext Receiving Step)

Using the communication device and via the network, for example, the ciphertext receiving part 520 receives the re-encrypted ciphertext $ct^n_{S'}$ transmitted by the re-encryption device 400.

It has been described that the REnc algorithm outputs the re-encrypted ciphertext $ct^{n+1}_{S'}$. However, it is here represented by being changed to the re-encrypted ciphertext $ct^n_{S'}$. That is, when a ciphertext $ct^n_{S'}$ ($ct^0_{S'}$) whose number of re-encryption times is 0 (n = 0) is re-encrypted with a re-encryption key $rk^n_{\Gamma,S'}$ ($rk^0_{\Gamma,S'}$) to generate a re-encrypted ciphertext $ct^{n+1}_{S'}$ ($ct^{0+1}_{S'}$), the re-encrypted ciphertext $ct^{n+1}_{S'}$ ($ct^{0+1}_{S'}$) is represented as a re-encrypted ciphertext $ct^n_{S'}$ ($ct^1_{S'}$).

(S603: Span Program Computation Step)

Using the processing device, the span program computation part 530 determines whether or not the access structure S' included in the re-encrypted ciphertext $ct^n_{S'}$ accepts $\Gamma'$ included in the decryption key $sk_{\Gamma'}$. The method for determining whether or not the access structure S' accepts $\Gamma'$ is as described in "3. Concept for Implementing FPRE" in Embodiment 1.

If the access structure S' accepts $\Gamma'$ (accept in S603), the span program computation part 530 advances the process to (S604). If the access structure S' rejects $\Gamma'$ (reject in S603), the span program computation part 530 ends the process.

(S604: Complementary Coefficient Computation Step)

Using the processing device, the complementary coefficient computation part 540 computes I and a constant (complementary coefficient) $\{\alpha_i\}_{i\in I}$ such that Formula 145 is satisfied.

[Formula 145]

$$\vec{1} = \sum_{i\in I}\alpha_i M'_i$$

$$\text{where } M'_i \text{ is the } i\text{-th row of } M',$$

$$\text{and } I \subseteq \{\, i \in \{1,...,L\} \mid [\rho'(i) = (t,\vec{v}'_i) \wedge (t,\vec{x}'_t) \in \Gamma' \wedge \vec{v}'_i \cdot \vec{x}'_t = 0]$$

$$\vee [\rho'(i) = \neg(t,\vec{v}'_i) \wedge (t,\vec{x}'_t) \in \Gamma' \wedge \vec{v}'_i \cdot \vec{x}'_t \neq 0]\}$$

(S605: Pairing Operation Step)

Using the processing device, the pairing operation part 550 computes Formula 146, and thus generates a session key $K'_n$.

[Formula 146]

$$K'_n := e(c_{0.n}, k^*_{0.n}) \cdot \prod_{i\in I \wedge \rho(i)=(t,\vec{v}_i)} e(c_{i.n}, k^*_{t.n})^{\alpha_i}$$

$$\cdot \prod_{i\in I \wedge \rho(i)=\neg(t,\vec{v}_i)} e(c_{i.n}, k^*_{t.n})^{\alpha_i/(\vec{v}_i\cdot\vec{x}_t)}$$

(S606: Random Number Computation Step)

Using the processing device, the random number computation part 560 computes Formula 147, and thus generates a random number $r_n$.

[Formula 147]

$$E_n(r_n) := c_{T.n} / K'_n \, ,$$
$$r_n := \mathrm{decode}(E_n(r_n))$$

Further, when n is 2 or more, the random number computation part 560 computes Formula 148 sequentially for each integer j = n-1, ..., 1, and thus generates a random number $r_1$, using the processing device.

[Formula 148]

$$E_j(r_j) := c_{T.j} / (K'_j)^{r_{j+1}} \, ,$$
$$r_j := \mathrm{decode}(E_j(r_j))$$

(S607: Message Computation Step)

Using the processing device, the message computation part 570 computes $m = c_{T.0}/(K'_0)^{r_1}$, and thus generates a message m, where r1 signifies the random number $r_1$.

In brief, in (S601) through (S607), the re-encrypted ciphertext decryption device 500 generates the message m by executing the Dec1 algorithm indicated in Formula 149.

[Formula 149]

$$\mathbf{Dec1} = (\mathsf{pk}, \mathsf{sk}_{\Gamma'}, \mathsf{ct}_{\mathbb{S}'}^{n})$$

If $\mathbb{S}'$ accepts $\Gamma'$, then compute $I$ and $\{\alpha_i\}_{i \in I}$ such that

$$\vec{1} = \sum_{i \in I} \alpha_i M_i'$$

where $M_i'$ is the $i$-th row of $M'$,

and $I \subseteq \{ i \in \{1,\ldots,L\} \mid [\rho'(i) = (t, \vec{v}_i') \wedge (t, \vec{x}_t') \in \Gamma' \wedge \vec{v}_i' \cdot \vec{x}_t' = 0]$

$$\vee [\rho'(i) = \neg(t, \vec{v}_i') \wedge (t, \vec{x}_t') \in \Gamma' \wedge \vec{v}_i' \cdot \vec{x}_t' \neq 0]\},$$

$$K_n' := e(c_{0.n}, k_{0.n}^*) \cdot \prod_{i \in I \wedge \rho(i)=(t, \vec{v}_i)} e(c_{i.n}, k_{t.n}^*)^{\alpha_i}$$

$$\cdot \prod_{i \in I \wedge \rho(i)=\neg(t, \vec{v}_i)} e(c_{i.n}, k_{t.n}^*)^{\alpha_i / (\vec{v}_i \cdot \vec{x}_t)},$$

$$E_n(r_n) := c_{T.n} / K_n', \quad r_n := \mathbf{decode}(E_n(r_n)),$$

for $j = n - 1, \ldots, 1$,

$$E_j(r_j) := c_{T.j} / (K_j')^{r_{j+1}}, \quad r_j := \mathbf{decode}(E_j(r_j)),$$

$$m := c_{T.0} / (K_0')^{r_1},$$

return $m$.

With reference to Fig. 17, the process of the Dec2 algorithm will be described.

(S701: Decryption Key Receiving Step)

Using the communication device and via the network, for example, the decryption key receiving part 310 receives the decryption key $\mathsf{sk}_\Gamma$ transmitted by the key generation device 100. The decryption key receiving part 310 also receives the public parameter pk generated by the key generation device 100.

(S702: Ciphertext Receiving Step)

Using the communication device and via the network, for example, the ciphertext receiving part 350 receives the ciphertext $\mathsf{ct}^n{}_{\mathsf{S}}$ ($\mathsf{ct}^0{}_{\mathsf{S}}$) transmitted by the encryption device 200.

(S703: Span Program Computation Step)

Using the processing device, the span program computation part 360 determines whether or not the access structure S included in the ciphertext $\mathsf{ct}_{\mathsf{S}}$ accepts $\Gamma$ included in the decryption key $\mathsf{sk}_\Gamma$. The method for determining whether or not the access structure S accepts $\Gamma$ is as described in "3. Concept for Implementing FPRE" in Embodiment 1.
If the access structure S accepts $\Gamma$ (accept in S703), the span program computation part 360 advances the process to (S704). If the access structure S rejects $\Gamma$ (reject in S703), the span program computation part 360 ends the process.

(S704: Complementary Coefficient Computation Step)

Using the processing device, the complementary coefficient computation part 370 computes I and a constant (complementary coefficient) $\{\alpha_i\}_{i\in I}$ such that Formula 150 is satisfied.

[Formula 150]

$$\vec{1} = \sum_{i\in I} \alpha_i M_i$$

where $M_i$ is the $i$-th row of $M$,

and $I \subseteq \{\, i \in \{1,...,L\} \mid [\rho(i) = (t,\vec{v}_i) \wedge (t,\vec{x}_t) \in \Gamma \wedge \vec{v}_i \cdot \vec{x}_t = 0]$

$\vee [\rho(i) = \neg(t,\vec{v}_i) \wedge (t,\vec{x}_t) \in \Gamma \wedge \vec{v}_i \cdot \vec{x}_t \neq 0]\}$

(S705: Pairing Operation Step)

Using the processing device, the pairing operation part 380 computes Formula 151, and thus generates a session key $K_0$.

[Formula 151]

$$K_0' := e(c_{0.0}, k^*_{0.0}) \cdot \prod_{i\in I \wedge \rho(i)=(t,\vec{v}_i)} e(c_{i.0}, k^*_{t.0})^{\alpha_i}$$

$$\cdot \prod_{i\in I \wedge \rho(i)=\neg(t,\vec{v}_i)} e(c_{i.0}, k^*_{t.0})^{\alpha_i/(\vec{v}_i \cdot \vec{x}_t)}$$

(S706: Message Computation Step)

Using the processing device, the message computation part 390 computes $m = c_{T.0}/K_0$, and thus generates a message m.

In brief, in (S701) through (S706), the decryption device 300 generates the message m by executing the Dec2 algorithm indicated in Formula 152.

[Formula 152]

$$Dec2 = (pk, sk_\Gamma, ct_{\mathbb{S}}^0)$$

If $\mathbb{S}$ accepts $\Gamma$, then compute $I$ and $\{\alpha_i\}_{i \in I}$ such that

$$\vec{1} = \sum_{i \in I} \alpha_i M_i$$

where $M_i$ is the $i$-th row of $M$,

and $I \subseteq \{ i \in \{1,...,L\} \mid [\rho(i) = (t, \vec{v}_i) \wedge (t, \vec{x}_t) \in \Gamma \wedge \vec{v}_i \cdot \vec{x}_t = 0]$

$\vee [\rho(i) = \neg(t, \vec{v}_i) \wedge (t, \vec{x}_t) \in \Gamma \wedge \vec{v}_i \cdot \vec{x}_t \neq 0]\}$,

$$K_0 := e(c_{0.0}, k_{0.0}^*) \cdot \prod_{i \in I \wedge \rho(i) = (t, \vec{v}_i)} e(c_{i.0}, k_{t.0}^*)^{\alpha_i}$$

$$\cdot \prod_{i \in I \wedge \rho(i) = \neg(t, \vec{v}_i)} e(c_{i.0}, k_{t.0}^*)^{\alpha_i / (\vec{v}_i \cdot \vec{x}_t)},$$

$$m := c_{T.0} / K_0,$$

return $m$.

As described above, the cryptographic system 10 according to Embodiment 1 implements the CP-FPRE scheme. Thus, a ciphertext can be forwarded to a set of various types of users with a single re-encryption key.

In particular, in the cryptographic system 10 according to Embodiment 1, re-encrypting once increases the size of a ciphertext only by the size of constant-sized elements. Therefore, executing re-encryption n times increases the size of a ciphertext only by the size of polynomial elements each being multiplied relative to the number of re-encryption execution times n. This is very efficient compared with the conventional FPRE scheme, allowing the FPRE scheme to be applied more widely.

It has been described above that the decryption device 300 also functions as the re-encryption key generation device, and that the decryption device 300 executes the RKG algorithm as well as the Dec2 algorithm. However, a re-encryption key for further re-encrypting the re-encrypted ciphertext $ct^n_{\mathbb{S}'}$ is generated by the re-encrypted ciphertext decryption device 500 by executing the RKG algorithm as the re-encryption key generation device. In this case, therefore, the re-encrypted ciphertext decryption device 500 also includes functional components that are required to execute the RKG algorithm out of the functional components included in the decryption device 300.

The decryption device 300 (and the re-encrypted ciphertext decryption device 500) and the re-encryption key generation device may be implemented separately. In this case, the decryption device 300 executes the Dec2 algorithm, and the re-encryption key generation device executes the RKG algorithm. In this case, therefore, the decryption device 300 includes functional components that are required to execute the Dec2 algorithm, and the re-encryption key generation device includes functional components that are required to execute the RKG algorithm.

In the above description, $n_t + w_t + z_t + 1$ is set in $N_t$. However, $n_t + w_t + z_t + \beta_t$ may be set in $N_t$, where $\beta_t$ is an integer of 0 or more.

In the above description, 5 is set in $N_0$. However, $1 + 1 + w_0 + z_0 + \beta_0$ may be set in $N_0$, where $w_0$, $z_0$, and $\beta_0$ are each an integer of 0 or more.

Embodiment 2

In the FPRE scheme described in Embodiment 1, in the Setup algorithm, the value Q indicating the upper limit value of the number of re-encryption times is input, and a different basis $B_{t.j}$ and a different basis $B_{t.j}^*$ are generated for each integer j = 1, ..., Q. For this reason, the size of the public parameter increases as the upper limit value of the number of re-encryption times becomes larger, thus adversely affecting the efficiency of the cryptographic processes.

Embodiment 2 describes an FPRE scheme in which an indexing technique is employed to eliminate the upper limit value of the number of re-encryption times and achieve a fixed size of the public parameter not depending on the number of re-encryption times.

In Embodiment 2, description will be omitted for portions that are the same as in Embodiment 1, and portions that are different from Embodiment 1 will be described.

The configuration of the cryptographic system 10 is the same as the configuration of the cryptographic system 10 according to Embodiment 1 illustrated in I Fig. 5. However, it is not necessary to input the value Q in the Setup algorithm. The configuration of each device constituting the cryptographic system 10 is the same as the configuration of each device according to Embodiment 1 illustrated in Fig. 6 through Fig. 10.

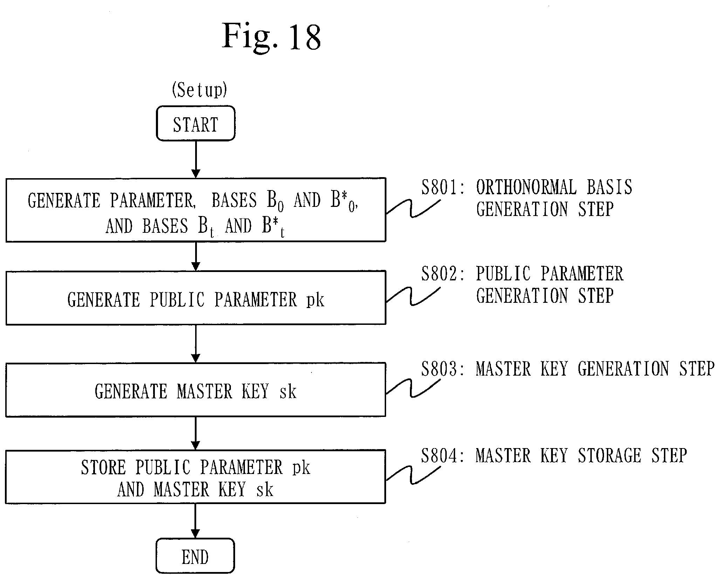

Fig. 18 is a flowchart illustrating the process of the Setup algorithm. The flows of the processes of the other algorithms are the same as the flows of the processes of those algorithms illustrated in Fig. 12 through Fig. 17. With regard to the REnc algorithm and the Dec2 algorithm, the content of the process is also the same as in Embodiment 1.

With reference to Fig. 18, the process of the Setup algorithm will be described.

(S801: Orthonormal Basis Generation Step)

Using the processing device, the master key generation part 110 computes Formula 153, and thus generates a parameter $param_{n\rightarrow}$, a basis $B_0$ and a basis $B^*_0$, and a basis $B_t$ and a basis $B^*_t$.

[Formula 153]

$$\text{param}_{\mathbb{G}} := (q, \mathbb{G}, \mathbb{G}_T, g, e) \xleftarrow{\ \ R\ \ } \mathcal{G}_{\text{bpg}}(1^{\lambda}),$$

$$N_0 := 5, \quad N_t := 2 + n_t + w_t + z_t + 1 \text{ for } t = 1, ..., d,$$

$$\psi \xleftarrow{\ \ U\ \ } \mathbb{F}_q^{\times}, \quad g_T := e(g, g)^{\psi},$$

for $t = 0, ..., d$,

$$\text{param}_{\mathbb{V}_t} := (q, \mathbb{V}_t, \mathbb{G}_T, \mathbb{A}_t, e) \xleftarrow{\ \ R\ \ } \mathcal{G}_{\text{dpvs}}(1^{\lambda}, N_t, \text{param}_{\mathbb{G}}),$$

$$X_t = \begin{pmatrix} \vec{\chi}_{t,1} \\ \vdots \\ \vec{\chi}_{t,N_t} \end{pmatrix} := (\chi_{t,i,j})_{i,j} \xleftarrow{\ \ U\ \ } GL(N_t, \mathbb{F}_q),$$

$$\begin{pmatrix} \vec{v}_{t,1} \\ \vdots \\ \vec{v}_{t,N_t} \end{pmatrix} := (v_{t,i,j})_{i,j} := \psi \cdot (X_t^T)^{-1},$$

$$b_{t,i} := \sum_{j=1}^{N_t} \chi_{t,i,j} a_{t,j}, \mathbb{B}_t := (b_{t,1}, ..., b_{t,N_t}),,$$

$$b_{t,i}^* := \sum_{j=1}^{N_t} v_{t,i,j} a_{t,j}, \mathbb{B}_t^* := (b_{t,1}^*, ..., b_{t,N_t}^*),$$

$$\text{param}_{\vec{n}} := (g_T, \{\text{param}_t\}_{t=0,...,d})$$

(S802: Public Parameter Generation Step)

Using the processing device, the master key generation part 110 generates a subbasis $B^{\wedge}_0$ of the basis $B_0$, a subbasis $B^{\wedge}_t$ of the basis $B_t$, a subbasis $B^{\wedge *}_0$ of the basis $B^*_0$, and a subbasis $B^{\wedge *}_t$ of the basis $B^*_t$, as indicated in Formula 154.

[Formula 154]

$$\hat{\mathbb{B}}_0 := (b_{0,1}, b_{0,2}, b_{0,5}),$$

$$\hat{\mathbb{B}}_t := (b_{t,1}, ..., b_{t,2+n_t}, b_{t,N_t}) \text{ for } t = 1, ..., d,$$

$$\hat{\mathbb{B}}_0^* := (b_{0,2}^*, b_{0,4}^*),$$

$$\hat{\mathbb{B}}_t^* := (b_{t,1}^*, ..., b_{t,2+n_t}^*, b_{t,2+n_t+w_t+1}^*, ..., b_{t,2+n_t+w_t+z_t}^*) \text{ for } t = 1, ..., d,$$

The master key generation part 110 generates a public parameter pk by putting together the security parameter $\lambda$, $param_{\overrightarrow{n}}$, and the subbases $\hat{B}_0$, $\hat{B}_t$, $\hat{B}^*_0$, and $\hat{B}^*_t$.

(S803: Master Key Generation Step)

The master key generation part 110 generates a master key sk which is constituted by the basis vector $b^*_{0.1}$.

(S804: Master Key Storage Step)

The master key storage part 120 stores the public parameter pk generated in (S802) in the storage device. The master key storage part 120 also stores the master key sk generated in (S803) in the storage device.
In brief, in (S801) through (S803), the key generation device 100 generates the public parameter pk and the master key sk by executing the Setup algorithm indicated in Formula 155. In (S804), the key generation device 100 stores the generated public parameter pk and master key sk in the storage device.

[Formula 155]

$$\text{Setup}(1^\lambda, \vec{n} = (d; n_1, ..., n_d; w_1, ..., w_d; z_1, ..., z_d)):$$

$$\text{param}_{\mathbb{G}} := (q, \mathbb{G}, \mathbb{G}_T, g, e) \xleftarrow{\ R\ } \mathcal{G}_{\text{bpg}}(1^\lambda),$$

$$N_0 := 5, \quad N_t := 2 + n_t + w_t + z_t + 1 \text{ for } t = 1, ..., d,$$

$$\psi \xleftarrow{\ U\ } \mathbb{F}_q^\times, \quad g_T := e(g, g)^\psi,$$

for $t = 0, ..., d,$

$$\text{param}_{\mathbb{V}_t} := (q, \mathbb{V}_t, \mathbb{G}_T, \mathbb{A}_t, e) \xleftarrow{\ R\ } \mathcal{G}_{\text{dpvs}}(1^\lambda, N_t, \text{param}_{\mathbb{G}}),$$

$$X_t = \begin{pmatrix} \vec{\chi}_{t,1} \\ \vdots \\ \vec{\chi}_{t,N_t} \end{pmatrix} := (\chi_{t,i,j})_{i,j} \xleftarrow{\ U\ } GL(N_t, \mathbb{F}_q),$$

$$\begin{pmatrix} \vec{v}_{t,1} \\ \vdots \\ \vec{v}_{t,N_t} \end{pmatrix} := (v_{t,i,j})_{i,j} := \psi \cdot (X_t^T)^{-1},$$

$$b_{t,i} := \sum_{j=1}^{N_t} \chi_{t,i,j} a_{t,j}, \mathbb{B}_t := (b_{t,1}, ..., b_{t,N_t}),,$$

$$b_{t,i}^* := \sum_{j=1}^{N_t} v_{t,i,j} a_{t,j}, \mathbb{B}_t^* := (b_{t,1}^*, ..., b_{t,N_t}^*),$$

$$\text{param}_{\vec{n}} := (g_T, \{\text{param}_t\}_{t=0,...,d}),$$

$$\hat{\mathbb{B}}_0 := (b_{0,1}, b_{0,2}, b_{0,5}),$$

$$\hat{\mathbb{B}}_t := (b_{t,1}, ..., b_{t,2+n_t}, b_{t,N_t}) \text{ for } t = 1, ..., d,$$

$$\hat{\mathbb{B}}_0^* := (b_{0,2}^*, b_{0,4}^*),$$

$$\hat{\mathbb{B}}_t^* := (b_{t,1}^*, ..., b_{t,2+n_t}^*, b_{t,2+n_t+w_t+1}^*, ..., b_{t,2+n_t+w_t+z_t}^*) \text{ for } t = 1, ..., d,,$$

$$\text{return pk} = (1^\lambda, \text{param}_{\vec{n}}, \{\hat{\mathbb{B}}_t, \hat{\mathbb{B}}_t^*\}_{t=0,...,d}),$$

$$\text{sk} = (b_{0,1}^*).$$

With reference to Fig. 12, the process of the KG algorithm will be described.

The process of (S201) is the same as in Embodiment 1.

(S202: Random Number Generation Step)

Using the processing device, the random number generation part 141 generates random numbers, as indicated

in Formula 156.

[Formula 156]

$$\delta, \varphi_0 \xleftarrow{\ \mathsf{U}\ } \mathbb{F}_q,$$

$$\vec{\varphi}_t \xleftarrow{\ \mathsf{U}\ } \mathbb{F}_q^{z_t} \ \text{for} \ (t, \vec{\mathrm{x}}_t) \in \Gamma$$

(S203: Decryption Key k* Generation Step)

Using the processing device, the decryption key k* generation part 142 generates a decryption key $k^*_0$, as indicated in Formula 157.

[Formula 157]

$$k_0^* := (1, \delta, 0, \varphi_0, 0)_{\mathbb{B}_0^*}$$

Using the processing device, the decryption key k* generation part 142 also generates a decryption key $k^*_t$ for each integer t included in the attribute set $\Gamma$, as indicated in Formula 158.

[Formula 158]

$$k_{t.0}^* := (\ \overbrace{0^2}^{2}, \overbrace{\delta \vec{x}_t,}^{n_t} \ \overbrace{0^{w_t},}^{w_t} \ \overbrace{\vec{\varphi}_t,}^{z_t} \ \overbrace{0}^{1} \ )_{\mathbb{B}_t^*} \ \text{for} \ (t, \vec{x}_t), \in \Gamma$$

(S204: Key Transmission Step)

Using the communication device and via the network, for example, the key transmission part 150 transmits a decryption key $sk_\Gamma$ having, as elements, the attribute set $\Gamma$ and the decryption keys $k^*_0$ and $k^*_t$ to the decryption device 300 in secrecy.

In brief, in (S201) through (S203), the key generation device 100 generates the decryption key $sk_\Gamma$ by executing the KG algorithm indicated in Formula 159. In (S204), the key generation device 100 transmits the decryption key $sk_\Gamma$ to the decryption device 300.

[Formula 159]

$$KG = (pk, sk, \Gamma = (\{t, \vec{x}_t\} \mid \vec{x}_t \in \mathbb{F}_q^{n_t} \setminus \{\vec{0}\}, 1 \leq t \leq d\}):$$

$$\delta, \varphi_0 \xleftarrow{\;\cup\;} \mathbb{F}_q, \; \vec{\varphi}_t \xleftarrow{\;\cup\;} \mathbb{F}_q^{z_t} \text{ for } (t, \vec{x}_t) \in \Gamma,$$

$$k_{0.0}^* := (1, \delta, 0, \varphi_0, 0)_{\mathbb{B}_0^*},$$

$$k_{t.0}^* := (\overbrace{0^2}^{2}, \overbrace{\delta\vec{x}_t}^{n_t}, \overbrace{0^{w_t}}^{w_t}, \overbrace{\vec{\varphi}_t}^{z_t}, \overbrace{0}^{1})_{\mathbb{B}_t^*} \text{ for } (t, \vec{x}_t), \in \Gamma,$$

$$\text{return } sk_\Gamma := (\Gamma, k_0^*, \{k_t^*\}_{(t, \vec{x}_t) \in \Gamma}).$$

With reference to Fig. 13, the process of the Enc algorithm will be described.
The process of (S301) through (S304) and (S307) are the same as in Embodiment 1.

(S305: Random Number Generation Step)

Using the processing device, the random number generation part 233 generates random numbers, as indicated in Formula 160.

[Formula 160]

$$\eta_{0.n}, \zeta, \mu_n \xleftarrow{\;\cup\;} \mathbb{F}_q,$$

$$\theta_{i.n}, \eta_{i.n} \xleftarrow{\;\cup\;} \mathbb{F}_q \text{ for } i = 1, \ldots, L$$

(S306: Ciphertext c Generation Step)

Using the processing device, the ciphertext c generation part 234 generates a ciphertext $c_{0.n}$, as indicated in Formula 161.

[Formula 161]

$$c_{0.n} := (\zeta, -s_0, 0, 0, \eta_{0.n})_{\mathbb{B}_0}$$

The ciphertext c generation part 234 also generates a ciphertext $c_{i.n}$ for each integer i = 1, ..., L, as indicated in Formula 162.

[Formula 162]

$$\text{for } i = 1,...,L,$$

$$\text{if } \rho(i) = (t, \vec{v}_i),$$

$$c_{i.n} := (\overbrace{\mu_n(n,-1)}^{2}, \overbrace{s_i \vec{e}_{t,1} + \theta_{i.n} \vec{v}_t}^{n_t}, \overbrace{0^{w_t}}^{w_t}, \overbrace{0^{z_t}}^{z_t}, \overbrace{\eta_{i.n}}^{1})_{\mathbb{B}_t},$$

$$\text{if } \rho(i) = \neg(t, \vec{v}_i),$$

$$c_{i.n} := (\overbrace{\mu_n(n,-1)}^{2}, \overbrace{s_i \vec{v}_t}^{n_t}, \overbrace{0^{w_t}}^{w_t}, \overbrace{0^{z_t}}^{z_t}, \overbrace{\eta_{i.n}}^{1})_{\mathbb{B}_t}$$

Using the processing device, the ciphertext c generation part 234 also generates a ciphertext $c_{T.n}$, as indicated in Formula 163.

[Formula 163]

$$c_{T.n} := m \cdot g_T^{\zeta}$$

In brief, in (S301) through (S306), the encryption device 200 generates the ciphertext $ct^n_S$ by executing the Enc algorithm indicated in Formula 164. In (S307), the encryption device 200 transmits the generated ciphertext $ct^n_S$ to the decryption device 300.

[Formula 164]

$$\mathsf{Enc} = (\mathsf{pk}, m, \mathbb{S} = (M, \rho), n):$$

$$\vec{f} \xleftarrow{\mathsf{U}} \mathbb{F}_q^r,$$

$$\vec{s}^T := (s_1, \dots, s_L)^T := M \cdot \vec{f}^T, s_0 := \vec{1} \cdot \vec{f}^T,$$

$$\eta_{0.n}, \zeta, \mu_n \xleftarrow{\mathsf{U}} \mathbb{F}_q,$$

$$c_{0.n} := (\zeta, -s_0, 0, 0, \eta_{0.n})_{\mathbb{B}_0}, \quad c_{T.n} := m \cdot g_T^{\zeta},$$

$$\text{for } i = 1, \dots, L,$$

$$\text{if } \rho(i) = (t, \vec{v}_i), \ \theta_{i.n}, \eta_{i.n} \xleftarrow{\mathsf{U}} \mathbb{F}_q,$$

$$c_{i.n} := (\overbrace{\mu_n(n, -1)}^{2}, \overbrace{s_i \vec{e}_{t,1} + \theta_{i.n} \vec{v}_t}^{n_t}, \overbrace{0^{w_t}}^{w_t}, \overbrace{0^{z_t}}^{z_t}, \overbrace{\eta_{i.n}}^{1})_{\mathbb{B}_t},$$

$$\text{if } \rho(i) = \neg(t, \vec{v}_i), \ \theta_i, \eta_i \xleftarrow{\mathsf{U}} \mathbb{F}_q,$$

$$c_{i.n} := (\overbrace{\mu_n(n, -1)}^{2}, \overbrace{s_i \vec{v}_t}^{n_t}, \overbrace{0^{w_t}}^{w_t}, \overbrace{0^{z_t}}^{z_t}, \overbrace{\eta_{i.n}}^{1})_{\mathbb{B}_t},$$

$$\text{return } \mathsf{ct}_{\mathbb{S}}^{n} := (\mathbb{S}, \{c_{i.n}\}_{i=0,\dots,L}, c_{T.n}, n).$$

With reference to Fig. 14, the process of the RKG algorithm will be described.

The process of (S401) through (S402), (S404), and (S406) is the same as in Embodiment 1.

(S403: Random Number Generation Step)

Using the processing device, the random number generation part 331 generates random numbers, as indicated in Formula 165.

[Formula 165]

$$r_{n+1}, \delta_n^{\mathsf{ran}}, \varphi_{0.n}^{\mathsf{ran}}, \sigma_n \xleftarrow{\mathsf{U}} \mathbb{F}_q,$$

$$\vec{\varphi}_{t.n}^{\mathsf{ran}} \xleftarrow{\mathsf{U}} \mathbb{F}_q^{z_t} \text{ for } (t, \vec{x}_t) \in \Gamma$$

(S405: Decryption Key $k^{*\mathsf{rk}}$ Generation Step)

Using the processing device, the decryption key $k^{*\mathsf{rk}}$ generation part 333 generates a decryption key $k^{*\mathsf{rk}}_{0.n}$, as indicated in Formula 166.

[Formula 166]

$$k_{0.n}^{*\mathrm{rk}} := (r_{n+1}k_{0.n}^{*} + (0, \delta_n^{\mathrm{ran}}, 0, \varphi_{0.n}^{\mathrm{ran}}, 0)_{\mathbb{B}_0^*})$$

The decryption key k*rk generation part 333 also generates a decryption key $k^{*\mathrm{rk}}_{t.n}$ for each integer t included in the attribute set $\Gamma$, as indicated in Formula 167.

[Formula 167]

$$k_{t.n}^{*\mathrm{rk}} := (r_{n+1}k_{t.n}^{*} + (\sigma_n(1,n), \delta_n^{\mathrm{ran}}\vec{x}_t, 0^{w_t}, \vec{\varphi}_{t.n}^{\mathrm{ran}}, 0)_{\mathbb{B}_t^*}))$$

$$\mathrm{for} \ (t, \vec{x}_t) \in \Gamma$$

In brief, in (S401) through (S405), the decryption device 300 generates the re-encryption key $rk^n{}_{\Gamma,S'}$ by executing the RKG algorithm indicated in Formula 168. In (S406), the decryption device 300 transmits the generated re-encryption key $rk^n{}_{\Gamma,S'}$ to the re-encryption device 400.

[Formula 168]

$$\mathrm{RKG} = (\mathrm{pk}, \mathrm{sk}_\Gamma, n, \mathbb{S}'):$$

$$r_{n+1}, \delta_n^{\mathrm{ran}}, \varphi_{0.n}^{\mathrm{ran}}, \sigma_n \xleftarrow{\ \mathsf{U}\ } \mathbb{F}_q,$$

$$\vec{\varphi}_{t.n}^{\mathrm{ran}} \xleftarrow{\ \mathsf{U}\ } \mathbb{F}_q^{z_t} \ \mathrm{for} \ (t, \vec{x}_t) \in \Gamma,$$

$$\mathrm{ct}_{\mathbb{S}'}^{\prime n+1} := (\mathbb{S}', \{c_{i.n+1}\}_{i=0,\dots,L}, c_{T.n+1})$$

$$\xleftarrow{\ \mathsf{R}\ } \mathrm{Enc}(\mathrm{pk}, E_{n+1}(r_{n+1}), \mathbb{S}' = (M', \rho')),$$

$$k_{0.n}^{*\mathrm{rk}} := (r_{n+1}k_{0.n}^{*} + (0, \delta_n^{\mathrm{ran}}, 0, \varphi_{0.n}^{\mathrm{ran}}, 0)_{\mathbb{B}_0^*}),$$

$$k_{t.n}^{*\mathrm{rk}} := (r_{n+1}k_{t.n}^{*} + (\sigma_n(1,n), \delta_n^{\mathrm{ran}}\vec{x}_t, 0^{w_t}, \vec{\varphi}_{t.n}^{\mathrm{ran}}, 0)_{\mathbb{B}_t^*}))$$

$$\mathrm{for} \ (t, \vec{x}_t) \in \Gamma,$$

$$\mathrm{return} \ rk_{\Gamma,\mathbb{S}'}^{n} := (\Gamma, \mathbb{S}', k_{0.n}^{*\mathrm{rk}}, \{k_{t.n}^{*\mathrm{rk}}\}_{(t,\vec{x}_t)\in\Gamma}, \mathrm{ct}_{\mathbb{S}'}^{\prime n+1}, n).$$

With reference to Fig. 16, the process of the Dec1 algorithm will be described.
The process of (S601) through (S604) and (S606) through (S607) is the same as in Embodiment 1.

(S605: Pairing Operation Step)

Using the processing device, the pairing operation part 550 computes Formula 169, and thus generates a session key $K_n$.

[Formula 169]

$$K'_n := e(c_{0.n}, k^*_{0.0}) \cdot \prod_{i \in I \wedge \rho(i) = (t, \vec{v}_i)} e(c_{i.n}, k^*_{t.0})^{\alpha_i}$$

$$\cdot \prod_{i \in I \wedge \rho(i) = \neg(t, \vec{v}_i)} e(c_{i.n}, k^*_{t.0})^{\alpha_i / (\vec{v}_i \cdot \vec{x}_t)}$$

In brief, in (S601) through (S607), the re-encrypted ciphertext decryption device 500 generates the message m by executing the Dec1 algorithm indicated in Formula 170.

[Formula 170]

$$Dec1 = (pk, sk_{\Gamma'}, ct^n_{\mathbb{S}'})$$

If $\mathbb{S}'$ accepts $\Gamma'$, then compute $I$ and $\{\alpha_i\}_{i \in I}$ such that

$$\vec{1} = \sum_{i \in I} \alpha_i M'_i$$

where $M'_i$ is the $i$-th row of $M'$,

and $I \subseteq \{ i \in \{1, ..., L\} \mid [\rho'(i) = (t, \vec{v}'_i) \wedge (t, \vec{x}'_t) \in \Gamma' \wedge \vec{v}'_i \cdot \vec{x}'_t = 0]$

$$\vee [\rho'(i) = \neg(t, \vec{v}'_i) \wedge (t, \vec{x}'_t) \in \Gamma' \wedge \vec{v}'_i \cdot \vec{x}'_t \neq 0]\},$$

$$K'_n := e(c_{0.n}, k^*_{0.0}) \cdot \prod_{i \in I \wedge \rho(i) = (t, \vec{v}_i)} e(c_{i.n}, k^*_{t.0})^{\alpha_i}$$

$$\cdot \prod_{i \in I \wedge \rho(i) = \neg(t, \vec{v}_i)} e(c_{i.n}, k^*_{t.0})^{\alpha_i / (\vec{v}_i \cdot \vec{x}_i)},$$

$$E_n(r_n) := c_{T.n} / K'_n, \quad r_n := \mathbf{decode}(E_n(r_n)),$$

for $j = n - 1, ..., 1,$

$$E_j(r_j) := c_{T.j} / (K'_j)^{r_{j+1}}, \quad r_j := \mathbf{decode}(E_j(r_j)),$$

$$m := c_{T.0} / (K'_0)^{r_1},$$

return $m$.

As described above, in the cryptographic system 10 according to Embodiment 2, index $\mu_n(n, -1)$ is set in the leading two basis vectors of the ciphertext $c_{i.0}$ and index $\sigma_n(1, n)$ is embedded in the leading two basis vectors of the decryption key $k^{*rk}_{t.n}$. This makes it possible to perform re-encryption using the same bases without using different bases each time re-encryption is performed.

As a result, the need to set the upper limit value of the number of re-encryption times is eliminated, and the size of the public parameter can be fixed, not depending on the upper limit value of the number of re-encryption times.

For the portions where the indices are set, it is required that 0 be obtained as a result of an inner-product operation of these portions. Therefore, although the indices are set in two dimensions in the leading two vectors in the above description, this is not limiting and indices may be set in three or higher dimensions. The values to be set as indices are not limited to those described above and may be different values.

Embodiment 3

The CP-FPRE scheme has been described in Embodiment 1. In Embodiment 3, a key-policy FPRE scheme (KP-FPRE) scheme will be described.

In Embodiment 3, description will be omitted for portions that are the same as in Embodiment 1, and portions that are different from Embodiment 1 will be described.

First, a basic structure of the KP-FPRE scheme will be described. Then, a basic configuration of a cryptographic system 10 that implements the KP-FPRE scheme will be described. Then, the KP-FPRE scheme and the cryptographic system 10 according to this embodiment will be described in detail.

The structure of the KP-FPRE scheme will be briefly described. KP (key policy) means that a policy, namely an access structure, is embedded in a key.

<1-1. Basic Structure of KP-FPRE Scheme>

The KP-FPRE scheme includes seven algorithms: Setup, KG, Enc, RKG, REnc, Dec1, and Dec2.

(Setup)

A Setup algorithm is a probabilistic algorithm that takes as input a security parameter $\lambda$, an attribute format $n^{\rightarrow} := (d; n_1, ..., n_d; w_1, ..., w_d; z_1, ..., z_d)$, and a value Q indicating an upper limit value of the number of re-encryption times, and outputs a public parameter pk and a master key sk.

(KG)

A KG algorithm is a probabilistic algorithm that takes as input an access structure $S = (M, \rho)$, the public parameter pk, and the master key sk, and outputs a decryption key $sk_S$.

(Enc)

An Enc algorithm is a probabilistic algorithm that takes as input a message m, an attribute set $\Gamma := \{(t, x^{\rightarrow}_t) \mid x^{\rightarrow}_t \in F_q^{nt}, 1 \le t \le d\}$, and the public parameter pk, and outputs a ciphertext $ct^n_\Gamma$.

(RKG)

An RKG algorithm is a probabilistic algorithm that takes as input the decryption key $sk_S$, an attribute set $\Gamma' := \{(t, x'^{\rightarrow}_t) \mid x'^{\rightarrow}_t \in F_q^{nt}, 1 \le t \le d\}$, and the public parameter pk, and output a re-encryption key $rk^n_{S,\Gamma'}$.

(REnc)

An REnc algorithm is a probabilistic algorithm that takes as input the ciphertext $ct^n_\Gamma$, the re-encryption key $rk^n_{S,\Gamma'}$ and the public parameter pk, and outputs a re-encrypted ciphertext $ct^{n+1}_{\Gamma'}$.

(Dec1)

A Dec1 algorithm is an algorithm that takes as input a re-encrypted ciphertext $ct^n_{\Gamma'}$, a decryption key $sk_{S'}$, and the public parameter pk, and outputs the message m or a distinguished symbol $\perp$.

(Dec2)

A Dec2 algorithm is an algorithm that takes as input a ciphertext $ct^n_\Gamma$ ($ct^0_\Gamma$), the decryption key $sk_S$, and the public parameter pk, and outputs the message m or a distinguished symbol $\perp$.

### <1-2. Cryptographic System 10>

The cryptographic system 10 that executes the algorithms of the KP-FPRE scheme will be described.

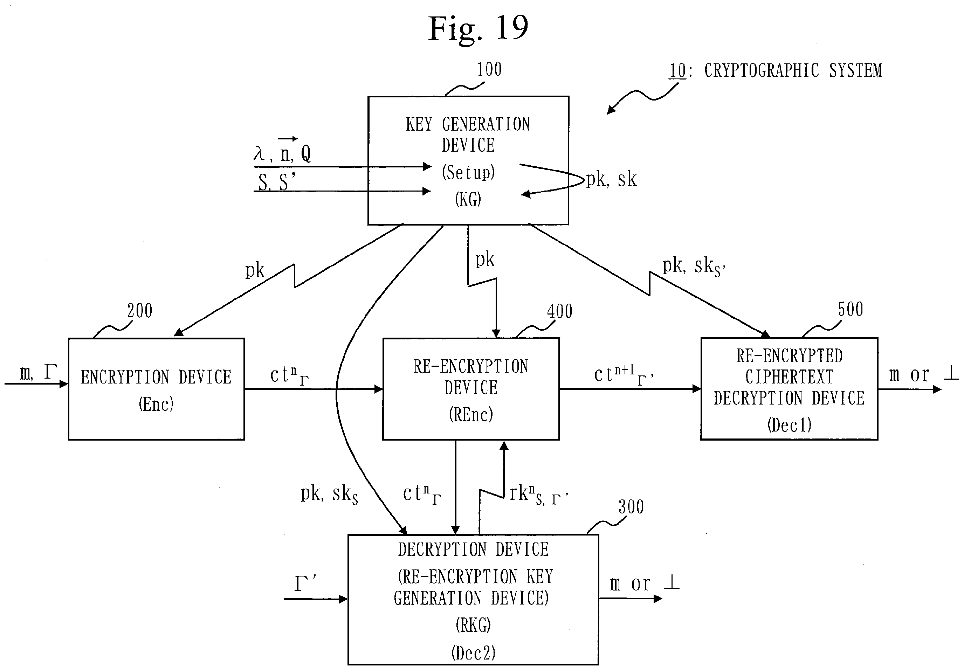

Fig. 19 is a configuration diagram of the cryptographic system 10 that implements the KP-FPRE scheme.

Like the cryptographic system 10 illustrated in Fig. 5, the cryptographic system 10 includes a key generation device 100, an encryption device 200, a decryption device 300 (re-encryption key generation device), a re-encryption device 400, and a re-encrypted ciphertext decryption device 500 (re-encryption key generation device).

The key generation device 100 executes the Setup algorithm taking as input a security parameter $\lambda$, an attribute format $n^\rightarrow := (d; n_1, ..., n_d; w_1, ..., w_d; z_1, ..., z_d)$, and a value Q, and thus generates a public parameter pk and a master key sk.

Then, the key generation device 100 publishes the public parameter pk. The key generation device 100 also executes the KG algorithm taking as input an access structure S, and thus generates a decryption key $sk_S$, and transmits the decryption key $sk_S$ to the decryption device 300 in secrecy. The key generation device 100 also executes the KG algorithm taking as input an access structure S', and thus generates a decryption key $sk_{S'}$, and transmits the decryption key $sk_{S'}$ to the re-encrypted ciphertext decryption device 500 in secrecy.

The encryption device 200 executes the Enc algorithm taking as input a message m, an attribute set $\Gamma$, and the public parameter pk, and thus generates a ciphertext $ct^n_\Gamma$. The encryption device 200 transmits the ciphertext $ct^n_\Gamma$ to the re-encryption device 400.

The decryption device 300 executes the RKG algorithm taking as input the public parameter pk, the decryption key $sk_S$, an attribute set $\Gamma'$, and a value n, and thus generates a re-encryption key $rk^n_{S,\Gamma'}$. The decryption device 300 transmits the re-encryption key $rk^n_{S,\Gamma'}$ to the re-encryption device 400 in secrecy.

The decryption device 300 also executes the Dec2 algorithm taking as input the public parameter pk, the decryption key $sk_S$, and the ciphertext $ct^n_\Gamma$ ($ct^0_\Gamma$), and outputs the message m or a distinguished symbol $\perp$.

The re-encryption device 400 executes the REnc algorithm taking as input the public parameter pk, the re-encryption key $rk^n_{S,\Gamma'}$ and the ciphertext $ct^n_\Gamma$, and thus generates a re-encrypted ciphertext $ct^{n+1}_{\Gamma'}$. The re-encryption device 400 transmits the re-encrypted ciphertext $ct^{n+1}_{\Gamma'}$ to the re-encrypted ciphertext decryption device 500.

The re-encrypted ciphertext decryption device 500 executes the Dec1 algorithm taking as input the public parameter pk, the decryption key $sk_{S'}$, and the re-encrypted ciphertext $ct^{n+1}_{\Gamma'}$, and outputs the message m or a distinguished symbol $\perp$.

### <1-4. KP-FPRE Scheme and Cryptographic System 10 in Detail>

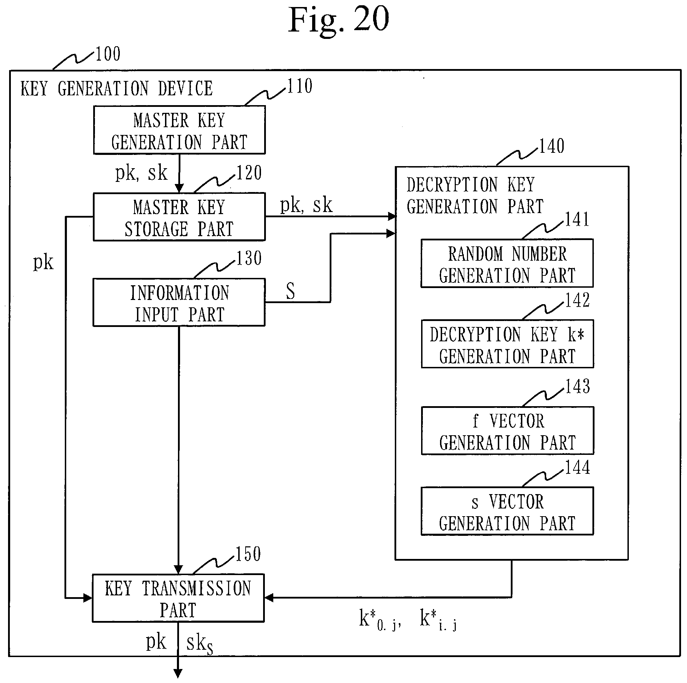

With reference to Fig. 20 through Fig. 30, the KP-FPRE scheme and the function and operation of the cryptographic system 10 that implements the KP-FPRE scheme will be described.

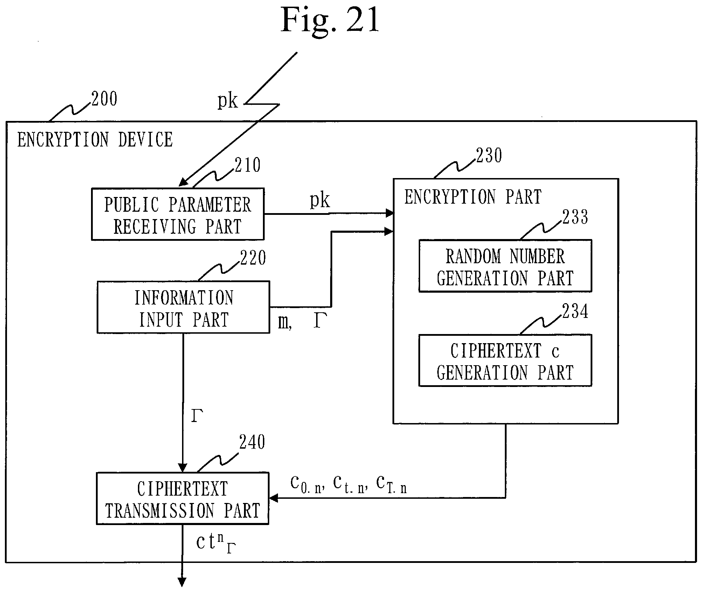

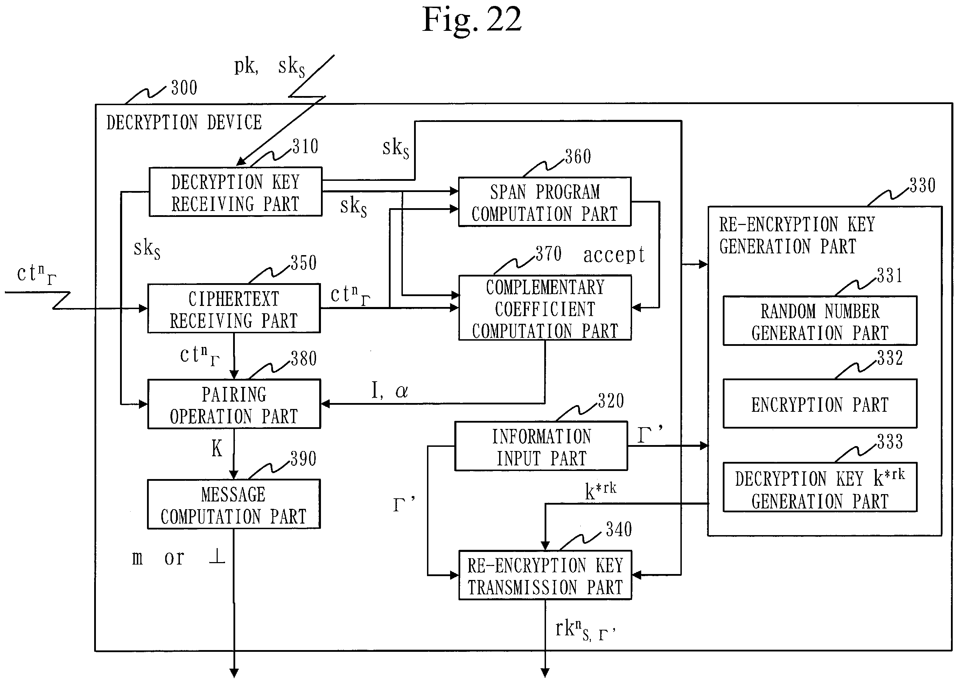

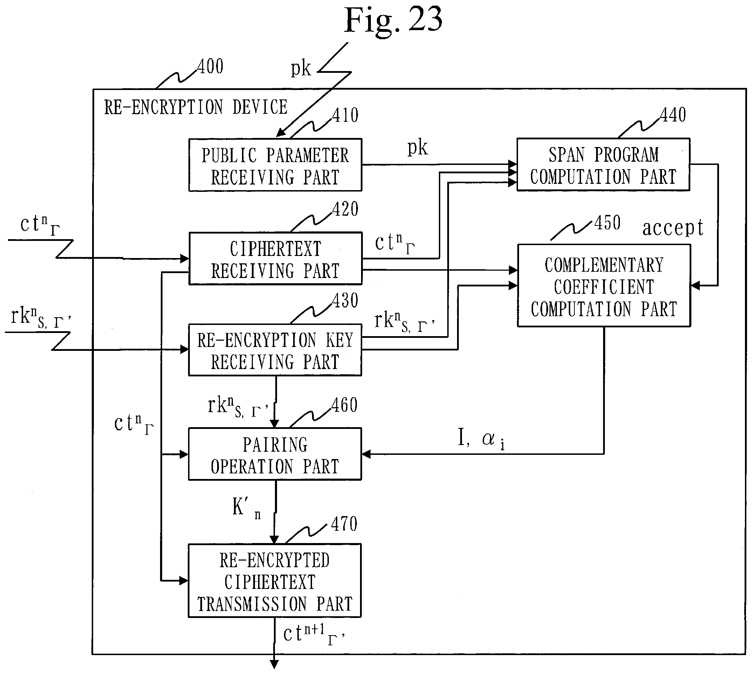

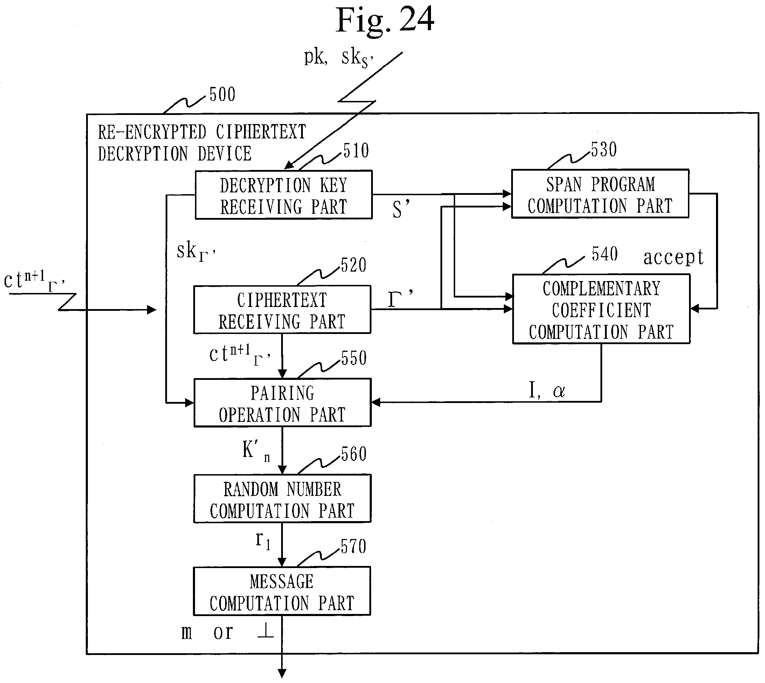

Fig. 20 is a functional block diagram illustrating the function of the key generation device 100. Fig. 21 is a functional block diagram illustrating the function of the encryption device 200. Fig. 22 is a functional block diagram illustrating the function of the decryption device 300. Fig. 23 is a functional block diagram illustrating the function of the re-encryption device 400. Fig. 24 is a functional block diagram illustrating the function of the re-encrypted ciphertext decryption device 500.

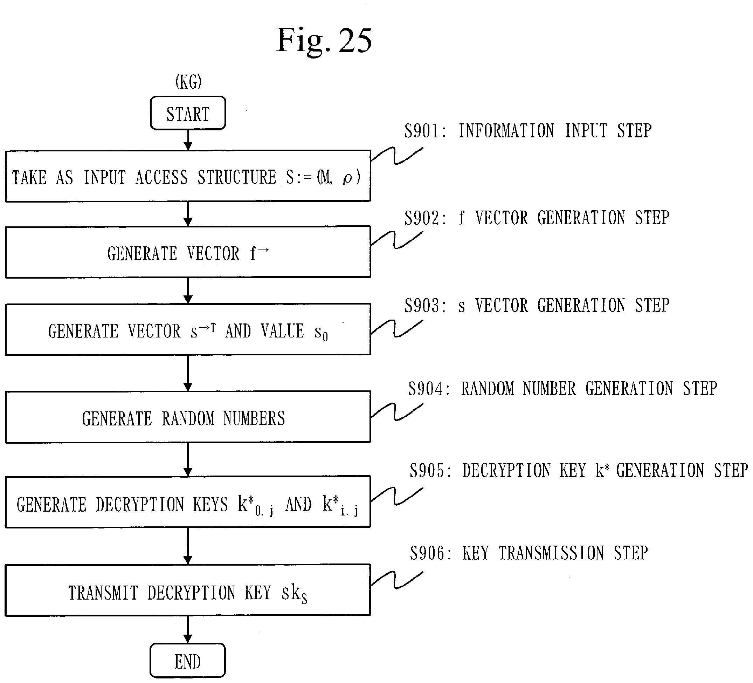

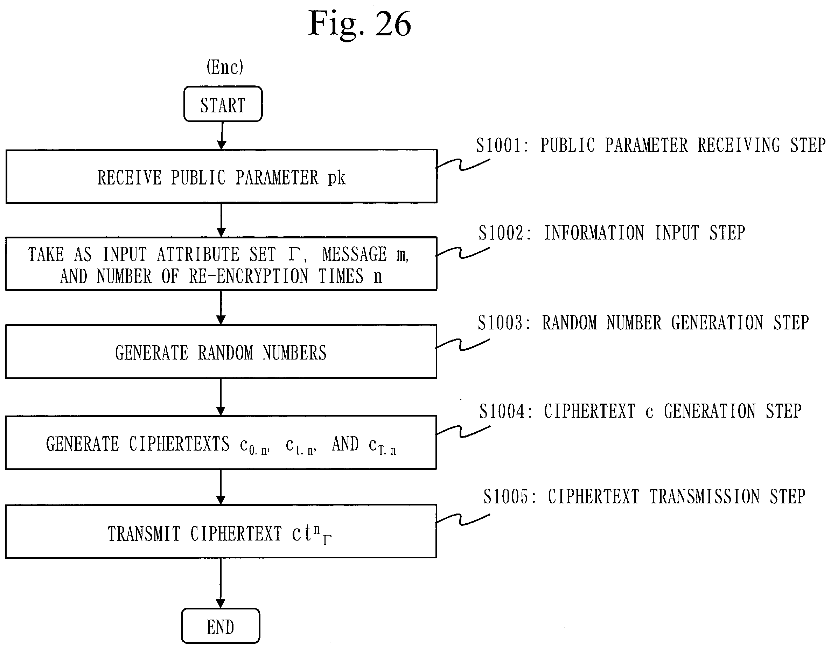

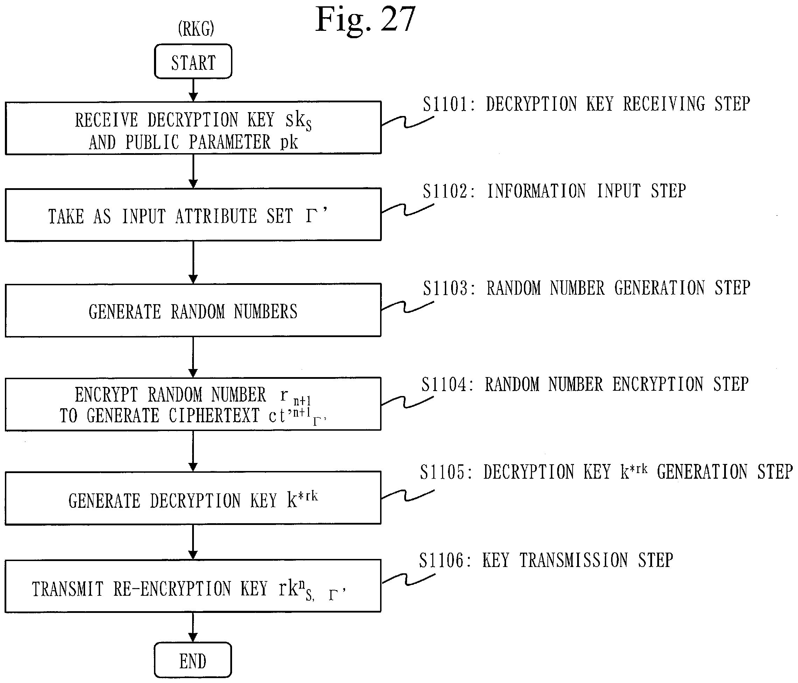

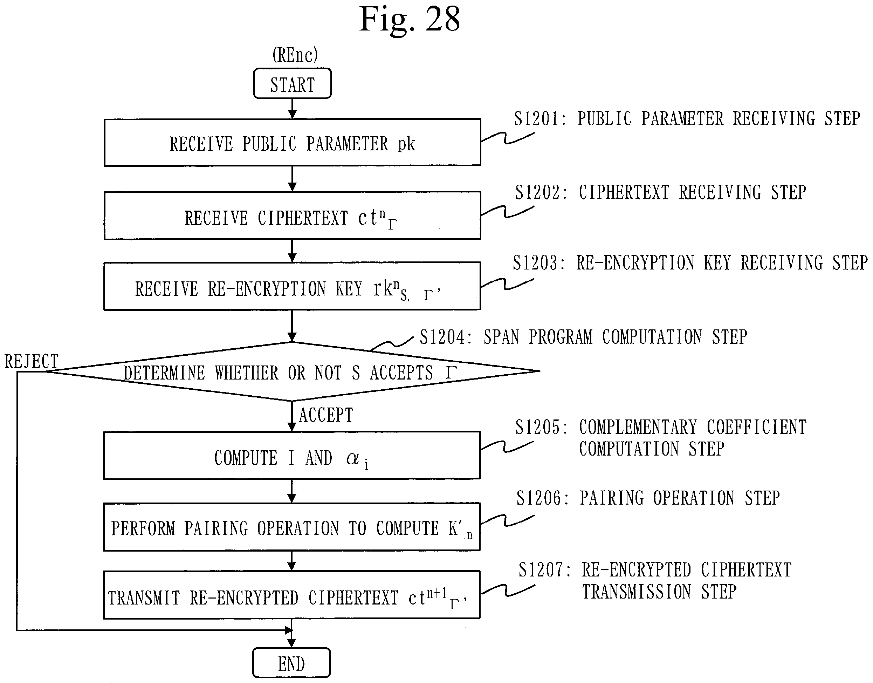

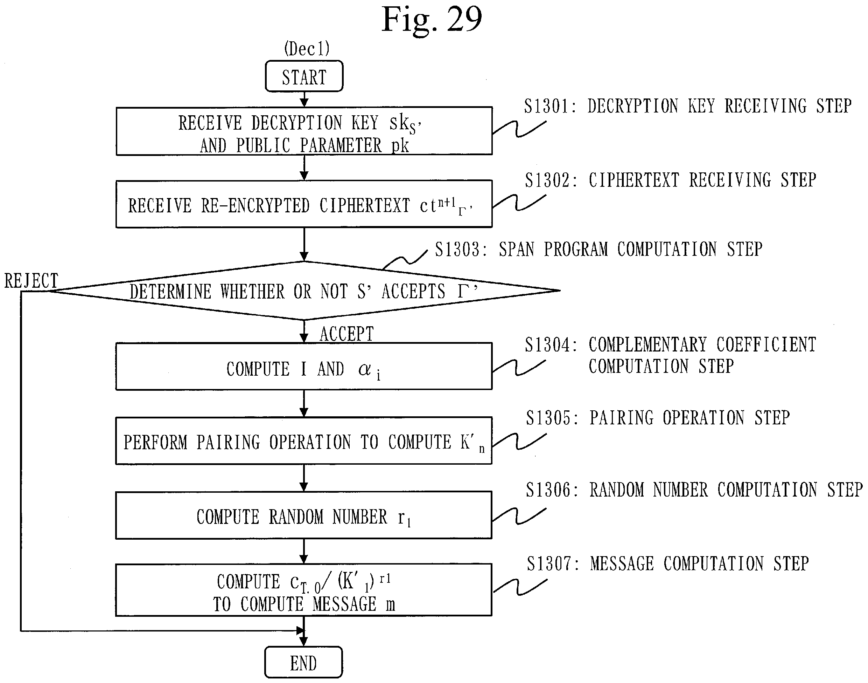

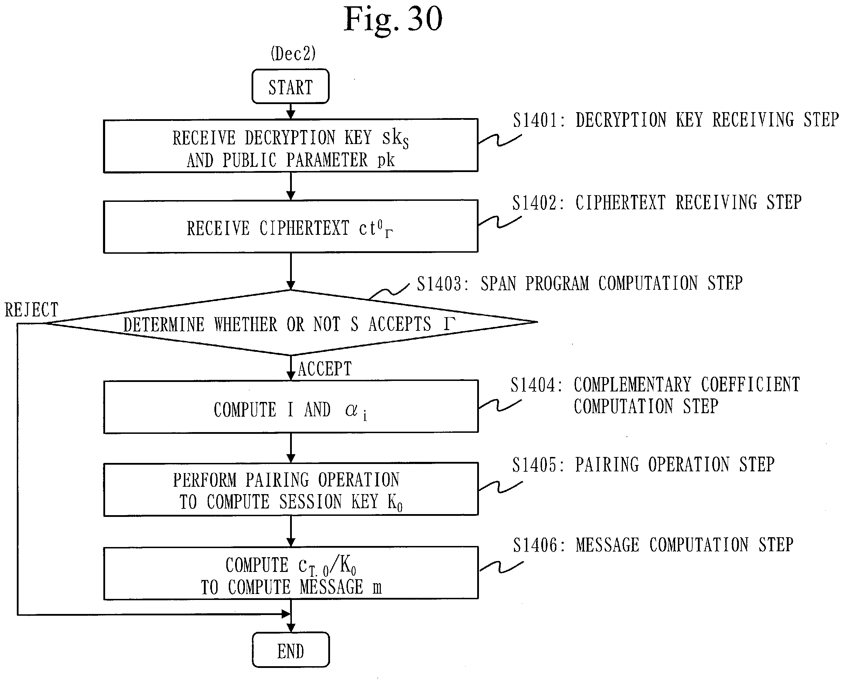

Fig. 25 is a flowchart illustrating the operation of the key generation device 100 and illustrating the process of the KG algorithm. Fig. 26 is a flowchart illustrating the operation of the encryption device 200 and illustrating the process of the Enc algorithm. Fig. 27 is a flowchart illustrating the operation of the decryption device 300 and illustrating the process of the RKG algorithm. Fig. 28 is a flowchart illustrating the operation of the re-encryption device 400 and illustrating the process of the REnc algorithm. Fig. 29 is a flowchart illustrating the operation of the re-encrypted ciphertext decryption device 500 and illustrating the process of the Dec1 algorithm. Fig. 30 is a flowchart illustrating the operation of the decryption device 300 and illustrating the process of the Dec2 algorithm.

The function and operation of the key generation device 100 will be described.

As illustrated in Fig. 20, the key generation device 100 includes a master key generation part 110, a master key storage part 120, an information input part 130, a decryption key generation part 140, and a key transmission part 150 (key output part). The decryption key generation part 140 includes a random number generation part 141, a decryption key k* generation part 142, an f vector generation part 143, and an s vector generation part 144.

The process of the Setup algorithm is basically the same as the process of the Setup algorithm described in Embodiment 1, and thus description thereof will be omitted. However, the basis vectors included in the basis $\hat{B}_0$, the basis $\hat{B}_t$, the basis $\hat{B}^*_0$, and the basis $\hat{B}^*_t$ are different from those in Embodiment 1.

The key generation device 100 executes the Setup algorithm indicated in Formula 171, and thus generates a public parameter pk and a master key sk.

[Formula 171]

$$\mathsf{Setup}(1^\lambda, \vec{n} = (d; n_1, ..., n_d; w_1, ..., w_d; z_1, ..., z_d)):$$

$$\mathsf{param}_\mathbb{G} := (q, \mathbb{G}, \mathbb{G}_T, g, e) \xleftarrow{\;\mathsf{R}\;} \mathcal{G}_{\mathsf{bpg}}(1^\lambda),$$

$$N_0 := 5, \quad N_t := n_t + w_t + z_t + 1 \text{ for } t = 1, ..., d,$$

$$\text{for } j = 0, ..., Q,$$

$$\psi_j \xleftarrow{\;\mathsf{U}\;} \mathbb{F}_q^\times, \quad g_{T.j} := e(g, g)^{\psi_j},$$

$$\text{for } t = 0, ..., d,$$

$$\mathsf{param}_{\mathbb{V}_t} := (q, \mathbb{V}_t, \mathbb{G}_T, \mathbb{A}_t, e) \xleftarrow{\;\mathsf{R}\;} \mathcal{G}_{\mathsf{dpvs}}(1^\lambda, N_t, \mathsf{param}_\mathbb{G})$$

$$X_t = \begin{pmatrix} \vec{\chi}_{t,1} \\ \vdots \\ \vec{\chi}_{t,N_t} \end{pmatrix} := (\chi_{t,i,j'})_{i,j'} \xleftarrow{\;\mathsf{U}\;} GL(N_t, \mathbb{F}_q),$$

$$\begin{pmatrix} \vec{v}_{t,1} \\ \vdots \\ \vec{v}_{t,N_t} \end{pmatrix} := (v_{t,i,j'})_{i,j'} := \psi \cdot (X_t^T)^{-1},$$

$$b_{t.j,i} := \sum_{j=1}^{N_t} \chi_{t,i,j'} a_{t,j'}, \mathbb{B}_{t.j} := (b_{t.j,1}, ..., b_{t.j,N_t}),,$$

$$b_{t.j,i}^* := \sum_{j=1}^{N_t} v_{t,i,j'} a_{t,j'}, \mathbb{B}_{t.j}^* := (b_{t.j,1}^*, ..., b_{t.j,N_t}^*),$$

$$\mathsf{param}_{\vec{n}.j} := (g_{T.j}, \{\mathsf{param}_{\mathbb{V}_t}\}_{t=0,...,d}),$$

$$\hat{\mathbb{B}}_{0.j} := (b_{0.j,1}, b_{0.j,2}, b_{0.j,4}),$$

$$\hat{\mathbb{B}}_{t.j} := (b_{t.j,1}, ..., b_{t.j,n_t}, b_{t.j,n_t+w_t+1}, ..., b_{t.j,n_t+w_t+z_t}) \text{ for } t = 1, ..., d,$$

$$\hat{\mathbb{B}}_{0.j}^* := (b_{0.j,2}^*, b_{0.j,5}^*),$$

$$\hat{\mathbb{B}}_{t.j}^* := (b_{t.j,1}^*, ..., b_{t.j,n_t}^*, b_{t.j,N_t}^*) \text{ for } t = 1, ..., d,$$

$$\text{return pk} = (1^\lambda, \{\mathsf{param}_{\vec{n}.j}\}_{j=0,...,Q}, \{\hat{\mathbb{B}}_{t.j}, \hat{\mathbb{B}}_{t.j}^*\}_{t=0,...,d;j=0,...,Q}),$$

$$\text{sk} = (\{b_{0.j,1}^*\}_{j=0,...,Q}).$$

With reference to Fig. 25, the process of the KG algorithm will be described.

(S901: Information Input Step)

Using the input device, the information input part 130 takes as input an access structure S := (M, ρ). The matrix M of the access structure S is to be set according to the conditions of a system to be implemented. Attribute information of a user of a decryption key $sk_S$ is set in p of the access structure S, for example. Note that ρ(i) = (t, $\vec{v}_i$ := ($v_{i.1}$, ..., $v_{i.nt}$) $\in F_q^{nt}\backslash\{0^{\rightarrow}\}$) ($v_{i,n\,t} \neq 0$).

(S902: f Vector Generation Step)

Using the processing device, the f vector generation part 143 generates a vector $f^{\rightarrow}$, as indicated in Formula 172.

[Formula 172]

$$\vec{f} \xleftarrow{\quad U \quad} \mathbb{F}_q^r$$

(S903: s Vector Generation Step)

Using the processing device, the s vector generation part 144 generates a vector $s^{\rightarrow T}$:= ($s_1$, ..., $s_L$)$^T$, as indicated in Formula 173.

[Formula 173]

$$\vec{s}^T := (s_1,...,s_L)^T := M \cdot \vec{f}^T$$

Using the processing device, the s vector generation part 144 also generates a value $s_0$, as indicated in Formula 174.

[Formula 174]

$$s_0 := \vec{1} \cdot \vec{f}^T$$

(S904: Random Number Generation Step)

Using the processing device, the random number generation part 141 generates random numbers, as indicated in Formula 175.

[Formula 175]

$$\eta_{0.j} \xleftarrow{\quad U \quad} \mathbb{F}_q, \; j = 0,...,Q,$$

$$\theta_i, \eta_{i.j} \xleftarrow{\quad U \quad} \mathbb{F}_q \;\; \text{for } i = 1,...,L; j = 0,...,Q$$

(S905: Decryption Key k* Generation Step)

Using the processing device, the decryption key k* generation part 142 generates a decryption key $k^*_{0.j}$ for each integer j = 0, ..., Q, as indicated in Formula 176.

[Formula 176]

$$k_{0.j}^* := (1, -s_0, 0, 0, \eta_{0.j})_{\mathbb{B}_{0.j}^*} \text{ for } j = 0, ..., Q$$

Using the processing device, the decryption key k* generation part 142 also generates a decryption key $k_{i.j}^*$ for each integer i = 1, ..., L and each integer j = 0, ..., Q, as indicated in Formula 177.

[Formula 177]

$$\text{for } i = 1, ..., L; j = 0, ..., Q,$$

$$\text{if } \rho(i) = (t, \vec{v}_i),$$

$$k_{i.j}^* := (\overbrace{s_i \vec{e}_{t,1} + \theta_i \vec{v}_t}^{n_t}, \overbrace{0^{w_t}}^{w_t}, \overbrace{0^{z_t}}^{z_t}, \overbrace{\eta_{i.j}}^{1})_{\mathbb{B}_{t.j}^*},$$

$$\text{if } \rho(i) = \neg(t, \vec{v}_i),$$

$$k_{i.j}^* := (\overbrace{s_i \vec{v}_t}^{n_t}, \overbrace{0^{w_t}}^{w_t}, \overbrace{0^{z_t}}^{z_t}, \overbrace{\eta_{i.j}}^{1})_{\mathbb{B}_{t.j}^*}$$

(S906: Key Transmission Step)

Using the communication device and via the network, for example, the key transmission part 150 transmits the decryption key sk$_S$ having, as elements, the access structure S and the decryption keys $k_{0.j}^*$ and $k_{i.j}^*$ to the decryption device 300 in secrecy. As a matter of course, the decryption key sk$_S$ may be transmitted to the decryption device 300 by another method.

In brief, in (S901) through (S905), the key generation device 100 generates the decryption key sk$_S$ by executing the KG algorithm indicated in Formula 178. In (S906), the key generation device 100 transmits the generated decryption key sk$_S$ to the decryption device 300.

[Formula 178]

$$KG = (pk, sk, \mathbb{S} = (M, \rho)):$$

$$\vec{f} \xleftarrow{\ U\ } \mathbb{F}_q^r,$$

$$\vec{s}^T := (s_1, \dots, s_L)^T := M \cdot \vec{f}^T, s_0 := \vec{1} \cdot \vec{f}^T,$$

$$\text{for } j = 0, \dots, Q$$

$$\eta_{0.j} \xleftarrow{\ U\ } \mathbb{F}_q,$$

$$k_{0.j}^* := (1, -s_0, 0, 0, \eta_{0.j})_{\mathbb{B}_{0.j}^*},$$

$$\text{for } i = 1, \dots, L,$$

$$\text{if } \rho(i) = (t, \vec{v}_i), \quad \theta_i, \eta_{i.j} \xleftarrow{\ U\ } \mathbb{F}_q,$$

$$k_{i.j}^* := (\overbrace{s_i \vec{e}_{t,1} + \theta_i \vec{v}_t}^{n_t}, \overbrace{0^{w_t}}^{w_t}, \overbrace{0^{z_t}}^{z_t}, \overbrace{\eta_{i.j}}^{1})_{\mathbb{B}_{t.j}^*},$$

$$\text{if } \rho(i) = \neg(t, \vec{v}_i), \quad \theta_i, \eta_{i.j} \xleftarrow{\ U\ } \mathbb{F}_q,$$

$$k_{i.j}^* := (\overbrace{s_i \vec{v}_t}^{n_t}, \overbrace{0^{w_t}}^{w_t}, \overbrace{0^{z_t}}^{z_t}, \overbrace{\eta_{i.j}}^{1})_{\mathbb{B}_{t.j}^*},$$

$$\text{return } sk_\Gamma := (\mathbb{S}, \{k_{i.j}^*\}_{i=0,\dots,L; j=0,\dots,Q}).$$

In (S901), the key generation device 100 generates a decryption key $sk_{S'}$ by executing the KG algorithm taking as input an access structure S' := (M', ρ') in which attribute information of a user of the decryption key $sk_{S'}$ is set. Then, the decryption key $sk_{S'}$ :=(S', k'*_0, k'*_i) is transmitted to the re-encrypted ciphertext decryption device 500. Note that ρ' (i) = (t, $v^{\rightarrow'}_i$ := (v'_{i.1}, ..., v'_{i.nt}) ∈ Fq^{nt}\{0^{\rightarrow}\})(v'_{i,nt} ≠ 0).

The function and operation of the encryption device 200 will be described.

As illustrated in Fig. 21, the encryption device 200 includes a public parameter receiving part 210, an information input part 220, an encryption part 230, and a ciphertext transmission part 240 (ciphertext output part). The encryption part 230 includes a random number generation part 233 and a ciphertext c generation part 234.

With reference to Fig. 26, the process of the Enc algorithm will be described.

(S1001: Public Parameter Receiving Step)

Using the communication device and via the network, for example, the public parameter receiving part 210 receives the public parameter pk generated by the key generation device 100.

(S1002: Information Input Step)

Using the input device, the information input part 220 takes as input an attribute set $\Gamma := \{(t, \vec{x}_t := (x_{t.1}, ..., x_{t.nt} \in Fq^{nt})) \mid 1 \le t \le d\}$. Note that t may be at least some of integers from 1 to d, instead of being all of integers from 1 to d. Attribute information of a user capable of decryption is set in the attribute set $\Gamma$, for example.

Using the input device, the information input part 220 also takes as input a message m to be transmitted to the decryption device 300.

Using the input device, the information input part 220 also takes as input the number of re-encryption times n. The number of re-encryption times n to be input here is normally 0, and takes a value specified in the RKG algorithm when the Enc algorithm is invoked in the RKG algorithm to be described later.

(S1003: Random Number Generation Step)

Using the processing device, the random number generation part 233 generates random numbers, as indicated in Formula 179.

[Formula 179]

$$\zeta, \delta_0, \varphi_{0.n} \xleftarrow{\;\;U\;\;} \mathbb{F}_q,$$

$$\vec{\varphi}_{t.n} \xleftarrow{\;\;U\;\;} \mathbb{F}_q^{z_t} \text{ for } (t, \vec{x}_t) \in \Gamma$$

(S1004: Ciphertext c Generation Step)

Using the processing device, the ciphertext c generation part 234 generates a ciphertext $c_{0.n}$, as indicated in Formula 180.

[Formula 180]

$$c_{0.n} := (\zeta, \delta_0, 0, \varphi_{0.n}, 0)_{\mathbb{B}_{0.n}}$$

Using the processing device, the ciphertext c generation part 234 also generates a ciphertext $c_{t.n}$ for each integer t included in the attribute information $\Gamma$, as indicated in Formula 181.

[Formula 181]

$$c_{t.n} := (\overbrace{\delta_0 \vec{x}_t}^{n_t}, \overbrace{0^{w_t}}^{w_t}, \overbrace{\vec{\varphi}_{t.n}}^{z_t}, \overbrace{0}^{1})_{\mathbb{B}_{t.n}} \text{ for } (t, \vec{x}_t), \in \Gamma$$

Using the processing device, the ciphertext c generation part 234 also generates a ciphertext $c_{T.n}$, as indicated in Formula 182.

[Formula 182]

$$c_{T.n} := m \cdot g_{T.n}^{\zeta}$$

(S1005: Ciphertext Transmission Step)

Using the communication device and via the network, for example, the ciphertext transmission part 240 transmits a ciphertext $ct^n_\Gamma$ having, as elements, the attribute set $\Gamma$ and the ciphertexts $c_{0.n}$, $c_{t.n}$, and $c_{T.n}$ to the decryption device 300. As a matter of course, the ciphertext $ct^n_\Gamma$ may be transmitted to the decryption device 300 by another method.

In brief, in (S1001) through (S1004), the encryption device 200 generates the ciphertext $ct^n_\Gamma$ by executing the Enc algorithm indicated in Formula 183. In (S1005), the encryption device 200 transmits the generated ciphertext $ct^n_\Gamma$ to the decryption device 300.

[Formula 183]

$$\mathsf{Enc} = (\mathsf{pk}, m, \Gamma = (\{t, \vec{x}_t) \mid \vec{x}_t \in \mathbb{F}_q^{n_t} \setminus \{\vec{0}\}, 1 \leq t \leq d\}, n):$$

$$\zeta, \delta_0, \varphi_{0.n} \xleftarrow{\ \mathsf{U}\ } \mathbb{F}_q,$$

$$\vec{\varphi}_{t.n} \xleftarrow{\ \mathsf{U}\ } \mathbb{F}_q^{z_t} \ \text{for}\ (\mathsf{t}, \vec{\mathsf{x}}_t) \in \Gamma,$$

$$c_{0.n} := (\zeta, \delta_0, 0, \varphi_{0.n}, 0)_{\mathbb{B}_{0.n}},\ c_{T.n} := m \cdot g_{T.n}^{\zeta},$$

$$c_{t.n} := (\overbrace{\delta_0 \vec{x}_t}^{n_t}, \overbrace{0^{w_t}}^{w_t}, \overbrace{\vec{\varphi}_{t.n}}^{z_t}, \overbrace{0}^{1})_{\mathbb{B}_{t.n}} \ \text{for}\ (t, \vec{x}_t), \in \Gamma,$$

$$\text{return } ct^n_\Gamma := (\Gamma, c_{0.n}, \{c_{t.n}\}_{(t, \vec{x}_t), \in \Gamma}, c_{T.n}, n).$$

The function and operation of the decryption device 300 will be described.

As illustrated in Fig. 22, the decryption device 300 includes a decryption key receiving part 310, an information input part 320, a re-encryption key generation part 330, a re-encryption key transmission part 340 (re-encryption key output part), a ciphertext receiving part 350, a span program computation part 360, a complementary coefficient computation part 370, a pairing operation part 380, and a message computation part 390. The re-encryption key generation part 330 includes a random number generation part 331, an encryption part 332, and a decryption key $k^{*rk}$ generation part 333.

With reference to Fig. 27, the process of RKG algorithm will now be described. The Dec2 algorithm will be described later.

(S1101: Decryption Key Receiving Step)

Using the communication device and via the network, for example, the decryption key receiving part 310 receives the decryption key $sk_S$ transmitted by the key generation device 100. The decryption key receiving part 310 also receives the public parameter pk generated by the key generation device 100.

(S1102: Information Input Step)

Using the input device, the information input part 320 takes as input an attribute set $\Gamma' := \{(t, x'^{\rightarrow}_t := (x'_{t.1}, ..., x'_{t.nt} \in Fq^{nt}\setminus\{0^{\rightarrow}\})) \mid 1 \leq t \leq d\}$. Note that t may be at least some of integers from 1 to d, instead of being all of integers from 1 to d. Attribute information of a user who can decrypt a re-encrypted ciphertext $ct^{n+1}_{\Gamma'}$ is set in the attribute set $\Gamma'$, for example.

Using the input device, the information input part 320 also takes as input the number of re-encryption times n. The number of re-encryption times n to be input here indicates the number of times a ciphertext for which a re-encryption key for re-encryption is to be generated has been re-encrypted.

(S1103: Random Number Generation Step)

Using the processing device, the random number generation part 331 generates random numbers, as indicated in Formula 184.

[Formula 184]

$$r_{n+1}, \eta_{0.n}^{ran} \xleftarrow{\;U\;} \mathbb{F}_q,$$

$$\eta_{i.n}^{ran} \xleftarrow{\;U\;} \mathbb{F}_q \text{ for } i = 1, ..., L$$

(S1104: Random Number Encryption Step)

Using the processing device, the encryption part 332 encrypts the random number $r_{n+1}$ (conversion information) as indicated in Formula 185, and thus generates a ciphertext $ct'^{n+1}{}_{\Gamma'}$. Note that a function $E_{n+1}$ is an encode function from $F_q$ to $G_{T.n+1}$.

[Formula 185]

$$ct_{\Gamma'}^{'n+1} := (\Gamma', c_{0.n+1}, \{c_{i.n+1}\}_{(t,\vec{x}_t),\in\Gamma}, c_{T.n+1})$$

$$\xleftarrow{\;R\;} Enc(pk, E_{n+1}(r_{n+1}), \Gamma')$$

(S1105: Decryption Key k*rk Generation Step)

Using the processing device, the decryption key k*rk generation part 333 generates a decryption key $k^{*rk}{}_{0.n}$, as indicated in Formula 186.

[Formula 186]

$$k_{0.n}^{*rk} := (r_{n+1} k_{0.n}^* + (0, 0, 0, 0, \eta_{0.n}^{ran})_{\mathbb{B}_{0.n}^*})$$

Using the processing device, the decryption key k*rk generation part 333 also generates a decryption key $k^{*rk}{}_{i.n}$ for each integer i = 1, ..., L, as indicated in Formula 187.

[Formula 187]

$$k_{i.n}^{*rk} := (r_{n+1} k_{i.n}^* + (0^{n_t}, 0^{w_t}, 0^{z_t}, \eta_{i.n}^{ran})_{\mathbb{B}_{i.n}^*})) \text{ for } i = 1, ..., L$$

(S1106: Key Transmission Step)

Using the communication device and via the network, for example, the re-encryption key transmission part 340 transmits a re-encryption key $rk^n{}_{S,\Gamma'}$ having, as elements, the access structure S, the attribute set $\Gamma'$, the decryption keys $k^{*rk}{}_{0.n}$ and $k^{*rk}{}_{i.n}$, the ciphertext $ct'^{n+1}{}_{\Gamma'}$, and the number of re-encryption times n (the value input in (S1102) here) to the re-encryption device 400 in secrecy. As a matter of course, the re-encryption key $rk^n{}_{S,\Gamma'}$ may be transmitted to the re-encryption device 400 by another method.

In brief, in (S1101) through (S1105), the decryption device 300 generates the re-encryption key $rk^n_{S,\Gamma'}$ by executing the RKG algorithm indicated in Formula 188. In (S1106), the decryption device 300 transmits the generated re-encryption key $rk^n_{S,\Gamma'}$ to the re-encryption device 400.

[Formula 188]

$$RKG = (pk, sk_\Gamma, n, \mathbb{S}'):$$

$$r_{n+1}, \eta^{ran}_{0.n} \xleftarrow{U} \mathbb{F}_q,$$

$$\eta^{ran}_{i.n} \xleftarrow{U} \mathbb{F}_q \text{ for } i = 1,...,L,$$

$$ct'^{n+1}_{\Gamma'} := (\Gamma', c_{0.n+1}, \{c_{i.n+1}\}_{(t,\vec{x}_t),\in\Gamma}, c_{T.n+1})$$

$$\xleftarrow{R} Enc(pk, E_{n+1}(r_{n+1}), \Gamma'),$$

$$k^{*rk}_{0.n} := (r_{n+1}k^*_{0.n} + (0,0,0,0,\eta^{ran}_{0.n})_{\mathbb{B}^*_{0.n}}),$$

$$k^{*rk}_{i.n} := (r_{n+1}k^*_{i.n} + (0^{n_t}, 0^{w_t}, 0^{z_t}, \eta^{ran}_{i.n})_{\mathbb{B}^*_{i.n}})) \text{ for } i = 1,...,L,$$

$$\text{return } rk^n_{\mathbb{S},\Gamma'} := (\mathbb{S}, \Gamma', k^{*rk}_{0.n}, \{k^{*rk}_{i.n}\}_{i=1,...,L}, ct'^{n+1}_{\Gamma'}, n).$$

The function and operation of the re-encryption device 400 will be described.

As illustrated in Fig. 23, the re-encryption device 400 includes a public parameter receiving part 410, a ciphertext receiving part 420, a re-encryption key receiving part 430, a span program computation part 440, a complementary coefficient computation part 450, a pairing operation part 460, and a re-encrypted ciphertext transmission part 470 (re-encrypted ciphertext output part).

With reference to Fig. 28, the process of the REnc algorithm will be described.

(S1201: Public Parameter Receiving Step)

Using the communication device and via the network, for example, the public parameter receiving part 410 receives the public parameter pk generated by the key generation device 100.

(S1202: Ciphertext Receiving Step)

Using the communication device and via the network, for example, the ciphertext receiving part 420 receives the ciphertext $ct^n_\Gamma$ ($ct^0_\Gamma$) transmitted by the encryption device 200.

(S1203: Re-encryption Key Receiving Step)

Using the communication device and via the network, for example, the re-encryption key receiving part 430 receives the re-encryption key $rk^n_{S,\Gamma'}$ transmitted by the decryption device 300.

(S1204: Span Program Computation Step)

Using the processing device, the span program computation part 440 determines whether or not the access structure S included in the re-encryption key $rk^n_{S,\Gamma'}$ accepts $\Gamma$ included in the ciphertext $ct^n_\Gamma$. The method for determining whether or not the access structure S accepts $\Gamma$ is as described in "3. Concept for Implementing FPRE" in Embodiment 1.

If the access structure S accepts $\Gamma$ (accept in S1204), the span program computation part 440 advances the process to (S1205). If the access structure S rejects $\Gamma$ (reject in S1204), the span program computation part 440 ends the process.

(S1205: Complementary Coefficient Computation Step)

Using the processing device, the complementary coefficient computation part 450 computes I and a constant (complementary coefficient) $\{\alpha_i\}_{i \in I}$ such that Formula 189 is satisfied.

[Formula 189]

$$\vec{1} = \sum_{i \in I} \alpha_i M_i$$

where $M_i$ is the $i$-th row of $M$,

$$\text{and } I \subseteq \{ i \in \{1,...,L\} \mid [\rho(i) = (t,\vec{v}_i) \wedge (t,\vec{x}_t) \in \Gamma \wedge \vec{v}_i \cdot \vec{x}_t = 0]$$

$$\vee [\rho(i) = \neg(t,\vec{v}_i) \wedge (t,\vec{x}_t) \in \Gamma \wedge \vec{v}_i \cdot \vec{x}_t \neq 0]\}$$

(S1206: Pairing Operation Step)

Using the processing device, the pairing operation part 460 computes Formula 190, and thus generates a session key K'$_n$.

[Formula 190]

$$K'_n := e(c_{0.n}, k_{0.n}^{*\mathrm{rk}}) \cdot \prod_{i \in I \wedge \rho(i)=(t,\vec{v}_i)} e(c_{t.n}, k_{i.n}^{*\mathrm{rk}})^{\alpha_i}$$

$$\cdot \prod_{i \in I \wedge \rho(i)=\neg(t,\vec{v}_i)} e(c_{t.n}, k_{i.n}^{*\mathrm{rk}})^{\alpha_i/(\vec{v}_i \cdot \vec{x}_i)}$$

(S1207: Re-encrypted Ciphertext Transmission Step)

Using the communication device and via the network, for example, the re-encrypted ciphertext transmission part 470 transmits a re-encrypted ciphertext $\mathrm{ct}^{n+1}_{\Gamma'}$ having, as elements, the session key K'$_n$, the ciphertext $c_{T.n}$, the attribute set $\Gamma'$, the ciphertext $\mathrm{ct'}^{n+1}_{\Gamma'}$, and the number of re-encryption times n+1 (a value obtained by adding 1 to the number of re-encryption times n included in the ciphertext $\mathrm{ct}^n_{\Gamma}$ received in (S 1202) or the number of re-encryption times n included in the re-encryption key $\mathrm{rk}^n_{S,\Gamma'}$ received in (S1203) here) to the re-encrypted ciphertext decryption device 500 in secrecy. As a matter of course, the re-encrypted ciphertext $\mathrm{ct}^{n+1}_{\Gamma'}$ may be transmitted to the re-encrypted ciphertext decryption device 500 by another method.

The description herein assumes a case where the ciphertext $\mathrm{ct}^n_{\Gamma}$ output by the encryption device 200 is re-encrypted. However, it is also possible to further re-encrypt the re-encrypted ciphertext $\mathrm{ct}^{n+1}_{\Gamma'}$ output by the re-encryption device 400.

In this case, in (S1202), the ciphertext receiving part 420 obtains the re-encrypted ciphertext $\mathrm{ct}^{n+1}_{\Gamma'}$ output by the re-encryption device 400, in place of the ciphertext $\mathrm{ct}^n_{\Gamma}$ output by the encryption device 200, as the ciphertext $\mathrm{ct}^n_{\Gamma}$. The ciphertext $\mathrm{ct}^{n+1}_{\Gamma'}$ includes the attribute set $\Gamma'$ as an element. For descriptive purposes, the attribute set $\Gamma'$ is read as the attribute set $\Gamma$. In the ciphertext $\mathrm{ct}^{n+1}_{\Gamma'}$, the number of re-encryption times is n+1. For descriptive purposes, the number of re-encryption times is read as n.

Then, in (S1207), the re-encrypted ciphertext transmission part 470 transmits the re-encrypted ciphertext $\mathrm{ct}^{n+1}_{\Gamma'}$

having, as elements, the above-described elements and also the elements included in the ciphertext $\mathrm{ct}^n{}_\Gamma$ obtained in (S1202) (the session key $\{K'_j\}_{j=1,\ldots,n}$ and the ciphertext $\{c_{T.j}\}_{j=0,\ldots,n-1}$) to the re-encrypted ciphertext decryption device 500.

The rest of the process is as described above.

In brief, in (S1201) through (S1206), the re-encryption device 400 generates the re-encrypted ciphertext $\mathrm{ct}^{n+1}{}_\Gamma$, by executing the REnc algorithm indicated in Formula 191. In (S1207), the re-encryption device 400 transmits the generated re-encrypted ciphertext $\mathrm{ct}^{n+1}{}_\Gamma$, to the re-encrypted ciphertext decryption device 500.

[Formula 191]

$$\mathsf{REnc} = (\mathsf{pk}, \mathsf{rk}^n_{\mathbb{S},\Gamma'}, \mathsf{ct}^n_\Gamma)$$

$$\text{If } \mathbb{S} \text{ accepts } \Gamma, \text{ then compute } I \text{ and } \{\alpha_i\}_{i\in I} \text{ such that}$$

$$\vec{1} = \sum_{i\in I} \alpha_i M_i$$

$$\text{where } M_i \text{ is the } i\text{-th row of } M,$$

$$\text{and } I \subseteq \{ i \in \{1,\ldots,L\} \mid [\rho(i) = (t,\vec{v}_i) \wedge (t,\vec{x}_t) \in \Gamma \wedge \vec{v}_i \cdot \vec{x}_t = 0]$$

$$\vee [\rho(i) = \neg(t,\vec{v}_i) \wedge (t,\vec{x}_t) \in \Gamma \wedge \vec{v}_i \cdot \vec{x}_t \neq 0]\},$$

$$K'_n := e(c_{0.n}, k^{*\mathbf{rk}}_{0.n}) \cdot \prod_{i\in I \wedge \rho(i)=(t,\vec{v}_i)} e(c_{t.n}, k^{*\mathbf{rk}}_{i.n})^{\alpha_i}$$

$$\cdot \prod_{i\in I \wedge \rho(i)=\neg(t,\vec{v}_i)} e(c_{t.n}, k^{*\mathbf{rk}}_{i.n})^{\alpha_i/(\vec{v}_i\cdot\vec{x}_t)},$$

$$\text{return } \mathsf{ct}^{n+1}_{\Gamma'} := (\Gamma', \{c_{T.j}, K'_j\}_{j=0,\ldots,n}, \mathsf{ct}'^{n+1}_{\Gamma'}, n+1).$$

If the number of re-encryption times n included in the ciphertext $\mathrm{ct}^n{}_\Gamma$ received in (S1202) does not coincide with the number of re-encryption times n included in the re-encryption key $\mathrm{rk}^n{}_{\mathbb{S},\Gamma'}$ received in (S1203), re-encryption is not possible.

The function and operation of the re-encrypted ciphertext decryption device 500 will be described.

As illustrated in Fig. 24, the re-encrypted ciphertext decryption device 500 includes a decryption key receiving part 510, a ciphertext receiving part 520, a span program computation part 530, a complementary coefficient computation part 540, a pairing operation part 550, a random number computation part 560, and a message computation part 570.

With reference to Fig. 29, the process of the Dec1 algorithm will be described.

(S1301: Decryption Key Receiving Step)

Using the communication device and via the network, for example, the decryption key receiving part 510 receives the decryption key $\mathrm{sk}_{\mathbb{S}'}$ transmitted by the key generation device 100. The decryption key receiving part 310 also receives the public parameter pk generated by the key generation device 100.

(S1302: Ciphertext Receiving Step)

Using the communication device and via the network, for example, the ciphertext receiving part 520 receives the re-encrypted ciphertext $\mathrm{ct}^n{}_{\Gamma'}$ transmitted by the re-encryption device 400.

It has been described that the REnc algorithm outputs the re-encrypted ciphertext $\mathrm{ct}^{n+1}{}_{\Gamma'}$. However, it is represented here by being changed to the re-encrypted ciphertext $\mathrm{ct}^n{}_{\Gamma'}$.

(S1303: Span Program Computation Step)

Using the processing device, the span program computation part 530 determines whether or not the access structure S' included in the decryption key $sk_{S'}$ accepts $\Gamma'$ included in the re-encrypted ciphertext $ct^n_{\Gamma'}$. The method for determining whether or not the access structure S' accepts $\Gamma'$ is as described in "3. Concept for Implementing FPRE" in Embodiment 1.

If the access structure S' accepts $\Gamma'$ (accept in S1303), the span program computation part 530 advances the process to (S1304). If the access structure S' rejects $\Gamma'$ (reject in S1303), the span program computation part 530 ends the process.

(S1304: Complementary Coefficient Computation Step)

Using the processing device, the complementary coefficient computation part 540 computes I and a constant (complementary coefficient) $\{\alpha_i\}_{i\in I}$ such that Formula 192 is satisfied.

[Formula 192]

$$\vec{1} = \sum_{i \in I} \alpha_i M_i'$$

$$\text{where } M_i' \text{ is the } i\text{-th row of } M',$$

$$\text{and } I \subseteq \{ i \in \{1,...,L\} \,|\, [\rho'(i) = (t, \vec{v}_i') \wedge (t, \vec{x}_t') \in \Gamma' \wedge \vec{v}_i' \cdot \vec{x}_t' = 0]$$

$$\vee [\rho'(i) = \neg(t, \vec{v}_i') \wedge (t, \vec{x}_t') \in \Gamma' \wedge \vec{v}_i' \cdot \vec{x}_t' \neq 0]\}$$

(S1305: Pairing Operation Step)

Using the processing device, the pairing operation part 550 computes Formula 193, and thus generates a session key $K'_n$.

[Formula 193]

$$K_n' := e(c_{0.n}, k_{0.n}^*) \cdot \prod_{i \in I \wedge \rho(i)=(t,\vec{v}_i)} e(c_{t.n}, k_{i.n}^*)^{\alpha_i}$$

$$\cdot \prod_{i \in I \wedge \rho(i)=\neg(t,\vec{v}_i)} e(c_{t.n}, k_{i.n}^*)^{\alpha_i/(\vec{v}_i \cdot \vec{x}_t)}$$

The process of (S1306) through (S1307) is the same as the process of (S606) through (S607) in Embodiment 1 illustrated in Fig. 16.

In brief, in (S1301) through (S1307), the re-encrypted ciphertext decryption device 500 generates the message m by executing the Dec1 algorithm indicated in Formula 194.

[Formula 194]

$$\mathsf{Dec1} = (\mathsf{pk}, \mathsf{sk}_{\mathbb{S}'}, \mathsf{ct}_{\Gamma'}^n)$$

If $\mathbb{S}'$ accepts $\Gamma'$, then compute $I$ and $\{\alpha_i\}_{i \in I}$ such that

$$\vec{1} = \sum_{i \in I} \alpha_i M_i'$$

where $M_i'$ is the $i$-th row of $M'$,

and $I \subseteq \{ i \in \{1, ..., L\} \mid [\rho'(i) = (t, \vec{v}_i') \wedge (t, \vec{x}_t') \in \Gamma' \wedge \vec{v}_i' \cdot \vec{x}_t' = 0]$

$$\vee [\rho'(i) = \neg(t, \vec{v}_i') \wedge (t, \vec{x}_t') \in \Gamma' \wedge \vec{v}_i' \cdot \vec{x}_t' \neq 0]\},$$

$$K_n' := e(c_{0.n}, k_{0.n}^*) \cdot \prod_{i \in I \wedge \rho(i) = (t, \vec{v}_i)} e(c_{t.n}, k_{i.n}^*)^{\alpha_i}$$

$$\cdot \prod_{i \in I \wedge \rho(i) = \neg(t, \vec{v}_i)} e(c_{t.n}, k_{i.n}^*)^{\alpha_i / (\vec{v}_i \cdot \vec{x}_t)},$$

$$E_n(r_n) := c_{T.n} / K_n', \quad r_n := \mathbf{decode}(E_n(r_n)),$$

for $j = n - 1, ..., 1,$

$$E_j(r_j) := c_{T.j} / (K_j')^{r_{j+1}}, \quad r_j := \mathbf{decode}(E_j(r_j)),$$

$$m := c_{T.0} / (K_0')^{r_1},$$

return $m$.

With reference to Fig. 30, the process of the Dec2 algorithm will be described.

(S1401: Decryption Key Receiving Step)

Using the communication device and via the network, for example, the decryption key receiving part 310 receives the decryption key $\mathsf{sk}_S$ transmitted by the key generation device 100. The decryption key receiving part 310 also receives the public parameter pk generated by the key generation device 100.

(S1402: Ciphertext Receiving Step)

Using the communication device and via the network, for example, the ciphertext receiving part 350 receives the ciphertext $\mathsf{ct}^n_\Gamma$ transmitted by the re-encryption device 400.

(S1403: Span Program Computation Step)

Using the processing device, the span program computation part 360 determines whether or not the access structure S included in the decryption key $\mathsf{sk}_S$ accepts $\Gamma'$ included in the ciphertext $\mathsf{ct}_\Gamma$. The method for determining whether or not the access structure S accepts $\Gamma$ is as described in "3. Concept for Implementing FPRE" in Embodiment 1.
If the access structure S accepts $\Gamma$ (accept in S1403), the span program computation part 360 advances the process to (S1404). If the access structure S rejects $\Gamma$ (reject in S1403), the span program computation part 360 ends the process.

(S1404: Complementary Coefficient Computation Step)

Using the processing device, the complementary coefficient computation part 370 computes I and a constant (complementary coefficient) $\{\alpha_i\}_{i \in I}$ such that Formula 195 is satisfied.

[Formula 195]

$$\vec{1} = \sum_{i \in I} \alpha_i M_i$$

where $M_i$ is the $i$-th row of $M$,

and $I \subseteq \{ i \in \{1,...,L\} \mid [\rho(i) = (t,\vec{v}_i) \wedge (t,\vec{x}_t) \in \Gamma \wedge \vec{v}_i \cdot \vec{x}_t = 0]$

$$\vee [\rho(i) = \neg(t,\vec{v}_i) \wedge (t,\vec{x}_t) \in \Gamma \wedge \vec{v}_i \cdot \vec{x}_t \neq 0]\}$$

(S 1405: Pairing Operation Step)

Using the processing device, the pairing operation part 380 computes Formula 196, and thus generates a session key $K_0$.

[Formula 196]

$$K_0' := e(c_{0.0}, k_{0.0}^*) \cdot \prod_{i \in I \wedge \rho(i)=(t,\vec{v}_i)} e(c_{t.0}, k_{i.0}^*)^{\alpha_i}$$

$$\cdot \prod_{i \in I \wedge \rho(i)=\neg(t,\vec{v}_i)} e(c_{t.0}, k_{i.0}^*)^{\alpha_i/(\vec{v}_i \cdot \vec{x}_t)}$$

(S1406: Message Computation Step)

Using the processing device, the message computation part 390 computes $m = c_{T.0}/K_0$, and thus generates a message m.
In brief, in (S1401) through (S1406), the decryption device 300 generates the message m by executing the Dec2 algorithm indicated in Formula 197.

[Formula 197]

$$\mathsf{Dec2} = (\mathsf{pk}, \mathsf{sk}_{\mathbb{S}}, \mathsf{ct}_{\Gamma}^{0})$$

If $\mathbb{S}$ accepts $\Gamma$, then compute $I$ and $\{\alpha_i\}_{i \in I}$ such that

$$\vec{1} = \sum_{i \in I} \alpha_i M_i$$

where $M_i$ is the $i$-th row of $M$,

and $I \subseteq \{ i \in \{1, \ldots, L\} \mid [\rho(i) = (t, \vec{v}_i) \wedge (t, \vec{x}_t) \in \Gamma \wedge \vec{v}_i \cdot \vec{x}_t = 0]$

$$\vee [\rho(i) = \neg(t, \vec{v}_i) \wedge (t, \vec{x}_t) \in \Gamma \wedge \vec{v}_i \cdot \vec{x}_t \neq 0] \},$$

$$K_0 := e(c_{0.0}, k_{0.0}^*) \cdot \prod_{i \in I \wedge \rho(i) = (t, \vec{v}_i)} e(c_{t.0}, k_{i.0}^*)^{\alpha_i}$$

$$\cdot \prod_{i \in I \wedge \rho(i) = \neg(t, \vec{v}_i)} e(c_{t.0}, k_{i.0}^*)^{\alpha_i / (\vec{v}_i \cdot \vec{x}_t)},$$

$$m := c_{T.0} / K_0,$$

return $m$.

As described above, the cryptographic system 10 according to Embodiment 3 implements the KP-FPRE scheme. Thus, a ciphertext can be forwarded to a set of various types of users with a single re-encryption key.

Embodiment 2 has described the scheme in which the indexing technique is applied to the CP-FPRE scheme described in Embodiment 1. Embodiment 2 realizes the CP-FPRE scheme in which the upper limit value of the number of re-encryption times is eliminated and the size of the pubic parameter is fixed not depending on the upper limit value of the number of re-encryption times.

Similarly, the indexing technique can be applied to the KP-FPRE scheme described in Embodiment 3, as indicated in Formula 198 through Formula 201. With regard to the RKG algorithm, the REnc algorithm, and the Dec2 algorithm, the content of the process is also the same as in the KP-FPRE scheme described above.

This makes it possible to implement a KP-FPRE scheme in which the upper limit value of the number of re-encryption times is eliminated and the size of the public parameter is fixed not depending on the upper limit value of the number of re-encryption times.

EP 3 096 487 B1

[Formula 198]

$$\text{Setup}(1^\lambda, \vec{n} = (d; n_1, ..., n_d; w_1, ..., w_d; z_1, ..., z_d)):$$

$$\text{param}_\mathbb{G} := (q, \mathbb{G}, \mathbb{G}_T, g, e) \xleftarrow{\ \mathsf{R}\ } \mathcal{G}_{\text{bpg}}(1^\lambda),$$

$$N_0 := 5, \ N_t := 2 + n_t + w_t + z_t + 1 \text{ for } t = 1, ..., d,$$

$$\psi \xleftarrow{\ \mathsf{U}\ } \mathbb{F}_q^\times, \ g_T := e(g,g)^\psi,$$

$$\text{for } t = 0, ..., d,$$

$$\text{param}_{\mathbb{V}_t} := (q, \mathbb{V}_t, \mathbb{G}_T, \mathbb{A}_t, e) \xleftarrow{\ \mathsf{R}\ } \mathcal{G}_{\text{dpvs}}(1^\lambda, N_t, \text{param}_\mathbb{G}),$$

$$X_t = \begin{pmatrix} \vec{\chi}_{t,1} \\ \vdots \\ \vec{\chi}_{t,N_t} \end{pmatrix} := (\chi_{t,i,j})_{i,j} \xleftarrow{\ \mathsf{U}\ } GL(N_t, \mathbb{F}_q),$$

$$\begin{pmatrix} \vec{v}_{t,1} \\ \vdots \\ \vec{v}_{t,N_t} \end{pmatrix} := (v_{t,i,j})_{i,j} := \psi \cdot (X_t^T)^{-1},$$

$$b_{t,i} := \sum_{j=1}^{N_t} \chi_{t,i,j} a_{t,j}, \mathbb{B}_t := (b_{t,1}, ..., b_{t,N_t}),,$$

$$b_{t,i}^* := \sum_{j=1}^{N_t} v_{t,i,j} a_{t,j}, \mathbb{B}_t^* := (b_{t,1}^*, ..., b_{t,N_t}^*),$$

$$\text{param}_{\vec{n}} := (g_T, \{\text{param}_t\}_{t=0,...,d}),$$

$$\hat{\mathbb{B}}_0 := (b_{0,1}, b_{0,2}, b_{0,4}),$$

$$\hat{\mathbb{B}}_t := (b_{t,1}, ..., b_{t,2+n_t}, b_{t.j,2+n_t+w_t+1}, ..., b_{t.j,2+n_t+w_t+z_t}) \text{ for } t = 1, ..., d,$$

$$\hat{\mathbb{B}}_0^* := (b_{0,2}^*, b_{0,5}^*),$$

$$\hat{\mathbb{B}}_t^* := (b_{t,1}^*, ..., b_{t,2+n_t}^*, b_{t,N_t}^*) \text{ for } t = 1, ..., d,,$$

$$\text{return pk} = (1^\lambda, \text{param}_{\vec{n}}, \{\hat{\mathbb{B}}_t, \hat{\mathbb{B}}_t^*\}_{t=0,...,d}),$$

$$\text{sk} = (b_{0,1}^*).$$

[Formula 199]

$$\mathsf{KG} = (\mathsf{pk}, \mathsf{sk}, \mathbb{S} = (M, \rho)):$$

$$\vec{f} \xleftarrow{\ \mathsf{U}\ } \mathbb{F}_q^r,$$

$$\vec{s}^{T} := (s_1, ..., s_L)^{\mathrm{T}} := M \cdot \vec{f}^{\mathrm{T}}, s_0 := \vec{1} \cdot \vec{f}^{\mathrm{T}},$$

$$\eta_0 \xleftarrow{\ \mathsf{U}\ } \mathbb{F}_q,$$

$$k_{0.0}^{*} := (1, -s_0, 0, 0, \eta_0)_{\mathbb{B}_0^*},$$

for $j = 0, ..., Q$

   for $i = 1, ..., L$,

     if $\rho(i) = (t, \vec{v}_i),\ \ \mu_j, \theta_i, \eta_{i,j} \xleftarrow{\ \mathsf{U}\ } \mathbb{F}_q,$

$$k_{i,j} := (\ \overbrace{\mu_j(j, -1)}^{2},\ \overbrace{s_i \vec{e}_{t,1} + \theta_i \vec{v}_t}^{n_t},\ \overbrace{0^{w_t}}^{w_t},\ \overbrace{0^{z_t}}^{z_t},\ \overbrace{\eta_{i,j}}^{1}\ )_{\mathbb{B}_t^*},$$

     if $\rho(i) = \neg(t, \vec{v}_i),\ \ \mu_j, \theta_i, \eta_{i,j} \xleftarrow{\ \mathsf{U}\ } \mathbb{F}_q,$

$$k_{i,j} := (\ \overbrace{\mu_j(j, -1)}^{2},\ \overbrace{s_i \vec{v}_t}^{n_t},\ \overbrace{0^{w_t}}^{w_t},\ \overbrace{0^{z_t}}^{z_t},\ \overbrace{\eta_{i,j}}^{1}\ )_{\mathbb{B}_t^*},$$

return $\mathsf{sk}_\Gamma := (\mathbb{S}, \{k_{i,j}^{*}\}_{i=0,...,L;\, j=0,...,Q}).$

[Formula 200]

$$\mathsf{Enc} = (\mathrm{pk}, m, \Gamma = (\{t, \vec{x}_t\} \mid \vec{x}_t \in \mathbb{F}_q^{n_t} \setminus \{\vec{0}\}, 1 \le t \le d\}, n) :$$

$$\zeta, \delta_0, \sigma_n, \varphi_{0.n} \xleftarrow{\ \mathsf{U}\ } \mathbb{F}_q,$$

$$\vec{\varphi}_{t.n} \xleftarrow{\ \mathsf{U}\ } \mathbb{F}_q^{z_t} \ \text{for} \ (\mathrm{t}, \vec{\mathrm{x}}_{\mathrm{t}}) \in \Gamma,$$

$$c_{0.n} := (\zeta, \delta_0, 0, \varphi_{0.n}, 0)_{\mathbb{B}_0}, \quad c_{T.n} := m \cdot g_T^{\zeta},$$

$$c_{t.n} := (\ \overbrace{\sigma_n(1, n)}^{2}, \ \overbrace{\delta_0 \vec{x}_t}^{n_t}, \ \overbrace{0^{w_t}}^{w_t}, \ \overbrace{\vec{\varphi}_{t.n}}^{z_t}, \ \overbrace{0}^{1}\ )_{\mathbb{B}_t} \ \text{for} \ (t, \vec{x}_t), \in \Gamma,$$

$$\text{return} \ \mathsf{ct}_\Gamma^0 := (\Gamma, c_{0.n}, \{c_{t.n}\}_{(t, \vec{x}_t), \in \Gamma}, c_{T.n}, n).$$

[Formula 201]

$$\mathsf{Dec1} = (\mathrm{pk}, \mathrm{sk}_{\mathbb{S}'}, \mathsf{ct}_{\Gamma'}^n)$$

If $\mathbb{S}'$ accepts $\Gamma'$, then compute $I$ and $\{\alpha_i\}_{i \in I}$ such that

$$\vec{1} = \sum_{i \in I} \alpha_i M_i'$$

where $M_i'$ is the $i$-th row of $M'$,

and $I \subseteq \{\ i \in \{1, \ldots, L\} \mid [\rho'(i) = (t, \vec{v}_i') \wedge (t, \vec{x}_t') \in \Gamma' \wedge \vec{v}_i' \cdot \vec{x}_t' = 0]$

$$\vee [\rho'(i) = \neg(t, \vec{v}_i') \wedge (t, \vec{x}_t') \in \Gamma' \wedge \vec{v}_i' \cdot \vec{x}_t' \ne 0]\},$$

$$K_n' := e(c_{0.n}, k_{0.0}^*) \cdot \prod_{i \in I \wedge \rho(i)=(t, \vec{v}_i)} e(c_{t.n}, k_{i.n}^*)^{\alpha_i}$$

$$\cdot \prod_{i \in I \wedge \rho(i)=\neg(t, \vec{v}_i)} e(c_{t.n}, k_{i.n}^*)^{\alpha_i / (\vec{v}_i \cdot \vec{x}_t)},$$

$$E_n(r_n) := c_{T.n} / K_n', \quad r_n := \mathbf{decode}(E_n(r_n)),$$

for $j = n-1, \ldots, 1,$

$$E_j(r_j) := c_{T.j} / (K_j')^{r_{j+1}}, \quad r_j := \mathbf{decode}(E_j(r_j)),$$

$$m := c_{T.0} / (K_0')^{r_1},$$

return $m$.

Embodiment 4

In the above embodiments, the methods for implementing the cryptographic processes in dual vector spaces have been described. In Embodiment 4, a method for implementing the cryptographic processes in dual modules will be described.

That is, in the above embodiments, the cryptographic processes are implemented in cyclic groups of prime order q. However, when a ring R is expressed using a composite number M as indicated in Formula 202, the cryptographic processes described in the above embodiments can be adapted to a module having the ring R as a coefficient.

[Formula 202]

$$\mathbb{R} := \mathbb{Z}\big/{M\mathbb{Z}}$$

where

$\mathbb{Z}$ : integer, and
$M$ : composite number.

By changing $F_q$ to R in the algorithms described in the above embodiments, the cryptographic processes in dual additive groups can be implemented.

In the above embodiments, it has been described that the re-encryption device 400 re-encrypts a ciphertext and changes the destination of the ciphertext, assuming a case where a message is encrypted with FE and is transmitted to the destination.

FE can be used not only to encrypt a message and transmit the encrypted message to the destination, but also to implement searchable encryption which allows searching without decrypting a ciphertext. When searchable encryption is implemented with FE, a specified search keyword can be changed with the algorithms described in the above embodiments.

In the above embodiments, a user capable of decryption is specified by attribute information which is set in a ciphertext. Then, the destination of the ciphertext is changed by changing the attribute information. When searchable encryption is implemented with FE, a part of attribute information which is set in a ciphertext specifies a user capable of searching, and a part of the remaining attribute information specifies a search keyword. Thus, it is possible to change the specified search keyword by changing the part that specifies the search keyword in the attribute information with the algorithms described in the above embodiments.

In the above embodiments, a single key generation device 100 generates a decryption key. However, it is possible to arrange that a single decryption key is generated by a plurality of key generation devices 100 by combining the algorithms of the above embodiments with a multi-authority scheme described in Non-Patent Literature 5.

In the above embodiments, adding an attribute category (increasing the value of d in the attribute format $n^{\rightarrow}$) requires that the public parameter be re-issued. However, it is possible to arrange that an attribute category can be added without re-issuing the public parameter by combining the algorithms of the above embodiments with an unbounded scheme described in Non-Patent Literature 6.

In the above embodiments, when the length of vectors used for inner-product encryption is defined as N, the size of the public parameter and the master secret key is proportional to $N^2$, and it takes time proportional to $N^2$ to generate or encrypt a decryption key to be given to a user. However, it is possible to reduce the size of the public parameter and the master secret key and reduce the time necessary for generating or encrypting the decryption key to be given to the user by combining the algorithms of the above embodiments with a scheme described in Non-Patent Literature 7.

In the above embodiments, it has been described that a key and a ciphertext are transmitted to a destination device. Alternatively, however, it may be arranged such that a key and a ciphertext are output to a storage medium such as a CD or DVD and a destination device reads the storage medium. Accordingly, "transmit" may be read as "output", and "receive" may be read as "obtain".

From the view point of security proof, in the above embodiments, ρ(i) for each integer i = 1, ..., L may be limited to a positive tuple (t, $v^{\rightarrow}$) or negative tuple ¬(t, $v^{\rightarrow}$) for respectively different identification information t.

In other words, when ρ(i) = (t, $v^{\rightarrow}$) or ρ(i) = ¬, (t, $v^{\rightarrow}$), let a function $\tilde{\rho}$ be map of {1, ..., L} → {1, ..., d} such that $\tilde{\rho}$(i) = t. In this case, $\tilde{\rho}$ may be limited to injection. Note that ρ(i) is ρ(i) in the access structure S := (M, ρ(i)) described above.

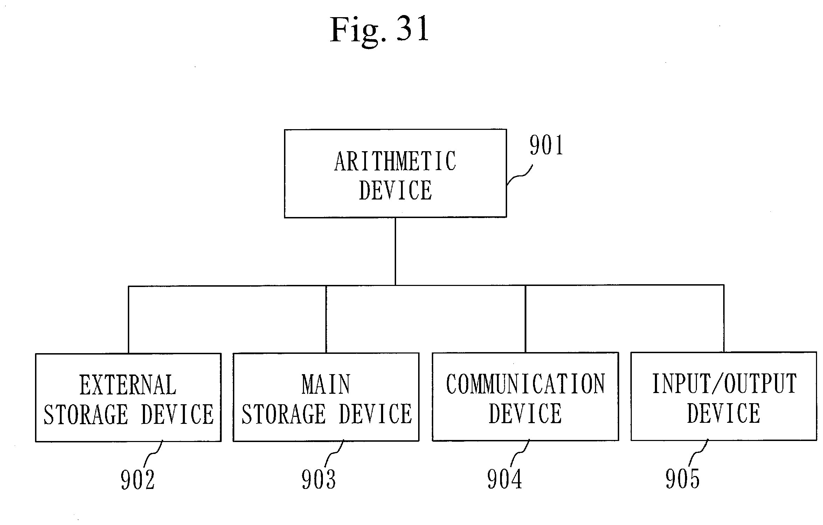

Fig. 31 is a diagram illustrating an example of a hardware configuration of each device (the key generation device 100, the encryption device 200, the decryption device 300, the re-encryption device 400, and the re-encrypted ciphertext decryption device 500) of the cryptographic system 10 presented in Embodiments 1 to 4.

Each device of the cryptographic system 10 is a computer, and each element of each device of the cryptographic system 10 can be implemented by a program.

As the hardware configuration of each device of the cryptographic system 10, an arithmetic device 901, an external storage device 902, a main storage device 903, a communication device 904, and an input/output device 905 are connected to a bus.

The arithmetic device 901 is a CPU (Central Processing Unit) or the like that executes programs. The external storage device 902 is, for example, a ROM (Read Only Memory), a flash memory, a hard disk device, or the like. The main storage device 903 is, for example, a RAM (Random Access Memory) or the like. The communication device 904 is, for example, a communication board or the like. The input/output device 905 is, for example, a mouse, a keyboard, a display device, or the like.

The programs are normally stored in the external storage device 902. The programs loaded into the main storage device 903 to be sequentially read and executed by the arithmetic device 901.

The programs are those that implement the functions described as the master key generation part 110, the master key storage part 120, the information input part 130, the decryption key generation part 140, the key transmission part 150, the public parameter receiving part 210, the information input part 220, the encryption part 230, the ciphertext transmission part 240, the decryption key receiving part 310, the information input part 320, the re-encryption key generation part 330, the re-encryption key transmission part 340, the ciphertext receiving part 350, the span program computation part 360, the complementary coefficient computation part 370, the pairing operation part 380, the message computation part 390, the public parameter receiving part 410, the ciphertext receiving part 420, the re-encryption key receiving part 430, the span program computation part 440, the complementary coefficient computation part 450, the pairing operation part 460, the re-encrypted ciphertext transmission part 470, the decryption key receiving part 510, the ciphertext receiving part 520, the span program computation part 530, the complementary coefficient computation part 540, the pairing operation part 550, the random number computation part 560, and the message computation part 570.

Further, an operating system (OS) is also stored in the external storage device 902. At least part of the OS is loaded into the main storage device 903, and the arithmetic device 901 executes the above-described programs while executing the OS.

Information, data, signal values, and variable values described as the "public parameter pk", the "master secret key sk", the "decryption keys $sk_S$ and $sk_\Gamma$", the "ciphertexts $ct^n_\Gamma$ and $ct^n_S$", the "re-encryption keys $rk^n_{\Gamma,S'}$ and $rk^n_{S,\Gamma'}$", the "re-encrypted ciphertexts $ct^n_{S'}$ and $ct^n_{\Gamma'}$", the "access structures S and S'", the "attribute sets $\Gamma$ and $\Gamma'$", the "message m", and so on in the description of Embodiments 1 to 4 are stored as files in the main storage device 903.

The configuration of Fig. 31 indicates an example of the hardware configuration of each device of the cryptographic system 10. The hardware configuration of each device of the cryptographic system 10 is not limited to the configuration of Fig. 31, and may be a different configuration.

**Reference Signs List**

10: cryptographic system, 100: key generation device, 110: master key generation part, 120: master key storage part, 130: information input part, 140: decryption key generation part, 141: random number generation part, 142: decryption key k* generation part, 143: f vector generation part, 144: s vector generation part, 150: key transmission part, 200: encryption device, 210: public parameter receiving part, 220: information input part, 230: encryption part, 231: f vector generation part, 232: s vector generation part, 233: random number generation part, 234: ciphertext c generation part, 240: ciphertext transmission part, 300: decryption device, 310: decryption key receiving part, 320: information input part, 330: re-encryption key generation part, 331: random number generation part, 332: encryption part, 333: decryption key k*rk generation part, 340: re-encryption key transmission part, 350: ciphertext receiving part, 360: span program computation part, 370: complementary coefficient computation part, 380: pairing operation part, 390: message computation part, 400: re-encryption device, 410: public parameter receiving part, 420: ciphertext receiving part, 430: re-encryption key receiving part, 440: span program computation part, 450: complementary coefficient computation part, 460: pairing operation part, 470: re-encrypted ciphertext transmission part, 500: re-encrypted ciphertext decryption device, 510: decryption key receiving part, 520: ciphertext receiving part, 530: span program computation part, 540: complementary coefficient computation part, 550: pairing operation part, 560: random number computation part, 570: message computation part

**Claims**

**1.** A cryptographic system (10) to implement a proxy re-encryption function in a cryptographic scheme according to which when two pieces of information correspond to each other, a ciphertext in which is set one of the two pieces of information is capable of being decrypted with a decryption key in which is set the other one of the two pieces of information, the cryptographic system comprising:

an encryption device (200) to output a ciphertext $ct_0$ in which is set one of attribute information $x_0$ and attribute information $v_0$ corresponding to each other;

a re-encryption key generation device (300) to acquire a decryption key $k^*$ in which is set the other one of the attribute information $x_0$ and the attribute information $v_0$, and output a re-encryption key $rk_1$ that includes a decryption key $k^{*rk}{}_0$ obtained by multiplying the acquired decryption key $k^*$ by a random number $r_1$, and includes a ciphertext $ct'_1$ obtained by encrypting the random number $r_1$ with one of attribute information $x_1$ and attribute information $v_1$ corresponding to each other being set; and

a re-encryption device (400) to output a re-encrypted ciphertext $ct_1$ that includes a session key $K'_0$ and the ciphertext $ct'_1$; the session key $K'_0$ generated by computing a pairing operation between the ciphertext $ct_0$ and the decryption key $k^{*rk}{}_0$.

2. The cryptographic system according to claim 1, further comprising:
a re-encrypted ciphertext decryption device (500) to acquire a decryption key $k^{*'}$ in which is set the other one of the attribute information $x_1$ and the attribute information $v_1$, generate the random number $r_1$ by computing a pairing operation between the ciphertext $ct'_1$ and the acquired decryption key $k^{*'}$, and generate a message m from the generated random number $r_1$ and the session key $K'_0$.

3. The cryptographic system according to claim 2,
wherein the re-encrypted ciphertext decryption device outputs a re-encryption key $rk_2$ that includes a decryption key $k^{*rk}{}_1$ obtained by converting the decryption key $k^{*'}$ with a random number $r_2$, and includes a ciphertext $ct'_2$ obtained by encrypting the random number $r_2$ with one of attribute information $x_2$ and attribute information $v_2$ corresponding to each other being set, and
wherein the re-encryption device outputs a re-encrypted ciphertext $ct_2$ that includes a session key $K'_1$ generated by computing a pairing operation between the re-encrypted ciphertext $ct_1$ and the decryption key $k^{*rk}{}_1$, and includes the ciphertext $ct'_2$.

4. The cryptographic system according to any one of claims 1 to 3,
wherein the encryption device outputs the ciphertext $ct_0$ indicated in Formula 1,
wherein the re-encryption key generation device acquires the decryption key $k^*$ indicated in Formula 2, and outputs the re-encryption key $rk_1$ that includes the decryption key $k^{*rk}{}_0$ indicated in Formula 3 and the ciphertext $ct'_1$ indicated in Formula 4, and
wherein the re-encryption device outputs the re-encrypted ciphertext $ct_1$ that includes the session key $K'_0$ indicated in Formula 5

[Formula 1]

$$c_{0.0} := (\zeta, -s_0)_{B_{0.0}},$$

$$\text{for } i = 1, ..., L,$$

$$\text{if } \rho(i) = (t, \vec{v_i}),$$

$$c_{i.0} := (\overbrace{s_i \vec{e}_{t,1} + \theta_{i.0} \vec{v_t}}^{n_t})_{B_{t.0}},$$

$$\text{if } \rho(i) = \neg(t, \vec{v_i}),$$

$$c_{i.0} := (\overbrace{s_i \vec{v_t}}^{n_t})_{B_{t.0}},$$

$$c_{T.0} := m \cdot g_{T.0}^{\zeta},$$

$$ct_0 := (c_{0.0}, \{c_{i.0}\}_{i=1,...,L}, c_{T.0})$$

**where**

$$\vec{f} \xleftarrow{\mathsf{U}} F_q^r,$$

$$\vec{s}^{\mathbf{T}} := (s_1, ..., s_L)^{\mathbf{T}} := M \cdot \vec{f}^{\mathbf{T}},$$

$$s_0 := \vec{1} \cdot \vec{f}^{\mathbf{T}},$$

$$\zeta, \theta_{i.0} \xleftarrow{\mathsf{U}} F_q,$$

$$v_0 := \vec{v_i} := (v_{i.1}, ..., v_{i.n_t}),$$

$M$ is a matrix of $L$ rows and $r$ columns, and
$n_t$ is an integer of 1 or more,

[Formula 2]

$$k_{0.0}^{*} := (1, \delta_0)_{B_{0.0}^{*}},$$

$$k_{t.0}^{*} := (\overbrace{\delta_0 \vec{x}_t}^{n_t})_{B_{t.0}^{*}} \quad \text{for} \quad (t, \vec{x}_t), \in \Gamma,$$

$$k^{*} := (k_{0.0}^{*}, \{k_{t.0}^{*}\}_{(t, \vec{x}_t), \in \Gamma})$$

**where**

$$\delta_0 \xleftarrow{\mathsf{U}} F_q,$$

$$\Gamma = (\{(t, \vec{x}_t), 1 \leq t \leq d\},$$

$$x_0 := \vec{x}_t := (x_{t,1}, ..., x_{t,n_t})$$

[Formula 3]

$$k_{0.0}^{*\mathsf{rk}} := (r_1 k_{0.0}^{*} + (0, \delta_0^{\mathsf{ran}})_{B_{0.0}^{*}}),$$

$$k_{t.0}^{*\mathsf{rk}} := (r_1 k_{t.0}^{*} + (\delta_0^{\mathsf{ran}} \vec{x}_t)_{B_{t.0}^{*}})) \quad \text{for} \ (t, \vec{x}_t) \in \Gamma,$$

$$k_0^{*\mathsf{rk}} := (k_{0.0}^{*\mathsf{rk}}, \{k_{t.0}^{*\mathsf{rk}}\}_{(t, \vec{x}_t) \in \Gamma})$$

**where**

$$\delta_0^{\mathsf{ran}} \xleftarrow{\mathsf{U}} F_q$$

[Formula 4]

$$c_{0.1} := (\zeta', -s_0')_{B_{0.1}},$$

$$\text{for } i = 1, \ldots, L',$$

$$\text{if } \rho'(i) = (t, \vec{v}_i'),$$

$$c_{i.1} := (\overbrace{s_i'\vec{e}_{t,1} + \theta_{i.1}'\vec{v}_t'}^{n_t})_{B_{t.1}},$$

$$\text{if } \rho'(i) = \neg(t, \vec{v}_i'),$$

$$c_{i.1} := (\overbrace{s_i'\vec{v}_t'}^{n_t})_{B_{t.1}},$$

$$c_{T.1} := (E_1(\eta_1)) \cdot g_{T.1}^{\zeta'},$$

$$ct_1' := (c_{0.1}, \{c_{i.1}\}_{i=1,\ldots,L'}, c_{T.1})$$

**where**

$$\vec{f}' \xleftarrow{\ \cup\ } F_q^{r'},$$

$$\vec{s}'^{\mathbf{T}} := (s_1', \ldots, s_L')^{\mathbf{T}} := M' \cdot \vec{f}'^{\mathbf{T}},$$

$$s_0' := \vec{1} \cdot \vec{f}'^{\mathbf{T}},$$

$$\zeta', \theta_{i.1}' \xleftarrow{\ \cup\ } F_q,$$

$$v_1 := \vec{v}_i' := (v_{i.1}', \ldots, v_{i.n_t}'),$$

$E_1$ is an encode function,

[Formula 5]

$$K_0' := e(c_{0.0}, k_{0.0}^{*\mathrm{rk}}) \cdot \prod_{i \in I \wedge \rho(i)=(t,\vec{v}_i)} e(c_{i.0}, k_{t.0}^{*\mathrm{rk}})^{\alpha_i}$$

$$\cdot \prod_{i \in I \wedge \rho(i)=\neg(t,\vec{v}_i)} e(c_{i.0}, k_{t.0}^{*\mathrm{rk}})^{\alpha_i/(\vec{v}_i \cdot \vec{x}_t)}$$

where

$$\vec{1} = \sum_{i \in I} \alpha_i M_i$$

where $M_i$ is the $i$-th row of $M$,

and $I \subseteq \{ i \in \{1,...,L\} \mid [\rho(i) = (t,\vec{v}_i) \wedge (t,\vec{x}_t) \in \Gamma \wedge \vec{v}_i \cdot \vec{x}_t = 0]$

$$\vee [\rho(i) = \neg(t,\vec{v}_i) \wedge (t,\vec{x}_t) \in \Gamma \wedge \vec{v}_i \cdot \vec{x}_t \neq 0]\}.$$

5. The cryptographic system according to any one of claims 1 to 3,
wherein the encryption device outputs the ciphertext $ct_0$ indicated in Formula 6,
wherein the re-encryption key generation device acquires the decryption key k* indicated in Formula 7, and outputs the re-encryption key $rk_1$ that includes the decryption key $k^{*rk}_0$ indicated in Formula 8 and the ciphertext $ct'_1$ indicated in Formula 9, and
wherein the re-encryption device outputs the re-encrypted ciphertext $ct_1$ that includes the session key $K'_0$ indicated in Formula 10

[Formula 6]

$$c_{0.0} := (\zeta, -s_0)_{B_0},$$

$$\text{for } i = 1, ..., L,$$

$$\text{if } \rho(i) = (t, \vec{v}_i),$$

$$c_{i.0} := (\overbrace{\mu_0(0, -1)}^{2}, \overbrace{s_i \vec{e}_{t,1} + \theta_{i.0} \vec{v}_t}^{n_t})_{B_t},$$

$$\text{if } \rho(i) = \neg(t, \vec{v}_i),$$

$$c_{i.0} := (\overbrace{\mu_0(0, -1)}^{2}, \overbrace{s_i \vec{v}_t}^{n_t})_{B_t},$$

$$c_{T.0} := m \cdot g_T^{\zeta},$$

$$ct_0 := (c_{0.0}, \{c_{i.0}\}_{i=1,...,L}, c_{T.0})$$

**where**

$$\vec{f} \xleftarrow{\mathsf{U}} F_q^r,$$

$$\vec{s}^{\mathbf{T}} := (s_1, ..., s_L)^{\mathbf{T}} := M \cdot \vec{f}^{\mathbf{T}},$$

$$s_0 := \vec{1} \cdot \vec{f}^{\mathbf{T}},$$

$$\zeta, \theta_{i.0}, \mu_0 \xleftarrow{\mathsf{U}} F_q,$$

$$v_0 := \vec{v}_i := (v_{i.1}, ..., v_{i.n_t}),$$

$M$ is a matrix of $L$ rows and $r$ columns, and
$n_t$ is an integer of 1 or more,

[Formula 7]

$$k^*_{0.0} := (1, \delta_0)_{B^*_0},$$

$$k^*_{t.0} := (\overbrace{0^2}^{2}, \overbrace{\delta_0 \vec{x}_t}^{n_t})_{B^*_t} \quad \text{for } (t, \vec{x}_t), \in \Gamma,$$

$$k^* := (k^*_{0.0}, \{k^*_{t.0}\}_{(t, \vec{x}_t), \in \Gamma})$$

**where**

$$\delta_0 \xleftarrow{\ \mathsf{U}\ } F_q,$$

$$\Gamma = (\{(t, \vec{x}_t), 1 \le t \le d\},$$

$$x_0 := \vec{x}_t := (x_{t,1}, ..., x_{t,n_t}),$$

[Formula 8]

$$k^{*rk}_{0.0} := (r_1 k^*_{0.0} + (0, \delta^{ran}_0)_{B^*_0}),$$

$$k^{*rk}_{t.0} := (r_1 k^*_{t.0} + (\sigma_0(1,0), \delta^{ran}_0 \vec{x}_t)_{B^*_t})) \quad \text{for } (t, \vec{x}_t) \in \Gamma,$$

$$k^{*rk}_0 := (k^{*rk}_{0.0}, \{k^{*rk}_{t.0}\}_{(t, \vec{x}_t) \in \Gamma})$$

**where**

$$\delta^{ran}_0, \sigma_0 \xleftarrow{\ \mathsf{U}\ } F_q$$

[Formula 9]

$$c_{0.1} := (\zeta', -s_0')_{\mathbf{B}_0},$$

$$\text{for } i = 1,\ldots,L',$$

$$\text{if } \rho'(i) = (t, \vec{v}_i'),$$

$$c_{i.1} := ( \overbrace{\mu_1(1,-1)}^{2}, \overbrace{s_i'\vec{e}_{t,1} + \theta_{i.1}'\vec{v}_t'}^{n_t} )_{\mathbf{B}_t},$$

$$\text{if } \rho'(i) = \neg(t, \vec{v}_i'),$$

$$c_{i.1} := ( \overbrace{\mu_1(1,-1)}^{2}, \overbrace{s_i'\vec{v}_t'}^{n_t} )_{\mathbf{B}_t},$$

$$c_{T.1} := (E_1(r_1)) \cdot g_T^{\zeta'},$$

$$ct_1' := (c_{0.1}, \{c_{i.1}\}_{i=1,\ldots,L'}, c_{T.1})$$

**where**

$$\vec{f}' \xleftarrow{\ \mathsf{U}\ } \mathbb{F}_q^{r'},$$

$$\vec{s}'^{\mathbf{T}} := (s_1',\ldots,s_L')^{\mathbf{T}} := M' \cdot \vec{f}'^{\mathbf{T}},$$

$$s_0' := \vec{1} \cdot \vec{f}'^{\,\mathbf{T}},$$

$$\zeta', \theta_{i.1}', \mu_1 \xleftarrow{\ \mathsf{U}\ } \mathbb{F}_q,$$

$$v_1 := \vec{v}_i' := (v_{i.1}',\ldots,v_{i.n_t}'),$$

$E_1$ is an encode function,

[Formula 10]

$$K_0' := e(c_{0.0}, k_{0.0}^{*\mathrm{rk}}) \cdot \prod_{i \in I \wedge \rho(i)=(t,\vec{v}_i)} e(c_{i.0}, k_{t.0}^{*\mathrm{rk}})^{\alpha_i}$$

$$\cdot \prod_{i \in I \wedge \rho(i)=\neg(t,\vec{v}_i)} e(c_{i.0}, k_{t.0}^{*\mathrm{rk}})^{\alpha_i/(\vec{v}_i \cdot \vec{x}_t)}$$

where

$$\vec{1} = \sum_{i \in I} \alpha_i M_i$$

where $M_i$ is the $i$-th row of $M$,

and $I \subseteq \{ i \in \{1,...,L\} \mid [\rho(i) = (t,\vec{v}_i) \wedge (t,\vec{x}_t) \in \Gamma \wedge \vec{v}_i \cdot \vec{x}_t = 0]$

$\vee [\rho(i) = \neg(t,\vec{v}_i) \wedge (t,\vec{x}_t) \in \Gamma \wedge \vec{v}_i \cdot \vec{x}_t \neq 0]\}$.

6. The cryptographic system according to any one of claims 1 to 3,
   wherein the encryption device outputs the ciphertext $ct_0$ indicated in Formula 11,
   wherein the re-encryption key generation device acquires the decryption key $k^*$ indicated in Formula 12, and outputs the re-encryption key $rk_1$ that includes the decryption key $k^{*rk}_0$ indicated in Formula 13 and the ciphertext $ct'_1$ indicated in Formula 14, and
   wherein the re-encryption device outputs the re-encrypted ciphertext $ct_1$ that includes the session key $K'_0$ indicated in Formula 15

[Formula 11]

$$c_{0.0} := (\zeta, \delta_0)_{B_{0.0}},$$

$$c_{t.0} := (\overbrace{\delta_0 \vec{x}_t}^{n_t})_{B_{t.0}} \text{ for } (t, \vec{x}_t), \in \Gamma,$$

$$c_{T.0} := m \cdot g_{T.0}^{\zeta},$$

$$ct_0 := (c_{0.0}, \{c_{t.0}\}_{(t,\vec{x}_t),\in\Gamma}, c_{T.0})$$

**where**

$$\zeta, \delta_0 \xleftarrow{\mathsf{U}} F_q,$$

$$\Gamma = (\{(t, \vec{x}_t), 1 \le t \le d\},$$

$$x_0 := \vec{x}_t := (x_{t,1}, ..., x_{t,n_t}),$$

$n_t$ is an integer of 1 or more,

[Formula 12]

$$k_{0.0}^* := (1, -s_0)_{\mathrm{B}_{0.0}^*},$$

for $i = 1, ..., L,$

  if $\rho(i) = (t, \vec{v}_i),$

$$k_{i.0} := (\overbrace{s_i \vec{e}_{t,1} + \theta_i \vec{v}_t}^{n_t})_{\mathrm{B}_{t.0}^*},$$

  if $\rho(i) = \neg(t, \vec{v}_i),$

$$k_{i.0} := (\overbrace{s_i \vec{v}_t}^{n_t})_{\mathrm{B}_{t.0}^*},$$

$$k^* := (k_{0.0}^*, \{k_{i.0}^*\}_{i=1,...,L})$$

**where**

$$\vec{f} \xleftarrow{\;\mathsf{U}\;} \mathrm{F}_q^r,$$

$$\vec{s}^{\mathbf{T}} := (s_1, ..., s_L)^{\mathbf{T}} := M \cdot \vec{f}^{\mathbf{T}},$$

$$s_0 := \vec{1} \cdot \vec{f}^{\mathbf{T}},$$

$$\zeta, \theta_{i.0} \xleftarrow{\;\mathsf{U}\;} \mathrm{F}_q,$$

$$v_0 := \vec{v}_i := (v_{i.1}, ..., v_{i.n_t}),$$

$M$ is a matrix of $L$ rows and $r$ columns,

[Formula 13]

$$k_{0.0}^{*\mathsf{rk}} := r_1 k_{0.0}^*,$$

$$k_{i.0}^{*\mathsf{rk}} := r_1 k_{i.0}^* \text{ for } i = 1, ..., L,$$

$$k_0^{*\mathsf{rk}} := (k_{0.0}^{*\mathsf{rk}}, \{k_{i.0}^{*\mathsf{rk}}\}_{i=1,...,L})$$

[Formula 14]

$$c_{0.1} := (\zeta', \delta_1)_{B_{0.1}},$$

$$c_{t.1} := (\overbrace{\delta_1 \vec{x}_t'}^{n_t})_{B_{t.1}} \quad \text{for} \quad (t, \vec{x}_t') \in \Gamma,$$

$$c_{T.1} := m \cdot g_{T.1}^{\zeta},$$

$$ct_1' := (c_{0.1}, \{c_{t.1}\}_{(t,\vec{x}_t') \in \Gamma}, c_{T.1})$$

**where**

$$\zeta', \delta_1 \xleftarrow{\;\mathsf{U}\;} F_q,$$

$$\Gamma' = (\{(t, \vec{x}_t'), 1 \le t \le d\},$$

$$x_1 := \vec{x}_t' := (x_{t,1}', ..., x_{t,n_t}'),$$

[Formula 15]

$$K_0' := e(c_{0.0}, k_{0.0}^{*\mathrm{rk}}) \cdot \prod_{i \in I \wedge \rho(i) = (t, \vec{v}_i)} e(c_{t.0}, k_{i.0}^{*\mathrm{rk}})^{\alpha_i}$$

$$\cdot \prod_{i \in I \wedge \rho(i) = \neg(t, \vec{v}_i)} e(c_{t.0}, k_{i.0}^{*\mathrm{rk}})^{\alpha_i / (\vec{v}_i \cdot \vec{x}_i)}$$

where

$$\vec{1} = \sum_{i \in I} \alpha_i M_i$$

where $M_i$ is the $i$-th row of $M$,

and $I \subseteq \{ i \in \{1, ..., L\} \mid [\rho(i) = (t, \vec{v}_i) \wedge (t, \vec{x}_t) \in \Gamma \wedge \vec{v}_i \cdot \vec{x}_t = 0]$

$$\vee [\rho(i) = \neg(t, \vec{v}_i) \wedge (t, \vec{x}_t) \in \Gamma \wedge \vec{v}_i \cdot \vec{x}_t \ne 0]\}.$$

7. The cryptographic system according to any one of claims 1 to 3,
   wherein the encryption device outputs the ciphertext $ct_0$ indicated in Formula 16,
   wherein the re-encryption key generation device acquires the decryption key k* indicated in Formula 17, and outputs the re-encryption key $rk_1$ that includes the decryption key $k^{*rk}_0$ indicated in Formula 18 and the ciphertext $ct'_1$ indicated in Formula 19, and

wherein the re-encryption device outputs the re-encrypted ciphertext $ct_1$ that includes the session key $K'_0$ indicated in Formula 20

[Formula 16]

$$c_{0.0} := (\zeta, \delta_0)_{B_0},$$

$$c_{t.0} := (\overbrace{\sigma_0(1,0)}^{2}, \overbrace{\delta_0 \vec{x}_t}^{n_t})_{B_t} \ \text{for} \ (t, \vec{x}_t), \in \Gamma,$$

$$c_{T.0} := m \cdot g_T^{\zeta},$$

$$ct_0 := (c_{0.0}, \{c_{t.0}\}_{(t,\vec{x}_t), \in \Gamma}, c_{T.0})$$

**where**

$$\zeta, \delta_0, \sigma_0 \xleftarrow{\ \mathsf{U}\ } F_q,$$

$$\Gamma = (\{(t, \vec{x}_t), 1 \leq t \leq d\},$$

$$x_0 := \vec{x}_t := (x_{t,1}, ..., x_{t,n_t}),$$

$n_t$ is an integer 1 or more,

[Formula 17]

$$k^*_{0.0} := (1, -s_0)_{\mathrm{B}^*_0},$$

$$\text{for } i = 1, \ldots, L,$$

$$\quad \text{if } \rho(i) = (t, \vec{v}_i),$$

$$k_{i.0} := (\overbrace{\mu_0(0, -1)}^{2}, \overbrace{s_i \vec{e}_{t,1} + \theta_i \vec{v}_t}^{n_t})_{\mathrm{B}^*_t},$$

$$\quad \text{if } \rho(i) = \neg(t, \vec{v}_i),$$

$$k_{i.0} := (\overbrace{\mu_0(0, -1)}^{2}, \overbrace{s_i \vec{v}_t}^{n_t})_{\mathrm{B}^*_t},$$

$$k^* := (k^*_{0.0}, \{k^*_{i.0}\}_{i=1,\ldots,L})$$

**where**

$$\vec{f} \xleftarrow{\ \mathsf{U}\ } \mathbb{F}^r_q,$$

$$\vec{s}^{\mathbf{T}} := (s_1, \ldots, s_L)^{\mathbf{T}} := M \cdot \vec{f}^{\mathbf{T}},$$

$$s_0 := \vec{1} \cdot \vec{f}^{\mathbf{T}},$$

$$\zeta, \theta_{i.0}, \mu_0 \xleftarrow{\ \mathsf{U}\ } \mathbb{F}_q,$$

$$v_0 := \vec{v}_i := (v_{i.1}, \ldots, v_{i.n_t}),$$

$M$ is a matrix of $L$ rows and $r$ columns,

[Formula 18]

$$k^{*\mathrm{rk}}_{0.0} := r_1 k^*_{0.0},$$

$$k^{*\mathrm{rk}}_{i.0} := r_1 k^*_{i.0} \quad \text{for } i = 1, \ldots, L,$$

$$k^{*\mathrm{rk}}_0 := (k^{*\mathrm{rk}}_{0.0}, \{k^{*\mathrm{rk}}_{i.0}\}_{i=1,\ldots,L})$$

[Formula 19]

$$c_{0.1} := (\zeta', \delta_1)_{B_0},$$

$$c_{t.1} := (\overbrace{\sigma_1(1,1)}^{2}, \overbrace{\delta_1 \vec{x}_t'}^{n_t})_{B_t} \quad \text{for } (t, \vec{x}_t'), \in \Gamma,$$

$$c_{T.1} := m \cdot g_T^{\zeta},$$

$$ct_1' := (c_{0.1}, \{c_{t.1}\}_{(t,\vec{x}_t'),\in\Gamma}, c_{T.1})$$

**where**

$$\zeta', \delta_1, \sigma_1 \xleftarrow{\ \cup\ } F_q,$$

$$\Gamma' = (\{(t, \vec{x}_t'), 1 \le t \le d\},$$

$$x_1 := \vec{x}_t' := (x_{t,1}', ..., x_{t,n_t}'),$$

[Formula 20]

$$K_0' := e(c_{0.0}, k_{0.0}^{*\mathrm{rk}}) \cdot \prod_{i \in I \wedge \rho(i)=(t,\vec{v}_i)} e(c_{t.0}, k_{i.0}^{*\mathrm{rk}})^{\alpha_i}$$

$$\cdot \prod_{i \in I \wedge \rho(i)=\neg(t,\vec{v}_i)} e(c_{t.0}, k_{i.0}^{*\mathrm{rk}})^{\alpha_i/(\vec{v}_i \cdot \vec{x}_t)}$$

where

$$\vec{1} = \sum_{i \in I} \alpha_i M_i$$

where $M_i$ is the $i$-th row of $M$,

and $I \subseteq \{ i \in \{1, ..., L\} \mid [\rho(i) = (t, \vec{v}_i) \wedge (t, \vec{x}_t) \in \Gamma \wedge \vec{v}_i \cdot \vec{x}_t = 0]$

$$\vee [\rho(i) = \neg(t, \vec{v}_i) \wedge (t, \vec{x}_t) \in \Gamma \wedge \vec{v}_i \cdot \vec{x}_t \ne 0] \}.$$

8. A re-encryption key generation device (300) in a cryptographic system (10) to implement a proxy re-encryption function in a cryptographic scheme according to which when two pieces of information correspond to each other, a ciphertext in which is set one of the two pieces of information is capable of being decrypted with a decryption key in which is set the other one of the two pieces of information, the re-encryption key generation device comprising:

a decryption key acquisition part (310) to acquire a decryption key k* in which is set one of attribute information

$x_0$ and attribute information $v_0$ corresponding to each other; and

a re-encryption key output part (340) to output a re-encryption key $rk_1$ that includes a decryption key $k^{*rk}_0$ obtained by multiplying the decryption key $k^*$ by a random number $r_1$, and includes a ciphertext $ct'_1$ obtained by encrypting the random number $r_1$ with one of attribute information $x_1$ and attribute information $v_1$ corresponding to each other being set.

**9.** A re-encryption device (400) in a cryptographic system (10) to implement a proxy re-encryption function in a cryptographic scheme according to which when two pieces of information correspond to each other, a ciphertext in which is set one of the two pieces of information is capable of being decrypted with a decryption key in which is set the other one of the two pieces of information, the re-encryption device comprising:

a ciphertext acquisition part (420) to acquire a ciphertext $ct_0$ in which is set one of attribute information $x_0$ and attribute information $v_0$ corresponding to each other;

a re-encryption key acquisition part (430) to acquire a re-encryption key $rk_1$ that includes a decryption key $k^{*rk}_0$ obtained by multiplying a decryption key $k^*$ in which is set the other one of the attribute information $x_0$ and the attribute information $v_0$ by a random number $r_1$, and includes a ciphertext $ct'_1$ obtained by encrypting the random number $r_1$ with one of attribute information $x_1$ and attribute information $v_1$ corresponding to each other being set; and

a re-encrypted ciphertext output part (470) to output a re-encrypted ciphertext $ct_1$ that includes a session key $K'_0$ and the ciphertext $ct'_1$; the session key $K'_0$ generated by computing a pairing operation between the ciphertext $ct_0$ and the decryption key $k^{*rk}_0$.

**10.** A cryptographic program for implementing a proxy re-encryption function in a cryptographic scheme according to which when two pieces of information correspond to each other, a ciphertext in which is set one of the two pieces of information is capable of being decrypted with a decryption key in which is set the other one of the two pieces of information, the cryptographic program causing a computer to execute:

an encryption process of outputting a ciphertext $ct_0$ in which is set one of attribute information $x_0$ and attribute information $v_0$ corresponding to each other;

a re-encryption key generation process of acquiring a decryption key $k^*$ in which is set the other one of the attribute information $x_0$ and the attribute information $v_0$, and outputting a re-encryption key $rk_1$ that includes a decryption key $k^{*rk}_0$ obtained by multiplying the acquired decryption key $k^*$ by a random number $r_1$, and includes a ciphertext $ct'_1$ obtained by encrypting the random number $r_1$ with one of attribute information $x_1$ and attribute information $v_1$ corresponding to each other being set; and

a re-encryption process of outputting a re-encrypted ciphertext $ct_1$ that includes a session key $K'_0$ and the ciphertext $ct'_1$; the session key $K'_0$ generated by computing a pairing operation between the ciphertext $ct_0$ with the decryption key $k^{*rk}_0$.

**Patentansprüche**

**1.** Kryptographisches System (10), um eine Proxy-Wiederverschlüsselungsfunktion zu implementieren in einem kryptographischen Schema, gemäß dem, wenn zwei Informationen einander entsprechen, ein Chiffretext, in dem eine der zwei Informationen definiert ist, entschlüsselt werde kann mit einem Entschlüsselungsschlüssel, in dem die andere der zwei Informationen definiert ist, wobei das kryptographische System umfasst:

eine Verschlüsselungseinrichtung (200), um einen Chiffretext $ct_0$, in dem eine von Attributinformationen $x_0$ und Attributinformationen $v_0$, die einander entsprechen, definiert ist;

eine Wiederverschlüsselungsschlüssel-Erzeugungseinrichtung (300), um einen Entschlüsselungsschlüssel k* zu erwerben, in dem die andere der Attributinformation $x_0$ und der Attributinformation $v_0$ definiert ist, und einen Wiederverschlüsselungsschlüssel $rk_1$ auszugeben, der einen Entschlüsselungsschlüssel $k^{*rk}_0$ enthält, der erhalten wird durch Multiplizieren des erworbenen Entschlüsselungsschlüssels k* mit einer Zufallszahl $r_1$, und einen Chiffretext $ct'_1$ enthält, der erhalten wird durch Verschlüsseln der Zufallszahl $r_1$ mit einer der definierten einander entsprechenden Attributinformation $x_1$ und Attributinformationen $v_1$; und eine Wiederverschlüsselungseinrichtung (400), um einen wiederverschlüsselten Chiffretext $ct_1$ auszugeben, der einen Sitzungsschlüssel $K'_0$ und den Chiffretext $ct'_1$ enthält; wobei der Sitzungsschlüssel $K'_0$ erzeugt wird durch Berechnen einer Pairing-Operation zwischen dem Chiffretext $ct_0$ und dem Entschlüsselungsschlüssel $k^{*rk}_0$.

2. Kryptographisches System nach Anspruch 1, ferner umfassend:
eine Wiederverschlüsselter-Chiffretext-Entschlüsselungseinrichtung (500), um einen Entschlüsselungsschlüssel $k^{*'}$, in dem die andere der Attributinformation $x_1$ und der Attributinformation $v_1$ definiert ist, zu erwerben, die Zufallszahl $r_1$ zu erzeugen durch Berechnen einer Pairing-Operation zwischen dem Chiffretext $ct'_1$ und dem erworbenen Entschlüsselungsschlüssel $k^{*'}$, und eine Nachricht m zu erzeugen aus der erzeugten Zufallszahl $r_1$ und dem Sitzungsschlüssel $K'_0$.

3. Kryptographisches System nach Anspruch 2,
wobei die Wiederverschlüsselter-Chiffretext-Entschlüsselungseinrichtung einen Wiederverschlüsselungsschlüssel $rk_2$ ausgibt, der einen Entschlüsselungsschlüssel $k^{*rk}{}_1$ enthält, der erhalten wird durch Umwandeln des Entschlüsselungsschlüssels $k^{*'}$ mit einer Zufallszahl $r_2$, und einen Chiffretext $ct'_2$ enthält, der erhalten wird durch Verschlüsseln der Zufallszahl $r_2$ mit einer der einander entsprechenden definierten Attributinformation $x_2$ und Attributinformation $v_2$, und
wobei die Wiederverschlüsselungseinrichtung einen wiederverschlüsselten Chiffretext $ct_2$ ausgibt, der einen Sitzungsschlüssel $K'_1$ enthält, der erzeugt wird durch Berechnen einer Pairing-Operation zwischen dem wiederverschlüsselten Chiffretext $ct_1$ und dem Entschlüsselungsschlüssel $k^{*rk}{}_1$, und der den Chiffretext $ct^1{}_2$ enthält.

4. Kryptographisches System nach einem der Ansprüche 1 bis 3,
wobei die Verschlüsselungseinrichtung den in Formel 1 angegebenen Chiffretext $ct_0$ ausgibt;
wobei die Wiederverschlüsselungsschlüssel-Erzeugungseinrichtung den in Formel 2 angegebenen Entschlüsselungsschlüssel $k^*$ erwirbt und den Wiederverschlüsselungsschlüssel $rk_1$ ausgibt, der den in Formel 3 angegebenen Entschlüsselungsschlüssel $k^{*rk}{}_0$ und den in Formel 4 angegebenen Chiffretext $ct'_1$ enthält; und
wobei die Wiederverschlüsselungseinrichtung den wiederverschlüsselten Chiffretext $ct_1$ ausgibt, der den in Formel 5 angegebenen Sitzungsschlüssel $K'_0$ enthält

[Formel 1]

$$c_{0.0} := (\zeta, -s_0)_{B_{0.0}},$$

für $i = 1, ..., L,$

falls $\rho(i) = (t, \vec{v}_i),$

$$c_{i.0} := (\overbrace{s_i \vec{e}_{t,1} + \theta_{i.0} \vec{v}_t}^{n_t})_{B_{t.0}},$$

falls $\rho(i) = \neg(t, \vec{v}_i),$

$$c_{i.0} := (\overbrace{s_i \vec{v}_t}^{n_t})_{B_{t.0}},$$

$$c_{T.0} := m \cdot g_{T.0}^{\zeta},$$

$$ct_0 := (c_{0.0}, \{c_{i.0}\}_{i=1,...,L}, c_{T.0})$$

**wobei**

$$\vec{f} \xleftarrow{\;\;U\;\;} F_q^r,$$

$$\vec{s}^{\mathbf{T}} := (s_1, ..., s_L)^{\mathbf{T}} := M \cdot \vec{f}^{\mathbf{T}},$$

$$s_0 := \vec{1} \cdot \vec{f}^{\mathbf{T}},$$

$$\zeta, \theta_{i.0} \xleftarrow{\;\;U\;\;} F_q,$$

$$v_0 := \vec{v}_i := (v_{i.1}, ..., v_{i.n_t}),$$

M eine Matrix ist aus L Zeilen und r Spalten; und
$n_t$ eine ganze Zahl gleich 1 oder mehr ist,

[Formel 2]

$$k_{0.0}^* := (1, \delta_0)_{B_{0.0}^*},$$

$$k_{t.0}^* := (\overbrace{\delta_0 \vec{x}_t}^{n_t})_{B_{t.0}^*} \text{ für } (t, \vec{x}_t), \in \Gamma,$$

$$k^* := (k_{0.0}^*, \{k_{t.0}^*\}_{(t, \vec{x}_t), \in \Gamma})$$

**wobei**

$$\delta_0 \xleftarrow{\text{U}} F_q,$$
$$\Gamma = (\{(t, \vec{x}_t), 1 \le t \le d\},$$
$$x_0 := \vec{x}_t := (x_{t,1}, \ldots, x_{t,n_t})$$

[Formel 3]

$$k_{0.0}^{*\text{rk}} := (r_1 k_{0.0}^* + (0, \delta_0^{\text{ran}})_{B_{0.0}^*}),$$

$$k_{t.0}^{*\text{rk}} := (r_1 k_{t.0}^* + (\delta_0^{\text{ran}} \vec{x}_t)_{B_{t.0}^*})) \text{ für } (t, \vec{x}_t) \in \Gamma,$$

$$k_0^{*\text{rk}} := (k_{0.0}^{*\text{rk}}, \{k_{t.0}^{*\text{rk}}\}_{(t, \vec{x}_t) \in \Gamma})$$

**wobei**

$$\delta_0^{\text{ran}} \xleftarrow{\text{U}} F_q$$

[Formel 4]

$$c_{0.1} := (\zeta', -s_0')_{B_{0.1}},$$

für $i = 1, \ldots, L'$,

falls $\rho'(i) = (t, \vec{v}_i')$,

$$c_{i.1} := (\overbrace{s_i'\vec{e}_{t,1} + \theta_{i.1}'\vec{v}_t'}^{n_t})_{B_{t.1}},$$

falls $\rho'(i) = \neg(t, \vec{v}_i')$,

$$c_{i.1} := (\overbrace{s_i'\vec{v}_t'}^{n_t})_{B_{t.1}},$$

$$c_{T.1} := (E_1(\eta_1)) \cdot g_{T.1}^{\zeta'},$$

$$ct_1' := (c_{0.1}, \{c_{i.1}\}_{i=1,\ldots,L'}, c_{T.1})$$

**wobei**

$$\vec{f}' \xleftarrow{\ U\ } F_q^{r'},$$

$$\vec{s}'^{T} := (s_1', \ldots, s_L')^{T} := M' \cdot \vec{f}'^{T},$$

$$s_0' := \vec{1} \cdot \vec{f}'^{T},$$

$$\zeta', \theta_{i.1}' \xleftarrow{\ U\ } F_q,$$

$$v_1 := \vec{v}_i' := (v_{i.1}', \ldots, v_{i.n_t}'),$$

$E_1$ eine Codierungsfunktion ist,

[Formel 5]

$$K_0' := e(c_{0.0}, k_{0.0}^{*rk}) \cdot \prod_{i \in I \wedge \rho(i)=(t,\vec{v}_i)} e(c_{i.0}, k_{t.0}^{*rk})^{\alpha_i}$$
$$\cdot \prod_{i \in I \wedge \rho(i)=\neg(t,\vec{v}_i)} e(c_{i.0}, k_{t.0}^{*rk})^{\alpha_i/(\vec{v}_i \cdot \vec{x}_i)}$$

**wobei**

$$\vec{1} = \sum_{i \in I} \alpha_i M_i$$

wobei $M_i$ die i-te Zeile von M ist, und

$$I \subseteq \{ i \in \{1, \ldots, L\} \mid [\rho(i) = (t, \vec{v}_i) \wedge (t, \vec{x}_t) \in \Gamma \wedge \vec{v}_i \cdot \vec{x}_t = 0]$$
$$\vee [\rho(i) = \neg(t, \vec{v}_i) \wedge (t, \vec{x}_t) \in \Gamma \wedge \vec{v}_i \cdot \vec{x}_t \neq 0]\}.$$

5. Kryptographisches System nach einem der Ansprüche 1 bis 3, wobei die Verschlüsselungseinrichtung den in Formel 6 angegebenen Chiffretext $ct_0$ ausgibt, wobei die Wiederverschlüsselungsschlüssel-Erzeugungseinrichtung den in Formel 7 angegebenen Entschlüsselungsschlüssel k* erwirbt und den Wiederverschlüsselungsschlüssel $rk_1$ ausgibt, der den in Formel 8 angegebenen Entschlüsselungsschlüssel $k^{*rk}_0$ und den in Formel 9 angegebenen Chiffretext $ct'_1$ enthält; und wobei die Wiederverschlüsselungseinrichtung den wiederverschlüsselten Chiffretext $Ct_1$ ausgibt, der den in Formel 10 angegebenen Sitzungsschlüssel $K'_0$ enthält.

[Formel 6]

$$c_{0.0} := (\zeta, -s_0)_{B_{0.0}},$$

für $i = 1, \ldots, L,$

falls $\rho(i) = (t, \vec{v}_i),$

$$c_{i.0} := (\overbrace{\mu_0(0,-1)}^{2}, \overbrace{s_i \vec{e}_{t,1} + \theta_{i.0} \vec{v}_t}^{n_t})_{B_t},$$

falls $\rho(i) = \neg(t, \vec{v}_i),$

$$c_{i.0} := (\overbrace{\mu_0(0,-1)}^{2}, \overbrace{s_i \vec{v}_t}^{n_t})_{B_t},$$

$$c_{T.0} := m \cdot g_T^{\zeta},$$

$$ct_0 := (c_{0.0}, \{c_{i.0}\}_{i=1,\ldots,L}, c_{T.0})$$

**wobei**

$$\vec{f} \xleftarrow{\mathsf{U}} F_q^r,$$

$$\vec{s}^{\mathbf{T}} := (s_1, \ldots, s_L)^{\mathbf{T}} := M \cdot \vec{f}^{\mathbf{T}},$$

$$s_0 := \vec{1} \cdot \vec{f}^{\mathbf{T}},$$

$$\zeta, \theta_{i.0}, \mu_0 \xleftarrow{\mathsf{U}} F_q,$$

$$v_0 := \vec{v}_i := (v_{i.1}, \ldots, v_{i.n_t}),$$

M eine Matrix ist aus L Zeilen und r Spalten; und $n_t$ eine ganze Zahl gleich 1 oder mehr ist,

[Formel 7]

$$k_{0.0}^* := (1, \delta_0)_{B_0^*},$$

$$k_{t.0}^* := (\overbrace{0^2}^{2}, \overbrace{\delta_0 \vec{x}_t}^{n_t})_{B_t^*} \text{ für } (t, \vec{x}_t), \in \Gamma,$$

$$k^* := (k_{0.0}^*, \{k_{t.0}^*\}_{(t,\vec{x}_t),\in\Gamma})$$

**wobei**

$$\delta_0 \xleftarrow{\mathsf{U}} F_q,$$

$$\Gamma = (\{(t, \vec{x}_t), 1 \leq t \leq d\},$$

$$x_0 := \vec{x}_t := (x_{t,1}, \ldots, x_{t,n_t})$$

[Formel 8]

$$k_{0.0}^{*\mathrm{rk}} := (\eta_1 k_{0.0}^* + (0, \delta_0^{\mathrm{ran}})_{\mathrm{B}_0^*}),$$

$$k_{t.0}^{*\mathrm{rk}} := (\eta_1 k_{t.0}^* + (\sigma_0(1,0), \delta_0^{\mathrm{ran}} \vec{x}_t)_{\mathrm{B}_t^*})) \text{ für } (t, \vec{x}_t) \in \Gamma,$$

$$k_0^{*\mathrm{rk}} := (k_{0.0}^{*\mathrm{rk}}, \{k_{t.0}^{*\mathrm{rk}}\}_{(t, \vec{x}_t) \in \Gamma})$$

**wobei**

$$\delta_0^{\mathrm{ran}}, \sigma_0 \xleftarrow{\mathsf{U}} \mathrm{F}_q$$

[Formel 9]

$$c_{0.1} := (\zeta', -s_0')_{\mathrm{B}_0},$$

für $i = 1, \dots, L'$,

falls $\rho'(i) = (t, \vec{v}_i'),$

$$c_{i.1} := (\overbrace{\mu_1(1,-1)}^{2}, \overbrace{s_i'\vec{e}_{t,1} + \theta_{i.1}'\vec{v}_t'}^{n_t})_{\mathrm{B}_t},$$

falls $\rho'(i) = \neg(t, \vec{v}_i'),$

$$c_{i.1} := (\overbrace{\mu_1(1,-1)}^{2}, \overbrace{s_i'\vec{v}_t'}^{n_t})_{\mathrm{B}_t},$$

$$c_{T.1} := (E_1(\eta_1)) \cdot g_T^{\zeta'},$$

$$ct_1' := (c_{0.1}, \{c_{i.1}\}_{i=1,\dots,L'}, c_{T.1})$$

**wobei**

$$\vec{f}' \xleftarrow{\mathsf{U}} \mathrm{F}_q^{r'},$$

$$\vec{s}'^{\mathrm{T}} := (s_1', \dots, s_L')^{\mathrm{T}} := M' \cdot \vec{f}'^{\mathrm{T}},$$

$$s_0' := \vec{1} \cdot \vec{f}'^{\mathrm{T}},$$

$$\zeta', \theta_{i.1}', \mu_1 \xleftarrow{\mathsf{U}} \mathrm{F}_q,$$

$$v_1 := \vec{v}_i' := (v_{i.1}', \dots, v_{i.n_t}'),$$

$E_1$ eine Codierungsfunktion ist.

[Formel 10]

$$K_0^{'} := e(c_{0.0}, k_{0.0}^{*\mathrm{rk}}) \cdot \prod_{i \in I \wedge \rho(i)=(t,\vec{v}_i)} e(c_{i.0}, k_{t.0}^{*\mathrm{rk}})^{\alpha_i}$$
$$\cdot \prod_{i \in I \wedge \rho(i)=\neg(t,\vec{v}_i)} e(c_{i.0}, k_{t.0}^{*\mathrm{rk}})^{\alpha_i/(\vec{v}_i \cdot \vec{x}_t)}$$

wobei

$$\vec{1} = \sum_{i \in I} \alpha_i M_i$$

wobei $M_i$ die i-te Zeile von M ist, und

$$I \subseteq \{ i \in \{1,...,L\} \mid [\rho(i) = (t,\vec{v}_i) \wedge (t,\vec{x}_t) \in \Gamma \wedge \vec{v}_i \cdot \vec{x}_t = 0]$$
$$\vee [\rho(i) = \neg(t,\vec{v}_i) \wedge (t,\vec{x}_t) \in \Gamma \wedge \vec{v}_i \cdot \vec{x}_t \neq 0]\}.$$

6.  Kryptographisches System nach einem der Ansprüche 1 bis 3,
    wobei die Verschlüsselungseinrichtung den in Formel 11 angegebenen Chiffretext $ct_0$ ausgibt;
    wobei die Wiederverschlüsselungsschlüssel-Erzeugungseinrichtung den in Formel 12 angegebenen Entschlüsselungsschlüssel $k^*$ erwirbt und den Wiederverschlüsselungsschlüssel $rk_1$ ausgibt, der den in For-mel 13 angegebenen Entschlüsselungsschlüssel $k^{*rk}_0$ und den in Formel 14 angegebenen Chiffretext $ct'_1$ enthält; und
    wobei die Wiederverschlüsselungseinrichtung den wiederverschlüsselten Chiffretext $ct_1$ ausgibt, der den in Formel 15 angegebenen Sitzungsschlüssel $K'_0$ enthält:

[Formel 11]

$$c_{0.0} := (\zeta, \delta_0)_{\mathbb{B}_{0.0}},$$

$$c_{t.0} := (\overbrace{\delta_0 \vec{x}_t}^{n_t})_{\mathbb{B}_{t.0}} \text{ für } (t, \vec{x}_t) \in \Gamma,$$

$$c_{T.0} := m \cdot g_{T.0}^{\zeta},$$
$$ct_0 := (c_{0.0}, \{c_{t.0}\}_{(t,\vec{x}_t) \in \Gamma}, c_{T.0})$$

**wobei**

$$\zeta, \delta_0 \xleftarrow{\mathsf{U}} \mathbb{F}_q,$$
$$\Gamma = (\{(t, \vec{x}_t), 1 \leq t \leq d\},$$
$$x_0 := \vec{x}_t := (x_{t,1},...,x_{t,n_t}),$$

$n_t$ eine ganze Zahl von 1 oder mehr ist,

[Formel 12]

$$k_{0,0}^* := (1, -s_0)_{\mathrm{B}_{0,0}^*},$$

für $i = 1, \ldots, L,$

falls $\rho(i) = (t, \vec{v}_i),$

$$k_{i,0} := (\overbrace{s_i \vec{e}_{t,1} + \theta_i \vec{v}_t}^{n_t})_{\mathrm{B}_{i,0}^*},$$

falls $\rho(i) = \neg(t, \vec{v}_i),$

$$k_{i,0} := (\overbrace{s_i \vec{v}_t}^{n_t})_{\mathrm{B}_{i,0}^*},$$

$$k^* := (k_{0,0}^*, \{k_{i,0}^*\}_{i=1,\ldots,L})$$

**wobei**

$$\vec{f} \xleftarrow{\;\mathsf{U}\;} \mathrm{F}_q^r,$$
$$\vec{s}^{\mathbf{T}} := (s_1, \ldots, s_L)^{\mathbf{T}} := M \cdot \vec{f}^{\mathbf{T}},$$
$$s_0 := \vec{1} \cdot \vec{f}^{\mathbf{T}},$$
$$\zeta, \theta_{i,0} \xleftarrow{\;\mathsf{U}\;} \mathrm{F}_q,$$
$$v_0 := \vec{v}_i := (v_{i,1}, \ldots, v_{i,n_t}),$$

M eine Matrix von L Zeilen und r Spalten ist,

[Formel 13]

$$k_{0,0}^{*\mathsf{rk}} := \eta k_{0,0}^*,$$

$$k_{i,0}^{*\mathsf{rk}} := \eta k_{i,0}^* \text{ für } i = 1, \ldots, L,$$

$$k_0^{*\mathsf{rk}} := (k_{0,0}^{*\mathsf{rk}}, \{k_{i,0}^{*\mathsf{rk}}\}_{i=1,\ldots,L})$$

[Formel 14]

$$c_{0.1} := (\zeta', \delta_1)_{B_{0.1}},$$

$$c_{t.1} := (\overbrace{\delta_1 \vec{x}'_t})_{B_{t.1}} \text{ für } (t, \vec{x}'_t), \in \Gamma,$$

$$c_{T.1} := m \cdot g_{T.1}^{\zeta},$$

$$ct'_1 := (c_{0.1}, \{c_{t.1}\}_{(t, \vec{x}'_t), \in \Gamma}, c_{T.1})$$

**wobei**

$$\zeta', \delta_1 \xleftarrow{\ \cup\ } F_q,$$

$$\Gamma' = (\{(t, \vec{x}'_t), 1 \le t \le d\},$$

$$x_1 := \vec{x}'_t := (x'_{t,1}, \dots, x'_{t,n_t}),$$

[Formel 15]

$$K'_0 := e(c_{0.0}, k_{0.0}^{*rk}) \cdot \prod_{i \in I \wedge \rho(i) = (t, \vec{v}_i)} e(c_{t.0}, k_{i.0}^{*rk})^{\alpha_i}$$
$$\cdot \prod_{i \in I \wedge \rho(i) = \neg(t, \vec{v}_i)} e(c_{t.0}, k_{i.0}^{*rk})^{\alpha_i/(\vec{v}_i \cdot \vec{x}_t)}$$

wobei

$$\vec{1} = \sum_{i \in I} \alpha_i M_i$$

wobei $M_i$ die i-te Zeile von M ist, und

$$I \subseteq \{ i \in \{1, \dots, L\} \mid [\rho(i) = (t, \vec{v}_i) \wedge (t, \vec{x}_t) \in \Gamma \wedge \vec{v}_i \cdot \vec{x}_t = 0]$$
$$\vee [\rho(i) = \neg(t, \vec{v}_i) \wedge (t, \vec{x}_t) \in \Gamma \wedge \vec{v}_i \cdot \vec{x}_t \ne 0]\}.$$

7.  Kryptographisches System nach einem der Ansprüche 1 bis 3,
    wobei die Verschlüsselungseinrichtung den in Formel 16 angegebenen Chiffretext $ct_0$ ausgibt;
    wobei die Wiederverschlüsselungsschlüssel-Erzeugungseinrichtung den in Formel 17 angegebenen Entschlüsselungsschlüssel k* erwirbt und den Wiederverschlüsselungsschlüssel $rk_1$ ausgibt, der den in Formel 18 angegebenen Entschlüsselungsschlüssel $k^{*rk}_0$ und den in Formel 19 angegebenen Chiffretext $ct'_1$ enthält; und
    wobei die Wiederverschlüsselungseinrichtung den wiederverschlüsselten Chiffretext $ct_1$ ausgibt, der den in Formel 20 angegebenen Sitzungsschlüssel $K'_0$ enthält

[Formel 16]

$$c_{0.0} := (\zeta, \delta_0)_{B_0},$$

$$c_{t.0} := (\overbrace{\sigma_0(1,0)}^{2}, \overbrace{\delta_0 \vec{x}_t}^{n_t})_{B_t} \quad \text{für} \quad (t, \vec{x}_t) \in \Gamma,$$

$$c_{T.0} := m \cdot g_T^{\zeta},$$

$$ct_0 := (c_{0.0}, \{c_{t.0}\}_{(t,\vec{x}_t) \in \Gamma}, c_{T.0})$$

**wobei**

$$\zeta, \delta_0, \sigma_0 \xleftarrow{\mathsf{U}} F_q,$$

$$\Gamma = (\{(t, \vec{x}_t), 1 \le t \le d\},$$

$$x_0 := \vec{x}_t := (x_{t,1}, ..., x_{t,n_t}),$$

$n_t$ eine ganze Zahl von 1 oder mehr ist,

[Formel 17]

$$k_{0.0}^* := (1, -s_0)_{B_0^*},$$

für $i = 1, ..., L,$

falls $\rho(i) = (t, \vec{v}_i),$

$$k_{i.0} := (\overbrace{\mu_0(0,-1)}^{2}, \overbrace{s_i \vec{e}_{t,1} + \theta_i \vec{v}_i}^{n_t})_{B_t^*},$$

falls $\rho(i) = \neg(t, \vec{v}_i),$

$$k_{i.0} := (\overbrace{\mu_0(0,-1)}^{2}, \overbrace{s_i \vec{v}_t}^{n_t})_{B_t^*},$$

$$k^* := (k_{0.0}^*, \{k_{i.0}^*\}_{i=1,...,L})$$

**wobei**

$$\vec{f} \xleftarrow{\mathsf{U}} F_q^r,$$

$$\vec{s}^{\mathbf{T}} := (s_1, ..., s_L)^{\mathbf{T}} := M \cdot \vec{f}^{\mathbf{T}},$$

$$s_0 := \vec{1} \cdot \vec{f}^{\mathbf{T}},$$

$$\zeta, \theta_{i.0}, \mu_0 \xleftarrow{\mathsf{U}} F_q,$$

$$v_0 := \vec{v}_i := (v_{i.1}, ..., v_{i.n_t}),$$

M eine Matrix aus L Zeilen und r Spalten ist,

[Formel 18]

$$k_{0.0}^{*\mathrm{rk}} := \eta_1 k_{0.0}^{*},$$

$$k_{i.0}^{*\mathrm{rk}} := \eta_1 k_{i.0}^{*} \text{ für } i = 1, \ldots, L,$$

$$k_0^{*\mathrm{rk}} := (k_{0.0}^{*\mathrm{rk}}, \{k_{i.0}^{*\mathrm{rk}}\}_{i=1,\ldots,L})$$

[Formel 19]

$$c_{0.1} := (\zeta', \delta_1)_{\mathrm{B}_0},$$

$$c_{t.1} := (\overbrace{\sigma_1(1,1)}^{\zeta}, \overbrace{\delta_1 \vec{x}_t'}^{\vec{x}_t'})_{\mathrm{B}_t} \text{ für } (t, \vec{x}_t') \in \Gamma',$$

$$c_{T.1} := m \cdot g_T^{\zeta},$$

$$ct_1' := (c_{0.1}, \{c_{t.1}\}_{(t,\vec{x}_t') \in \Gamma'}, c_{T.1})$$

**wobei**

$$\zeta', \delta_1, \sigma_1 \xleftarrow{\mathrm{U}} \mathbb{F}_q,$$

$$\Gamma' = (\{(t, \vec{x}_t'), 1 \le t \le d\},$$

$$x_1 := \vec{x}_t' := (x_{t,1}', \ldots, x_{t,n_t}'),$$

[Formel 20]

$$K_0' := e(c_{0.0}, k_{0.0}^{*\mathrm{rk}}) \cdot \prod_{i \in I \wedge \rho(i)=(t,\vec{v}_i)} e(c_{t.0}, k_{i.0}^{*\mathrm{rk}})^{\alpha_i}$$

$$\cdot \prod_{i \in I \wedge \rho(i)=\neg(t,\vec{v}_i)} e(c_{t.0}, k_{i.0}^{*\mathrm{rk}})^{\alpha_i/(\vec{v}_i \cdot \vec{x}_t)}$$

wobei

$$\vec{1} = \sum_{i \in I} \alpha_i M_i$$

wobei $M_i$ die i-te Zeile von M ist, und

$$I \subseteq \{ i \in \{1, \ldots, L\} \mid [\rho(i) = (t, \vec{v}_i) \wedge (t, \vec{x}_t) \in \Gamma \wedge \vec{v}_i \cdot \vec{x}_t = 0]$$

$$\vee [\rho(i) = \neg(t, \vec{v}_i) \wedge (t, \vec{x}_t) \in \Gamma \wedge \vec{v}_i \cdot \vec{x}_t \ne 0]\}.$$

**8.** Wiederverschlüsselungsschlüssel-Erzeugungseinrichtung (300) in einem kryptographischen System (10), um eine Proxy-Wiederverschlüsselungsfunktion zu implementieren in einem kryptographischen Schema, gemäß dem, wenn zwei Informationen einander entsprechen, ein Chiffretext, in dem eine der zwei Informationen definiert ist, mit einem Entschlüsselungsschlüssel entschlüsselt werden kann, in dem die andere der zwei Informationen definiert ist, wobei die Wiederverschlüsselungsschlüssel-Erzeugungseinrichtung umfasst:

einen Entschlüsselungsschlüsselerwerbungsteil (310), um einen Entschlüsselungsschlüssel k* zu erwerben, in dem eine der einander entsprechenden Attributinformation $x_0$ und Attributinformation $v_0$ definiert ist, und einen Wiederverschlüsselungsschlüssel-Ausgabeteil (340), um einen Wiederverschlüsselungsschlüssel $rk_1$ auszugeben, der einen Entschlüsselungsschlüssel $k^{*rk}_0$ enthält, der erhalten wird durch Multiplizieren des Entschlüsselungsschlüssels k* mit einer Zufallszahl $r_1$, und einen Chiffretext $ct'_1$ enthält, der erhalten wird durch

Verschlüsseln der Zufallszahl $r_1$ mit einer der einander entsprechenden definierten Attributinformation $x_1$ und Attributinformation $v_1$.

9. Wiederverschlüsselungseinrichtung (400) in einem kryptographischen System (10), um eine Proxy-Wiederverschlüsselungsfunktion zu implementieren in einem kryptographischen Schema, gemäß dem, wenn zwei Informationen einander entsprechen, ein Chiffretext, in dem eine der zwei Informationen definiert ist, mit einem Entschlüsselungsschlüssel entschlüsselt werden kann, in dem die andere der zwei Informationen definiert ist, wobei die Wiederverschlüsselungseinrichtung umfasst:

einen Chiffretext-Erwerbungsteil (420), um einen Chiffretext $ct_0$ zu erwerben, in dem eine der einander entsprechenden Attributinformation $x_0$ und Attributinformation v0 definiert ist;
einen Wiederverschlüsselungsschlüssel-Erwerbungssteil (430), um einen Wiederverschlüsselungsschlüssel $rk_1$ zu erwerben, der einen Entschlüsselungsschlüssel $k^{*rk}{}_0$ enthält, der erhalten wird durch Multiplizieren eines Entschlüsselungsschlüssels $k^*$, in dem die andere der Attributinformation $x_0$ und der Attributinformation $v_0$ definiert ist, mit einer Zufallszahl $r_1$, und einen Chiffretext $ct'_1$ enthält, der erhalten wird durch Verschlüsseln der Zufallszahl $r_1$ mit einer der definierten einander entsprechenden Attributinformation $x_1$ und Attributinformation $v_1$; und
einen Wiederverschlüsselter-Chiffretext-Ausgabeteil (470), um einen wiederverschlüsselten Chiffretext $ct_1$, der einen Sitzungsschlüssel $K'_0$ und den Chiffretext $ct'_1$ enthält, auszugeben; wobei der Sitzungsschlüssel $K'_0$ erzeugt wird durch Berechnen einer Pairing-Operation zwischen dem Chiffretext $ct_0$ und dem Entschlüsselungsschlüssel $k^{*rk}{}_0$.

10. Kryptographisches Programm zum Implementieren einer Proxy-Wiederverschlüsselungsfunktion in einem kryptographischen Schema, gemäß dem, wenn zwei Informationen einander entsprechen, ein Chiffretext, in dem eine der zwei Informationen definiert ist, mit einem Entschlüsselungsschlüssel entschlüsselt werden kann, in dem die andere der zwei Informationen definiert ist, wobei das kryptographische Programm einen Computer veranlasst, auszuführen:

einen Verschlüsselungsprozess des Ausgebens eines Chiffretexts $ct_0$, in dem eine der einander entsprechenden Attributinformation $x_0$ und Attributinformation $v_0$ definiert ist;
einen Wiederverschlüsselungsschlüssel-Erzeugungsprozess des Erwerbens eines Entschlüsselungsschlüssels $k^*$, in dem die andere der Attributinformation $x_0$ und der Attributinformation $v_0$ definiert ist, und Ausgebens eines Wiederverschlüsselungsschlüssels $rk_1$, der einen Entschlüsselungsschlüssel $k^{*rk}{}_0$ enthält, der erhalten wird durch Multiplizieren des erworbenen Entschlüsselungsschlüssels $k^*$ mit einer Zufallszahl $r_1$, und einen Chiffretext $ct'_1$ enthält, der erhalten wird durch Verschlüsseln der Zufallszahl $r_1$ mit einer der einander entsprechenden definierten Attributinformation $x_1$ und Attributinformation $v_1$; und
einen Wiederverschlüsselungsprozess des Ausgebens eines wiederverschlüsselten Chiffretextes $ct_1$, der einen Sitzungsschlüssel $K'_0$ und den Chiffretext $ct'_1$ enthält; wobei der Sitzungsschlüssel $K'_0$ erzeugt wird durch Berechnen einer Pairing-Operation zwischen dem Chiffretext $ct_0$ und dem Entschlüsselungsschlüssel $k^{*rk}{}_0$.

**Revendications**

1. Système cryptographique (10) destiné à mettre en œuvre une fonction de re-chiffrement par procuration dans un schéma cryptographique selon lequel, lorsque deux éléments d'information correspondent l'un à l'autre, un texte chiffré dans lequel est défini l'un des deux éléments d'information est en mesure d'être déchiffré avec une clé de déchiffrement dans laquelle est défini l'autre des deux éléments d'information, le système cryptographique comprenant :

un dispositif de chiffrement (200) destiné à fournir en sortie un texte chiffré $ct_0$ dans lequel est définie l'une parmi des informations d'attribut $x_0$ et des informations d'attribut $v_0$ correspondant les unes aux autres ;
un dispositif de génération de clé de re-chiffrement (300) destiné à acquérir une clé de déchiffrement $k^*$ dans laquelle est définie l'autre parmi les informations d'attribut $x_0$ et les informations d'attribut $v_0$, et à fournir en sortie une clé de re-chiffrement $rk_1$ qui inclut une clé de déchiffrement $k^{*rk}{}_0$ obtenue en multipliant la clé de déchiffrement acquise $k^*$ par un nombre aléatoire $r_1$, et qui inclut un texte chiffré $ct'_1$ obtenu en chiffrant le nombre aléatoire $r_1$ avec l'une parmi des informations d'attribut $x_1$ et des informations d'attribut $v_1$ correspondant les unes aux autres, lesquelles ont été définies ; et
un dispositif de re-chiffrement (400) destiné à fournir en sortie un texte chiffré re-chiffré $ct_1$ qui inclut une clé

de session K'$_0$ et le texte chiffré ct'$_1$ ; la clé de session K'$_0$ étant générée en calculant une opération d'appariement entre le texte chiffré ct$_0$ et la clé de déchiffrement k$^{*rk}$$_0$.

2. Système cryptographique selon la revendication 1, comprenant en outre :

un dispositif de déchiffrement de texte chiffré re-chiffré (500) destiné à acquérir une clé de déchiffrement k$^{*'}$ dans laquelle est définie l'autre parmi les informations d'attribut x$_1$ et les informations d'attribut v$_1$, à générer le nombre aléatoire r$_1$ en calculant une opération d'appariement entre le texte chiffré ct'$_1$ et la clé de déchiffrement acquise k$^{*'}$, et à générer un message « m » à partir du nombre aléatoire généré r$_1$ et de la clé de session K'$_0$.

3. Système cryptographique selon la revendication 2,

dans lequel le dispositif de déchiffrement de texte chiffré re-chiffré fournit en sortie une clé de re-chiffrement rk$_2$ qui inclut une clé de déchiffrement k$^{*rk}$$_1$ obtenue en convertissant la clé de déchiffrement k$^{*'}$ avec un nombre aléatoire r$_2$, et inclut un texte chiffré ct'$_2$ obtenu en chiffrant le nombre aléatoire r$_2$ avec l'une parmi les informations d'attribut x$_2$ et les informations d'attribut v$_2$ correspondant les unes aux autres, lesquelles ont été définies ; et dans lequel le dispositif de re-chiffrement fournit en sortie un texte chiffré re-chiffré ct$_2$ qui inclut une clé de session K'$_1$ générée en calculant une opération d'appariement entre le texte chiffré re-chiffré ct$_1$ et la clé de déchiffrement k$^{*rk}$$_1$, et qui inclut le texte chiffré ct'$_2$.

4. Système cryptographique selon l'une quelconque des revendications 1 à 3,

dans lequel le dispositif de chiffrement fournit en sortie le texte chiffré ct$_0$ indiqué dans la formule 1 ; dans lequel le dispositif de génération de clé de re-chiffrement acquiert la clé de déchiffrement k$^*$ indiquée dans la formule 2, et fournit en sortie la clé de re-chiffrement rk$_1$ qui inclut la clé de déchiffrement k$^{*rk}$$_0$ indiquée dans la formule 3 et le texte chiffré ct'$_1$ indiqué dans la formule 4 ; et dans lequel le dispositif de re-chiffrement fournit en sortie le texte chiffré re-chiffré ct$_1$ qui inclut la clé de session K'$_0$ indiquée dans la formule 5 :

[Formule 1]

$$c_{0.0} := (\zeta, -s_0)_{B_{0.0}},$$

pour $i = 1, ..., L,$

si $\rho(i) = (t, \vec{v}_i),$

$$c_{i.0} := (\overbrace{s_i \vec{e}_{t,1} + \theta_{i.0} \vec{v}_t}^{n_t})_{B_{t.0}},$$

si $\rho(i) = \neg(t, \vec{v}_i),$

$$c_{i.0} := (\overbrace{s_i \vec{v}_t}^{n_t})_{B_{t.0}},$$

$$c_{T.0} := m \cdot g_{T.0}^{\zeta},$$

$$ct_0 := (c_{0.0}, \{c_{i.0}\}_{i=1,...,L}, c_{T.0})$$

où

$$\vec{f} \xleftarrow{\mathsf{U}} F_q^r,$$

$$\vec{s}^{\mathbf{T}} := (s_1, ..., s_L)^{\mathbf{T}} := M \cdot \vec{f}^{\mathbf{T}},$$

$$s_0 := \vec{1} \cdot \vec{f}^{\mathbf{T}},$$

$$\zeta, \theta_{i.0} \xleftarrow{\mathsf{U}} F_q,$$

$$v_0 := \vec{v}_i := (v_{i.1}, ..., v_{i.n_t}),$$

« M » est une matrice de « L » lignes et « r » colonnes ; et
« n$_t$ » est un nombre entier égal à 1 ou plus.

[Formule 2]

$$k_{0.0}^* := (1, \delta_0)_{B_{0.0}^*},$$

$$k_{t.0}^* := (\overbrace{\delta_0 \vec{x}_t}^{n_t})_{B_{t.0}^*} \text{ pour } (t, \vec{x}_t) \in \Gamma,$$

$$k^* := (k_{0.0}^*, \{k_{t.0}^*\}_{(t, \vec{x}_t) \in \Gamma})$$

**où**

$$\delta_0 \xleftarrow{\ \ U\ \ } F_q,$$

$$\Gamma = (\{(t, \vec{x}_t), 1 \le t \le d\},$$

$$x_0 := \vec{x}_t := (x_{t,1}, ..., x_{t,n_t})$$

[Formule 3]

$$k_{0.0}^{*rk} := (\eta_1 k_{0.0}^* + (0, \delta_0^{ran})_{B_{0.0}^*}),$$

$$k_{t.0}^{*rk} := (\eta_1 k_{t.0}^* + (\delta_0^{ran} \vec{x}_t)_{B_{t.0}^*})) \text{ pour } (t, \vec{x}_t) \in \Gamma,$$

$$k_0^{*rk} := (k_{0.0}^{*rk}, \{k_{t.0}^{*rk}\}_{(t, \vec{x}_t) \in \Gamma})$$

**où**

$$\delta_0^{ran} \xleftarrow{\ \ U\ \ } F_q$$

[Formule 4]

$$c_{0.1} := (\zeta', -s'_0)_{B_{0.1}},$$

pour $i = 1, ..., L'$,

si $\rho'(i) = (t, \vec{v}'_i)$,

$$c_{i.1} := (\overbrace{s'_i \vec{e}_{t.1} + \theta'_{i.1} \vec{v}'_i}^{n_t})_{B_{t.1}},$$

si $\rho'(i) = \neg(t, \vec{v}'_i)$,

$$c_{i.1} := (\overbrace{s'_i \vec{v}'_t}^{n_t})_{B_{t.1}},$$

$$c_{T.1} := (E_1(\eta_1)) \cdot g_{T.1}^{\zeta'},$$

$$ct'_1 := (c_{0.1}, \{c_{i.1}\}_{i=1,...,L'}, c_{T.1})$$

**où**

$$\vec{f}' \xleftarrow{\;\cup\;} F_q^{r'},$$

$$\vec{s}'^T := (s'_1, ..., s'_L)^T := M' \cdot \vec{f}'^T,$$

$$s'_0 := \vec{1} \cdot \vec{f}'^T,$$

$$\zeta', \theta'_{i.1} \xleftarrow{\;\cup\;} F_q,$$

$$v_1 := \vec{v}'_i := (v'_{i.1}, ..., v'_{i.n_i}),$$

« $E_1$ » est une fonction de codage,

[Formule 5]

$$K'_0 := e(c_{0.0}, k_{0.0}^{*rk}) \cdot \prod_{i \in I \wedge \rho(i) = (t, \vec{v}_i)} e(c_{i.0}, k_{t.0}^{*rk})^{\alpha_i}$$

$$\cdot \prod_{i \in I \wedge \rho(i) = \neg(t, \vec{v}_i)} e(c_{i.0}, k_{t.0}^{*rk})^{\alpha_i / (\vec{v}_i \cdot \vec{x}_t)}$$

où

$$\vec{1} = \sum_{i \in I} \alpha_i M_i$$

où « $M_i$ » est la $i$-ème ligne de « $M$ », et

$$I \subseteq \{ i \in \{1, ..., L\} \mid [\rho(i) = (t, \vec{v}_i) \wedge (t, \vec{x}_t) \in \Gamma \wedge \vec{v}_i \cdot \vec{x}_t = 0]$$
$$\vee [\rho(i) = \neg(t, \vec{v}_i) \wedge (t, \vec{x}_t) \in \Gamma \wedge \vec{v}_i \cdot \vec{x}_t \neq 0]\}.$$

5. Système cryptographique selon l'une quelconque des revendications 1 à 3,

dans lequel le dispositif de chiffrement fournit en sortie le texte chiffré $ct_0$ indiqué dans la formule 6 ;
dans lequel le dispositif de génération de clé de re-chiffrement acquiert la clé de déchiffrement $k^*$ indiquée dans la formule 7, et fournit en sortie la clé de re-chiffrement $rk_1$ qui inclut la clé de déchiffrement $k^{*rk}_0$ indiquée dans la formule 8 et le texte chiffré $ct'_1$ indiqué dans la formule 9 ; et
dans lequel le dispositif de re-chiffrement fournit en sortie le texte chiffré re-chiffré $ct_1$ qui inclut la clé de session $K'_0$ indiquée dans la formule 10 :

[Formule 6]

$$c_{0.0} := (\zeta, -s_0)_{B_{0.0}},$$

pour $i = 1, ..., L,$

si $\rho(i) = (t, \vec{v}_i),$

$$c_{i.0} := (\overbrace{\mu_0(0,-1)}^{2}, \overbrace{s_i \vec{e}_{t,1} + \theta_{i.0} \vec{v}_t}^{n_t})_{B_t},$$

si $\rho(i) = \neg(t, \vec{v}_i),$

$$c_{i.0} := (\overbrace{\mu_0(0,-1)}^{2}, \overbrace{s_i \vec{v}_t}^{n_t})_{B_t},$$

$$c_{T.0} := m \cdot g_T^{\zeta},$$

$$ct_0 := (c_{0.0}, \{c_{i.0}\}_{i=1,...,L}, c_{T.0})$$

où

$$\vec{f} \xleftarrow{U} F_q^r,$$

$$\vec{s}^T := (s_1, ..., s_L)^T := M \cdot \vec{f}^T,$$

$$s_0 := \vec{1} \cdot \vec{f}^T,$$

$$\zeta, \theta_{i.0}, \mu_0 \xleftarrow{U} F_q,$$

$$v_0 := \vec{v}_i := (v_{i.1}, ..., v_{i.n_t}),$$

« $M$ » est une matrice de « $L$ » lignes et « $r$ » colonnes ; et « $n_t$ » est un nombre entier égal à 1 ou plus.

[Formule 7]

$$k_{0.0}^* := (1, \delta_0)_{B_0^*},$$

$$k_{t.0}^* := (\overbrace{0^2}^{2}, \overbrace{\delta_0 \vec{x}_t}^{n_t})_{B_t^*} \text{ pour } (t, \vec{x}_t) \in \Gamma,$$

$$k^* := (k_{0.0}^*, \{k_{t.0}^*\}_{(t,\vec{x}_t) \in \Gamma})$$

où

$$\delta_0 \xleftarrow{U} F_q,$$

$$\Gamma = (\{(t, \vec{x}_t), 1 \le t \le d\},$$

$$x_0 := \vec{x}_t := (x_{t,1}, ..., x_{t,n_t})$$

[Formule 8]

$$k_{0.0}^{*\mathrm{rk}} := (\eta_1 k_{0.0}^{*} + (0, \delta_0^{\mathrm{ran}})_{\mathrm{B}_0^{*}}),$$

$$k_{t.0}^{*\mathrm{rk}} := (\eta_1 k_{t.0}^{*} + (\sigma_0(1,0), \delta_0^{\mathrm{ran}} \vec{x}_t)_{\mathrm{B}_t^{*}})) \text{ pour } (t, \vec{x}_t) \in \Gamma,$$

$$k_0^{*\mathrm{rk}} := (k_{0.0}^{*\mathrm{rk}}, \{k_{t.0}^{*\mathrm{rk}}\}_{(t, \vec{x}_t) \in \Gamma})$$

**où**

$$\delta_0^{\mathrm{ran}}, \sigma_0 \xleftarrow{\ \mathsf{U}\ } \mathrm{F}_q$$

[Formule 9]

$$c_{0.1} := (\zeta', -s_0')_{\mathrm{B}_0},$$

$$\text{pour } i = 1, ..., L',$$

$$\text{si } \rho'(i) = (t, \vec{v}_i'),$$

$$c_{i.1} := (\overbrace{\mu_1(1, -1)}^{2}, \overbrace{s_i' \vec{e}_{t,1} + \theta_{i.1}' \vec{v}_t'}^{n_t})_{\mathrm{B}_t},$$

$$\text{si } \rho'(i) = \neg(t, \vec{v}_i'),$$

$$c_{i.1} := (\overbrace{\mu_1(1, -1)}^{2}, \overbrace{s_i' \vec{v}_t'}^{n_t})_{\mathrm{B}_t},$$

$$c_{T.1} := (E_1(\eta_1)) \cdot g_T^{\zeta'},$$

$$ct_1' := (c_{0.1}, \{c_{i.1}\}_{i=1,...,L'}, c_{T.1})$$

**où**

$$\vec{f}' \xleftarrow{\ \mathsf{U}\ } \mathrm{F}_q^{r'},$$

$$\vec{s}'^{\mathrm{T}} := (s_1', ..., s_L')^{\mathrm{T}} := M' \cdot \vec{f}'^{\mathrm{T}},$$

$$s_0' := \vec{1} \cdot \vec{f}'^{\,\mathrm{T}},$$

$$\zeta', \theta_{i.1}', \mu_1 \xleftarrow{\ \mathsf{U}\ } \mathrm{F}_q,$$

$$v_1 := \vec{v}_i' := (v_{i.1}', ..., v_{i.n_t}'),$$

« $E_1$ » est une fonction de codage.

[Formule 10]

$$K_0' := e(c_{0.0}, k_{0.0}^{*\mathrm{rk}}) \cdot \prod_{i \in I \wedge \rho(i)=(t,\vec{v}_i)} e(c_{i.0}, k_{t.0}^{*\mathrm{rk}})^{\alpha_i}$$
$$\cdot \prod_{i \in I \wedge \rho(i)=\neg(t,\vec{v}_i)} e(c_{i.0}, k_{t.0}^{*\mathrm{rk}})^{\alpha_i/(\vec{v}_i \cdot \vec{x}_t)}$$

où

$$\vec{1} = \sum_{i \in I} \alpha_i M_i$$

où « $M_i$ » est la $i$-ème rangée de « $M$ », et

$$I \subseteq \{ i \in \{1,...,L\} \mid [\rho(i) = (t,\vec{v}_i) \wedge (t,\vec{x}_t) \in \Gamma \wedge \vec{v}_i \cdot \vec{x}_t = 0]$$
$$\vee [\rho(i) = \neg(t,\vec{v}_i) \wedge (t,\vec{x}_t) \in \Gamma \wedge \vec{v}_i \cdot \vec{x}_t \neq 0]\}.$$

6. Système cryptographique selon l'une quelconque des revendications 1 à 3,

dans lequel le dispositif de chiffrement fournit en sortie le texte chiffré $ct_0$ indiqué dans la formule 11 ;
dans lequel le dispositif de génération de clé de re-chiffrement acquiert la clé de déchiffrement $k^*$ indiquée dans la formule 12, et fournit en sortie la clé de re-chiffrement $rk_1$ qui inclut la clé de déchiffrement $k^{*rk}_0$ indiquée dans la formule 13 et le texte chiffré $ct'_1$ indiqué dans la formule 14 ; et
dans lequel le dispositif de re-chiffrement fournit en sortie le texte chiffré re-chiffré $ct_1$ qui inclut la clé de session $K'_0$ indiquée dans la formule 15 :

[Formule 11]

$$c_{0.0} := (\zeta, \delta_0)_{\mathbb{B}_{0.0}},$$

$$c_{t.0} := (\overbrace{\delta_0 \vec{x}_t}^{n_t})_{\mathbb{B}_{t.0}} \text{ pour } (t,\vec{x}_t) \in \Gamma,$$

$$c_{T.0} := m \cdot g_{T.0}^{\zeta},$$
$$ct_0 := (c_{0.0}, \{c_{t.0}\}_{(t,\vec{x}_t) \in \Gamma}, c_{T.0})$$

où

$$\zeta, \delta_0 \xleftarrow{\mathsf{U}} \mathbb{F}_q,$$
$$\Gamma = (\{(t,\vec{x}_t), 1 \leq t \leq d\},$$
$$x_0 := \vec{x}_t := (x_{t,1},...,x_{t,n_t}),$$

« $n_t$ » est un nombre entier égal à 1 ou plus.

[Formule 12]

$$k_{0.0}^* := (1, -s_0)_{B_{0.0}^*},$$

pour $i = 1, ..., L,$

si $\rho(i) = (t, \vec{v}_i),$

$$k_{i.0} := (\overbrace{s_i \vec{e}_{t,1} + \theta_i \vec{v}_t}^{n_t})_{B_{t.0}^*},$$

si $\rho(i) = \neg(t, \vec{v}_i),$

$$k_{i.0} := (\overbrace{s_i \vec{v}_t}^{n_t})_{B_{t.0}^*},$$

$$k^* := (k_{0.0}^*, \{k_{i.0}^*\}_{i=1,...,L})$$

**où**

$$\vec{f} \xleftarrow{\mathsf{U}} F_q^r,$$
$$\vec{s}^{\mathbf{T}} := (s_1, ..., s_L)^{\mathbf{T}} := M \cdot \vec{f}^{\mathbf{T}},$$
$$s_0 := \vec{1} \cdot \vec{f}^{\mathbf{T}},$$
$$\zeta, \theta_{i.0} \xleftarrow{\mathsf{U}} F_q,$$
$$v_0 := \vec{v}_i := (v_{i.1}, ..., v_{i.n_i}),$$

« $M$ » est une matrice de « $L$ » lignes et « $r$ » colonnes,

[Formule 13]

$$k_{0.0}^{*\mathsf{rk}} := \eta_1 k_{0.0}^*,$$

$$k_{i.0}^{*\mathsf{rk}} := \eta_1 k_{i.0}^* \text{ pour } i = 1, ..., L,$$

$$k_0^{*\mathsf{rk}} := (k_{0.0}^{*\mathsf{rk}}, \{k_{i.0}^{*\mathsf{rk}}\}_{i=1,...,L})$$

[Formule 14]

$$c_{0.1} := (\zeta', \delta_1)_{B_{0.1}},$$

$$c_{t.1} := (\overbrace{\delta_1 \vec{x}_t'}^{n_t})_{B_{t.1}} \text{ pour } (t, \vec{x}_t'), \in \Gamma,$$

$$c_{T.1} := m \cdot g_{T.1}^{\zeta},$$
$$ct_1' := (c_{0.1}, \{c_{t.1}\}_{(t, \vec{x}_t'), \in \Gamma}, c_{T.1})$$

**où**

$$\zeta', \delta_1 \xleftarrow{\mathsf{U}} F_q,$$
$$\Gamma' = (\{(t, \vec{x}_t'), 1 \le t \le d\},$$
$$x_1 := \vec{x}_t' := (x_{t,1}', ..., x_{t,n_t}'),$$

[Formule 15]

$$K_0' := e(c_{0.0}, k_{0.0}^{*\mathrm{rk}}) \cdot \prod_{i \in I \wedge \rho(i) = (t, \vec{v}_i)} e(c_{t.0}, k_{i.0}^{*\mathrm{rk}})^{\alpha_i}$$
$$\cdot \prod_{i \in I \wedge \rho(i) = \neg(t, \vec{v}_i)} e(c_{t.0}, k_{i.0}^{*\mathrm{rk}})^{\alpha_i / (\vec{v}_i \cdot \vec{x}_t)}$$

où

$$\vec{1} = \sum_{i \in I} \alpha_i M_i$$

où « $M_i$ » est la $i$-ème rangée de « $M$ », et

$$I \subseteq \{\, i \in \{1, \ldots, L\} \mid [\rho(i) = (t, \vec{v}_i) \wedge (t, \vec{x}_t) \in \Gamma \wedge \vec{v}_i \cdot \vec{x}_t = 0]$$
$$\vee [\rho(i) = \neg(t, \vec{v}_i) \wedge (t, \vec{x}_t) \in \Gamma \wedge \vec{v}_i \cdot \vec{x}_t \neq 0]\}.$$

7. Système cryptographique selon l'une quelconque des revendications 1 à 3,

dans lequel le dispositif de chiffrement fournit en sortie le texte chiffré $ct_0$ indiqué dans la formule 16 ;
dans lequel le dispositif de génération de clé de re-chiffrement acquiert la clé de déchiffrement $k^*$ indiquée dans la formule 17, et fournit en sortie la clé de re-chiffrement $rk_1$ qui inclut la clé de déchiffrement $k^{*\mathrm{rk}}_0$ indiquée dans la formule 18 et le texte chiffré $ct'_1$ indiqué dans la formule 19 ; et
dans lequel le dispositif de re-chiffrement fournit en sortie le texte chiffré re-chiffré $ct_1$ qui inclut la clé de session $K'_0$ indiquée dans la formule 20 :

[Formule 16]

$$c_{0.0} := (\zeta, \delta_0)_{B_0},$$

$$c_{t.0} := (\overbrace{\sigma_0(1,0)}^{2}, \overbrace{\delta_0 \vec{x}_t}^{n_t})_{B_t} \quad \text{pour} \quad (t, \vec{x}_t) \in \Gamma,$$

$$c_{T.0} := m \cdot g_T^{\zeta},$$

$$ct_0 := (c_{0.0}, \{c_{t.0}\}_{(t, \vec{x}_t) \in \Gamma}, c_{T.0})$$

**où**

$$\zeta, \delta_0, \sigma_0 \xleftarrow{\mathsf{U}} F_q,$$

$$\Gamma = (\{(t, \vec{x}_t), 1 \le t \le d\},$$

$$x_0 := \vec{x}_t := (x_{t,1}, \ldots, x_{t,n_t}),$$

« $n_t$ » est un nombre entier égal à 1 ou plus.

[Formule 17]

$$k_{0.0}^* := (1, -s_0)_{B_0^*},$$

pour $i = 1, ..., L,$

si $\rho(i) = (t, \vec{v}_i),$

$$k_{i.0} := (\overbrace{\mu_0(0, -1)}^{2}, \overbrace{s_i \vec{e}_{t,1} + \theta_i \vec{v}_t}^{n_t})_{B_t^*},$$

si $\rho(i) = \neg(t, \vec{v}_i),$

$$k_{i.0} := (\overbrace{\mu_0(0, -1)}^{2}, \overbrace{s_i \vec{v}_t}^{n_t})_{B_t^*},$$

$$k^* := (k_{0.0}^*, \{k_{i.0}^*\}_{i=1,...,L})$$

**où**

$$\vec{f} \xleftarrow{\mathsf{U}} F_q^r,$$
$$\vec{s}^{\mathbf{T}} := (s_1, ..., s_L)^{\mathbf{T}} := M \cdot \vec{f}^{\mathbf{T}},$$
$$s_0 := \vec{1} \cdot \vec{f}^{\mathbf{T}},$$
$$\zeta, \theta_{i.0}, \mu_0 \xleftarrow{\mathsf{U}} F_q,$$
$$v_0 := \vec{v}_i := (v_{i.1}, ..., v_{i.n_i}),$$

« $M$ » est une matrice de « $L$ » lignes et « $r$ » colonnes.

[Formule 18]

$$k_{0.0}^{*\mathsf{rk}} := r_1 k_{0.0}^*,$$

$$k_{i.0}^{*\mathsf{rk}} := r_1 k_{i.0}^* \text{ pour } i = 1, ..., L,$$

$$k_0^{*\mathsf{rk}} := (k_{0.0}^{*\mathsf{rk}}, \{k_{i.0}^{*\mathsf{rk}}\}_{i=1,...,L})$$

[Formule 19]

$$c_{0,1} := (\zeta', \delta_1)_{B_0},$$

$$c_{t,1} := (\overbrace{\sigma_1(1,1)}^{\overset{\kappa}{\frown}}, \overbrace{\delta_1 \vec{x}'_t}^{\overset{\cdot n}{\frown}})_{B_t} \text{ pour } (t, \vec{x}'_t) \in \Gamma,$$

$$c_{T,1} := m \cdot g_T^{\zeta},$$

$$ct_1' := (c_{0,1}, \{c_{t,1}\}_{(t,\vec{x}'_t) \in \Gamma}, c_{T,1})$$

où

$$\zeta', \delta_1, \sigma_1 \xleftarrow{\text{U}} F_q,$$

$$\Gamma' = (\{(t, \vec{x}'_t), 1 \le t \le d\},$$

$$x_1 := \vec{x}'_t := (x'_{t,1}, ..., x'_{t,n_t}),$$

[Formule 20]

$$K_0' := e(c_{0,0}, k_{0,0}^{*\text{rk}}) \cdot \prod_{i \in I \wedge \rho(i)=(t,\vec{v}_i)} e(c_{t,0}, k_{i,0}^{*\text{rk}})^{\alpha_i}$$

$$\cdot \prod_{i \in I \wedge \rho(i)=\neg(t,\vec{v}_i)} e(c_{t,0}, k_{i,0}^{*\text{rk}})^{\alpha_i/(\vec{v}_i \cdot \vec{x}_t)}$$

où

$$\vec{1} = \sum_{i \in I} \alpha_i M_i$$

où « $M_i$ » est la $i$-ème rangée de « $M$ », et

$$I \subseteq \{ i \in \{1,...,L\} \mid [\rho(i) = (t, \vec{v}_i) \wedge (t, \vec{x}_t) \in \Gamma \wedge \vec{v}_i \cdot \vec{x}_t = 0]$$

$$\vee [\rho(i) = \neg(t, \vec{v}_i) \wedge (t, \vec{x}_t) \in \Gamma \wedge \vec{v}_i \cdot \vec{x}_t \ne 0]\}.$$

8. Dispositif de génération de clé de re-chiffrement (300) dans un système cryptographique (10) destiné à mettre en œuvre une fonction de re-chiffrement par procuration dans un schéma cryptographique selon lequel, lorsque deux éléments d'information correspondent l'un à l'autre, un texte chiffré dans lequel est défini l'un des deux éléments d'information est en mesure d'être déchiffré avec une clé de déchiffrement dans laquelle est défini l'autre des deux éléments d'information, le dispositif de génération de clé de re-chiffrement comprenant :

   une partie d'acquisition de clé de déchiffrement (310) destinée à acquérir une clé de déchiffrement k* dans laquelle est définie l'une parmi les informations d'attribut $x_0$ et des informations d'attribut $v_0$ correspondant les unes aux autres ; et
   une partie de fourniture en sortie de clé de re-chiffrement (340) destinée à fournir en sortie une clé de re-chiffrement rk₁ qui inclut une clé de déchiffrement k*rk₀ obtenue en multipliant la clé de déchiffrement k* par un nombre aléatoire r₁, et qui inclut un texte chiffré ct'₁ obtenu en chiffrant le nombre aléatoire r₁ avec l'une parmi des informations d'attribut $x_1$ et des informations d'attribut $v_1$ correspondant les unes aux autres, lesquelles ont été définies.

9. Dispositif de re-chiffrement (400) dans un système cryptographique (10) destiné à mettre en œuvre une fonction de re-chiffrement par procuration dans un schéma cryptographique selon lequel, lorsque deux éléments d'information correspondent l'un à l'autre, un texte chiffré dans lequel est défini l'un des deux éléments d'information est en mesure d'être déchiffré avec une clé de déchiffrement dans laquelle est défini l'autre des deux éléments d'information, le dispositif de re-chiffrement comprenant :

une partie d'acquisition de texte chiffré (420) destinée à acquérir un texte chiffré $ct_0$ dans lequel est définie l'une parmi des informations d'attribut $x_0$ et des informations d'attribut $v_0$ correspondant les unes aux autres ;

une partie d'acquisition de clé de re-chiffrement (430) destinée à acquérir une clé de re-chiffrement $rk_1$ qui inclut une clé de déchiffrement $k^{*rk}{}_0$ obtenue en multipliant une clé de déchiffrement $k^*$ dans laquelle est définie l'autre parmi les informations d'attribut $x_0$ et les informations d'attribut $v_0$ par un nombre aléatoire $r_1$, et qui inclut un texte chiffré $ct'_1$ obtenu en chiffrant le nombre aléatoire $r_1$ avec l'une parmi des informations d'attribut $x_1$ et des informations d'attribut $v_1$ correspondant les unes aux autres, lesquelles ont été définies ; et

une partie de fourniture en sortie de texte chiffré re-chiffré (470) destinée à fournir en sortie un texte chiffré re-chiffré $ct_1$ qui inclut une clé de session $K'_0$ et le texte chiffré $ct'_1$; la clé de session $K'_0$ étant générée en calculant une opération d'appariement entre le texte chiffré $ct_0$ et la clé de déchiffrement $k^{*rk}{}_0$.

10. Programme cryptographique destiné à mettre en œuvre une fonction de re-chiffrement par procuration dans un schéma cryptographique selon lequel, lorsque deux éléments d'information correspondent l'un à l'autre, un texte chiffré dans lequel est défini l'un des deux éléments d'information est en mesure d'être déchiffré avec une clé de déchiffrement dans laquelle est défini l'autre des deux éléments d'information, le programme cryptographique amenant un ordinateur à exécuter :

un processus de chiffrement consistant à fournir en sortie un texte chiffré $ct_0$ dans lequel est définie l'une parmi des informations d'attribut $x_0$ et des informations d'attribut $v_0$ correspondant les unes aux autres ;

un processus de génération de clé de re-chiffrement consistant à acquérir une clé de déchiffrement $k^*$ dans laquelle est définie l'autre parmi les informations d'attribut $x_0$ et les informations d'attribut $v_0$, et à fournir en sortie une clé de re-chiffrement $rk_1$ qui inclut une clé de déchiffrement $k^{*rk}{}_0$ obtenue en multipliant la clé de déchiffrement acquise $k^*$ par un nombre aléatoire $r_1$, et qui inclut un texte chiffré $ct'_1$ obtenu en chiffrant le nombre aléatoire $r_1$ avec l'une parmi des informations d'attribut $x_1$ et des informations d'attribut $v_1$ correspondant les unes aux autres, lesquelles ont été définies ; et

un processus de re-chiffrement consistant à fournir en sortie un texte chiffré re-chiffré $ct_1$ qui inclut une clé de session $K'_0$ et le texte chiffré $ct'_1$ ; la clé de session $K'_0$ étant générée en calculant une opération d'appariement entre le texte chiffré $ct_0$ et la clé de déchiffrement $k^{*rk}{}_0$.

# Fig. 1

$\hat{M}$

$\rho$

M

$p_1$
$p_2$

$\cdot$
$\cdot$
$\cdot$

$p_n$

$\neg p_1$

$\neg p_2$

$\cdot$
$\cdot$
$\cdot$

$\neg p_n$

$\rho_1$
$\rho_2$

$\cdot$
$\cdot$
$\cdot$

$\rho_L$

$M_{1,1}$ $M_{1,2}$ $\cdot \cdot \cdot$ $M_{1,r}$
$M_{2,1}$ $M_{2,2}$ $\cdot \cdot \cdot$ $M_{2,r}$

$\cdot$
$\cdot$
$\cdot$

$M_{L,1}$ $M_{L,2}$ $\cdot \cdot \cdot$ $M_{L,r}$

L ROWS

r COLUMNS

EP 3 096 487 B1

# Fig. 2

EP 3 096 487 B1

$$M_\delta = \begin{pmatrix} M_{1,1} & M_{1,2} & M_{1,3} & M_{1,4} & M_{1,5} \\ M_{2,1} & M_{2,2} & M_{2,3} & M_{2,4} & M_{2,5} \\ M_{4,1} & M_{4,2} & M_{4,3} & M_{4,4} & M_{4,5} \end{pmatrix} \begin{matrix} M_1 \\ M_2 \\ M_4 \end{matrix}$$

# Fig. 3

EP 3 096 487 B1

$$s_0 = \left[ \overbrace{1, \ldots, 1}^{r \ \text{COLUMNS}} \right] \begin{bmatrix} f_1 \\ \vdots \\ f_r \end{bmatrix} = \sum_{k=1}^{r} f_k$$

EP 3 096 487 B1

# Fig. 4

$$\vec{s}^{T} = \begin{pmatrix} M_{1,1} & M_{1,2} & \cdot & \cdot & \cdot & M_{1,r} \\ M_{2,1} & M_{2,2} & \cdot & \cdot & \cdot & M_{2,r} \\ & & & \vdots & & \\ M_{L,1} & M_{L,2} & \cdot & \cdot & \cdot & M_{L,r} \end{pmatrix} \overbrace{\begin{matrix} f_1 \\ , \\ \cdot \\ \cdot \\ \cdot \\ , \\ f_r \end{matrix}} = \overbrace{\begin{matrix} s_1 \\ , \\ \cdot \\ \cdot \\ \cdot \\ , \\ s_L \end{matrix}}$$

# Fig. 5

**10: CRYPTOGRAPHIC SYSTEM**

100

KEY GENERATION DEVICE
(Setup)
(KG)

$\lambda, \vec{n}, Q$
$\Gamma, \Gamma'$

pk, sk

pk

pk

pk, $sk_{\Gamma'}$

200

ENCRYPTION DEVICE
(Enc)

m, S

$ct^n{}_S$

400

RE-ENCRYPTION
DEVICE
(REnc)

$ct^{n+1}{}_{S'}$

500

RE-ENCRYPTED CIPHERTEXT
DECRYPTION DEVICE
(RE-ENCRYPTION KEY
GENERATION DEVICE)
(RKG)
(Dec1)

m or $\perp$

pk, $sk_{\Gamma}$

$ct^n{}_S$

$rk^n{}_{\Gamma, S'}$

300

DECRYPTION DEVICE
(RE-ENCRYPTION KEY
GENERATION DEVICE)
(RKG)
(Dec2)

S′

m or $\perp$

# Fig. 6

EP 3 096 487 B1

## Fig. 7

ENCRYPTION DEVICE — 200

pk

PUBLIC PARAMETER RECEIVING PART — 210

pk

INFORMATION INPUT PART — 220

m, S

S

ENCRYPTION PART — 230

f VECTOR GENERATION PART — 231

s VECTOR GENERATION PART — 232

RANDOM NUMBER GENERATION PART — 233

CIPHERTEXT c GENERATION PART — 234

CIPHERTEXT TRANSMISSION PART — 240

$c_{0.n}, c_{i.n}, c_{T.n}$

$ct^n_S$

EP 3 096 487 B1

# Fig. 8

300 pk, sk_Γ

DECRYPTION DEVICE

310

DECRYPTION KEY RECEIVING PART

sk_Γ

360

SPAN PROGRAM COMPUTATION PART

330

RE-ENCRYPTION KEY GENERATION PART

331

RANDOM NUMBER GENERATION PART

332

ENCRYPTION PART

333

DECRYPTION KEY $k^{*rk}$ GENERATION PART

sk_Γ

$ct^n_S$

350

CIPHERTEXT RECEIVING PART

$ct^n_S$

370 accept

COMPLEMENTARY COEFFICIENT COMPUTATION PART

$ct^n_S$

380

PAIRING OPERATION PART

I, α

320

INFORMATION INPUT PART

S'

K

390

MESSAGE COMPUTATION PART

S'

$k^{*rk}$

340

RE-ENCRYPTION KEY TRANSMISSION PART

m or ⊥

$rk^n_{Γ, S'}$

EP 3 096 487 B1

# Fig. 9

400

pk

RE-ENCRYPTION DEVICE

410

PUBLIC PARAMETER
RECEIVING PART

pk

440

SPAN PROGRAM
COMPUTATION PART

$ct^n_S$

420

CIPHERTEXT
RECEIVING PART

$ct^n_S$

450   accept

COMPLEMENTARY
COEFFICIENT
COMPUTATION PART

$rk^n_{\Gamma,S'}$

430

RE-ENCRYPTION KEY
RECEIVING PART

$rk^n_{\Gamma,S'}$

$ct^n_S$

$rk^n_{\Gamma,S'}$   460

PAIRING
OPERATION PART

I, $\alpha_i$

$K'_n$   470

RE-ENCRYPTED
CIPHERTEXT
TRANSMISSION PART

$ct^{n+1}_{S'}$

EP 3 096 487 B1

# Fig.10

EP 3 096 487 B1

# Fig. 11

(Setup)

```
        ┌─────────────┐
        │    START    │
        └─────────────┘
               │
               ▼
┌──────────────────────────────┐      S101: INITIAL SETTING STEP
│       INITIAL SETTING        │
└──────────────────────────────┘
               │
               ▼
┌──────────────────────────────┐      S102: NUMBER OF RE-ENCRYPTION TIMES
│     TAKE AS INPUT VALUE Q     │            INPUT STEP
└──────────────────────────────┘
               │
               ▼
    ╱─────────────────────╲
    ╲     j=0, ···, Q      ╱
     ╲───────────────────╱
               │
               ▼
┌──────────────────────────────┐      S103: ORTHONORMAL BASIS GENERATION STEP
│ GENERATE PARAMETER, BASES B₀.ⱼ AND B*₀.ⱼ, │
│   AND BASES Bₜ.ⱼ AND B*ₜ.ⱼ    │
└──────────────────────────────┘
               │
               ▼
┌──────────────────────────────┐      S104: PUBLIC PARAMETER SETTING STEP
│    SET PUBLIC PARAMETER pk    │
└──────────────────────────────┘
               │
               ▼
┌──────────────────────────────┐      S105: MASTER KEY SETTING STEP
│       SET MASTER KEY sk       │
└──────────────────────────────┘
               │
               ▼
    ╲─────────────────────╱
     ╲         j         ╱
      ╲───────────────╱
               │
               ▼
┌──────────────────────────────┐      S106: MASTER KEY STORAGE STEP
│   STORE PUBLIC PARAMETER pk   │
│      AND MASTER KEY sk        │
└──────────────────────────────┘
               │
               ▼
        ┌─────────────┐
        │     END     │
        └─────────────┘
```

S103: ORTHONORMAL BASIS GENERATION STEP — GENERATE PARAMETER, BASES $B_{0.j}$ AND $B^*_{0.j}$, AND BASES $B_{t.j}$ AND $B^*_{t.j}$

EP 3 096 487 B1

# Fig. 12

(KG)

```
START
```

TAKE AS INPUT ATTRIBUTE SET $\Gamma$ — S201: INFORMATION INPUT STEP

GENERATE RANDOM NUMBERS — S202: RANDOM NUMBER GENERATION STEP

GENERATE DECRYPTION KEYS $k^*_{0.j}$ AND $k^*_{t.j}$ — S203: DECRYPTION KEY $k^*$ GENERATION STEP

TRANSMIT DECRYPTION KEY $sk_\Gamma$ — S204: KEY TRANSMISSION STEP

```
END
```

EP 3 096 487 B1

# Fig. 13

(Enc)

START

S301: PUBLIC PARAMETER RECEIVING STEP

RECEIVE PUBLIC PARAMETER pk

S302: INFORMATION INPUT STEP

TAKE AS INPUT ACCESS STRUCTURE $S := (M, \rho)$,
MESSAGE m, AND
NUMBER OF RE-ENCRYPTION TIMES n

S303: f VECTOR
GENERATION STEP

GENERATE VECTOR $f^{\rightarrow}$

S304: s VECTOR
GENERATION STEP

GENERATE VECTOR $s^{\rightarrow T}$ AND VALUE $s_0$

S305: RANDOM NUMBER
GENERATION STEP

GENERATE RANDOM NUMBERS

S306: CIPHERTEXT c
GENERATION STEP

GENERATE
CIPHERTEXTS $c_{0.n}$, $c_{i.n}$, AND $c_{T.n}$

S307: CIPHERTEXT
TRANSMISSION STEP

TRANSMIT CIPHERTEXT $ct^n_S$

END

EP 3 096 487 B1

# Fig. 14

(RKG)

START

RECEIVE DECRYPTION KEY $sk_\Gamma$ AND
PUBLIC PARAMETER pk

TAKE AS INPUT ACCESS STRUCTURE S' := (M', $\rho$ ')
AND NUMBER OF RE-ENCRYPTION TIMES n

GENERATE RANDOM NUMBERS

ENCRYPT RANDOM NUMBER $r_{n+1}$
TO GENERATE CIPHERTEXT $ct'^{n+1}_{S'}$

GENERATE DECRYPTION KEY $k^{*rk}$

TRANSMIT RE-ENCRYPTION KEY $rk^{n}_{\Gamma, S'}$

END

S401: DECRYPTION KEY RECEIVING STEP

S402: INFORMATION INPUT STEP

S403: RANDOM NUMBER GENERATION STEP

S404: RANDOM NUMBER ENCRYPTION STEP

S405: DECRYPTION KEY $k^{*rk}$ GENERATION STEP

S406: KEY TRANSMISSION STEP

# Fig.15

(REnc) START

↓

RECEIVE PUBLIC PARAMETER pk — S501: PUBLIC PARAMETER RECEIVING STEP

↓

RECEIVE CIPHERTEXT $ct^n_S$ — S502: CIPHERTEXT RECEIVING STEP

↓

RECEIVE RE-ENCRYPTION KEY $rk^n_{\Gamma,S'}$ — S503: RE-ENCRYPTION KEY RECEIVING STEP

↓

DETERMINE WHETHER OR NOT S ACCEPTS Γ — S504: SPAN PROGRAM COMPUTATION STEP

ACCEPT ↓        REJECT →

COMPUTE I AND $\alpha_i$ — S505: COMPLEMENTARY COEFFICIENT COMPUTATION STEP

↓

PERFORM PAIRING OPERATION TO COMPUTE $K'_n$ — S506: PAIRING OPERATION STEP

↓

TRANSMIT RE-ENCRYPTED CIPHERTEXT $ct^{n+1}_{S'}$ — S507: RE-ENCRYPTED CIPHERTEXT TRANSMISSION STEP

↓

END

# Fig. 16

(Dec1)

START

RECEIVE DECRYPTION KEY $sk_\Gamma{}'$, AND PUBLIC PARAMETER pk — S601: DECRYPTION KEY RECEIVING STEP

RECEIVE RE-ENCRYPTED CIPHERTEXT $ct^n{}_{S'}$ — S602: CIPHERTEXT RECEIVING STEP

S603: SPAN PROGRAM COMPUTATION STEP

DETERMINE WHETHER OR NOT S' ACCEPTS $\Gamma'$

REJECT

ACCEPT

COMPUTE I AND $\alpha_i$ — S604: COMPLEMENTARY COEFFICIENT COMPUTATION STEP

PERFORM PAIRING OPERATION TO COMPUTE $K'_n$ — S605: PAIRING OPERATION STEP

COMPUTE RANDOM NUMBER $r_1$ — S606: RANDOM NUMBER COMPUTATION STEP

COMPUTE $c_{T.0}/(K'_1)^{r1}$ TO COMPUTE MESSAGE m — S607: MESSAGE COMPUTATION STEP

END

## Fig. 17

(Dec2)

START

RECEIVE DECRYPTION KEY $sk_\Gamma$
AND PUBLIC PARAMETER pk
 — S701: DECRYPTION KEY RECEIVING STEP

RECEIVE CIPHERTEXT $ct^0{}_S$
 — S702: CIPHERTEXT RECEIVING STEP

S703: SPAN PROGRAM COMPUTATION STEP

DETERMINE WHETHER OR NOT S ACCEPTS $\Gamma$ — REJECT

ACCEPT

COMPUTE I AND $\alpha_i$
 — S704: COMPLEMENTARY COEFFICIENT
COMPUTATION STEP

PERFORM PAIRING OPERATION
TO COMPUTE SESSION KEY $K_0$
 — S705: PAIRING OPERATION STEP

COMPUTE $c_{T.0}/K_0$
TO COMPUTE MESSAGE m
 — S706: MESSAGE COMPUTATION STEP

END

EP 3 096 487 B1

# Fig. 18

(Setup)

START

GENERATE PARAMETER, BASES $B_0$ AND $B^*_0$, AND BASES $B_t$ AND $B^*_t$ — S801: ORTHONORMAL BASIS GENERATION STEP

GENERATE PUBLIC PARAMETER pk — S802: PUBLIC PARAMETER GENERATION STEP

GENERATE MASTER KEY sk — S803: MASTER KEY GENERATION STEP

STORE PUBLIC PARAMETER pk AND MASTER KEY sk — S804: MASTER KEY STORAGE STEP

END

EP 3 096 487 B1

## Fig. 19

KEY GENERATION DEVICE (Setup) (KG) — 100

$\lambda, \vec{n}, Q$
S, S'

pk, sk

10: CRYPTOGRAPHIC SYSTEM

pk

pk

pk, $sk_{S'}$

ENCRYPTION DEVICE (Enc) — 200

$m, \Gamma$

$ct^n_\Gamma$

RE-ENCRYPTION DEVICE (REnc) — 400

$ct^{n+1}_{\Gamma'}$

RE-ENCRYPTED CIPHERTEXT DECRYPTION DEVICE (Dec1) — 500

m or $\perp$

pk, $sk_S$

$ct^n_\Gamma$

$rk^n_{S, \Gamma'}$

DECRYPTION DEVICE (RE-ENCRYPTION KEY GENERATION DEVICE) (RKG) (Dec2) — 300

$\Gamma'$

m or $\perp$

EP 3 096 487 B1

# Fig. 20

EP 3 096 487 B1

KEY GENERATION DEVICE — 100 — 110

MASTER KEY GENERATION PART

pk, sk — 120

MASTER KEY STORAGE PART

pk

INFORMATION INPUT PART — 130

S

pk, sk

DECRYPTION KEY GENERATION PART — 140 — 141

RANDOM NUMBER GENERATION PART

DECRYPTION KEY k* GENERATION PART — 142

f VECTOR GENERATION PART — 143

s VECTOR GENERATION PART — 144

KEY TRANSMISSION PART — 150

$k^*_{0.j}$, $k^*_{i.j}$

pk  $sk_S$

# Fig. 21

ENCRYPTION DEVICE 200

pk

PUBLIC PARAMETER RECEIVING PART 210

pk →

ENCRYPTION PART 230

RANDOM NUMBER GENERATION PART 233

CIPHERTEXT c GENERATION PART 234

INFORMATION INPUT PART 220

$m, \ \Gamma$

$\Gamma$

CIPHERTEXT TRANSMISSION PART 240

$c_{0.n}, \ c_{t.n}, \ c_{T.n}$

$ct^n{}_\Gamma$

EP 3 096 487 B1

# Fig. 22

pk, sk$_S$

300

DECRYPTION DEVICE

310

DECRYPTION KEY
RECEIVING PART

sk$_S$

360

SPAN PROGRAM
COMPUTATION PART

330

RE-ENCRYPTION KEY
GENERATION PART

331

RANDOM NUMBER
GENERATION PART

sk$_S$

ct$^n_\Gamma$

sk$_S$

350

CIPHERTEXT
RECEIVING PART

ct$^n_\Gamma$

370  accept

COMPLEMENTARY
COEFFICIENT
COMPUTATION PART

332

ENCRYPTION PART

ct$^n_\Gamma$

380

PAIRING
OPERATION PART

I, $\alpha$

320

INFORMATION
INPUT PART

$\Gamma$'

333

DECRYPTION KEY k*$^{rk}$
GENERATION PART

K

390

MESSAGE
COMPUTATION PART

$\Gamma$'

k*$^{rk}$

m  or  $\perp$

340

RE-ENCRYPTION KEY
TRANSMISSION PART

rk$^n_{S,\Gamma'}$

EP 3 096 487 B1

## Fig. 23

400

pk

RE-ENCRYPTION DEVICE

410

PUBLIC PARAMETER
RECEIVING PART

pk

440

SPAN PROGRAM
COMPUTATION PART

$ct^n_{\Gamma}$

420

CIPHERTEXT
RECEIVING PART

$ct^n_{\Gamma}$

450    accept

COMPLEMENTARY
COEFFICIENT
COMPUTATION PART

$rk^n_{S, \Gamma'}$

430

RE-ENCRYPTION KEY
RECEIVING PART

$rk^n_{S, \Gamma'}$

$ct^n_{\Gamma}$

$rk^n_{S, \Gamma'}$

460

PAIRING
OPERATION PART

$I, \alpha_i$

$K'_n$

470

RE-ENCRYPTED
CIPHERTEXT
TRANSMISSION PART

$ct^{n+1}_{\Gamma'}$

EP 3 096 487 B1

122

# Fig. 24

pk, $sk_{S'}$

RE-ENCRYPTED CIPHERTEXT DECRYPTION DEVICE ~500

DECRYPTION KEY RECEIVING PART ~510

$S'$

SPAN PROGRAM COMPUTATION PART ~530

$sk_{\Gamma'}$

CIPHERTEXT RECEIVING PART ~520

$\Gamma'$

accept

COMPLEMENTARY COEFFICIENT COMPUTATION PART ~540

$ct^{n+1}_{\Gamma'}$

$ct^{n+1}_{\Gamma'}$

PAIRING OPERATION PART ~550

$I, \alpha$

$K'_n$

RANDOM NUMBER COMPUTATION PART ~560

$r_1$

MESSAGE COMPUTATION PART ~570

m or $\perp$

EP 3 096 487 B1

## Fig. 25

(KG)

START

TAKE AS INPUT ACCESS STRUCTURE $S := (M, \rho)$      S901: INFORMATION INPUT STEP

GENERATE VECTOR $f^{\rightarrow}$      S902: f VECTOR GENERATION STEP

GENERATE VECTOR $s^{\rightarrow T}$ AND VALUE $s_0$      S903: s VECTOR GENERATION STEP

GENERATE RANDOM NUMBERS      S904: RANDOM NUMBER GENERATION STEP

GENERATE DECRYPTION KEYS $k^*_{0.j}$ AND $k^*_{i.j}$      S905: DECRYPTION KEY k* GENERATION STEP

TRANSMIT DECRYPTION KEY $sk_S$      S906: KEY TRANSMISSION STEP

END

EP 3 096 487 B1

# Fig. 26

(Enc)

```
START
```

RECEIVE PUBLIC PARAMETER pk — S1001: PUBLIC PARAMETER RECEIVING STEP

TAKE AS INPUT ATTRIBUTE SET $\Gamma$, MESSAGE $m$, AND NUMBER OF RE-ENCRYPTION TIMES $n$ — S1002: INFORMATION INPUT STEP

GENERATE RANDOM NUMBERS — S1003: RANDOM NUMBER GENERATION STEP

GENERATE CIPHERTEXTS $c_{0.n}$, $c_{t.n}$, AND $c_{T.n}$ — S1004: CIPHERTEXT $c$ GENERATION STEP

TRANSMIT CIPHERTEXT $ct^n{}_\Gamma$ — S1005: CIPHERTEXT TRANSMISSION STEP

```
END
```

EP 3 096 487 B1

# Fig.27

S1101: DECRYPTION KEY RECEIVING STEP

S1102: INFORMATION INPUT STEP

S1103: RANDOM NUMBER GENERATION STEP

S1104: RANDOM NUMBER ENCRYPTION STEP

S1105: DECRYPTION KEY $k^{*rk}$ GENERATION STEP

S1106: KEY TRANSMISSION STEP

(RKG)

START

RECEIVE DECRYPTION KEY $sk_S$ AND PUBLIC PARAMETER pk

TAKE AS INPUT ATTRIBUTE SET $\Gamma'$

GENERATE RANDOM NUMBERS

ENCRYPT RANDOM NUMBER $r_{n+1}$ TO GENERATE CIPHERTEXT $ct'_{n+1,\Gamma'}$

GENERATE DECRYPTION KEY $k^{*rk}$

TRANSMIT RE-ENCRYPTION KEY $rk^n_{S,\Gamma'}$

END

# Fig. 28

(REnc)

START

RECEIVE PUBLIC PARAMETER pk — S1201: PUBLIC PARAMETER RECEIVING STEP

RECEIVE CIPHERTEXT $ct^n_\Gamma$ — S1202: CIPHERTEXT RECEIVING STEP

RECEIVE RE-ENCRYPTION KEY $rk^n_{S,\Gamma'}$ — S1203: RE-ENCRYPTION KEY RECEIVING STEP

S1204: SPAN PROGRAM COMPUTATION STEP

DETERMINE WHETHER OR NOT S ACCEPTS $\Gamma$ — REJECT

ACCEPT

COMPUTE I AND $\alpha_i$ — S1205: COMPLEMENTARY COEFFICIENT COMPUTATION STEP

PERFORM PAIRING OPERATION TO COMPUTE $K'_n$ — S1206: PAIRING OPERATION STEP

TRANSMIT RE-ENCRYPTED CIPHERTEXT $ct^{n+1}_{\Gamma'}$ — S1207: RE-ENCRYPTED CIPHERTEXT TRANSMISSION STEP

END

# Fig. 29

(Dec1)

START

RECEIVE DECRYPTION KEY $sk_S$, AND PUBLIC PARAMETER pk → S1301: DECRYPTION KEY RECEIVING STEP

RECEIVE RE-ENCRYPTED CIPHERTEXT $ct^{n+1}_{\Gamma'}$ → S1302: CIPHERTEXT RECEIVING STEP

S1303: SPAN PROGRAM COMPUTATION STEP

DETERMINE WHETHER OR NOT S' ACCEPTS $\Gamma'$

REJECT

ACCEPT

COMPUTE I AND $\alpha_i$ → S1304: COMPLEMENTARY COEFFICIENT COMPUTATION STEP

PERFORM PAIRING OPERATION TO COMPUTE $K'_n$ → S1305: PAIRING OPERATION STEP

COMPUTE RANDOM NUMBER $r_1$ → S1306: RANDOM NUMBER COMPUTATION STEP

COMPUTE $c_{T,0} / (K'_1)^{r1}$ TO COMPUTE MESSAGE m → S1307: MESSAGE COMPUTATION STEP

END

# Fig. 30

(Dec2)

```
START
```

RECEIVE DECRYPTION KEY $sk_S$
AND PUBLIC PARAMETER pk
— S1401: DECRYPTION KEY RECEIVING STEP

RECEIVE CIPHERTEXT $ct^0_\Gamma$
— S1402: CIPHERTEXT RECEIVING STEP

— S1403: SPAN PROGRAM COMPUTATION STEP

REJECT ← DETERMINE WHETHER OR NOT S ACCEPTS $\Gamma$

↓ ACCEPT

COMPUTE I AND $\alpha_i$
— S1404: COMPLEMENTARY COEFFICIENT COMPUTATION STEP

PERFORM PAIRING OPERATION
TO COMPUTE SESSION KEY $K_0$
— S1405: PAIRING OPERATION STEP

COMPUTE $c_{T.0}/K_0$
TO COMPUTE MESSAGE m
— S1406: MESSAGE COMPUTATION STEP

```
END
```

EP 3 096 487 B1

## Fig. 31

EP 3 096 487 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2012133214 A
- WO 2011045723 A
- WO A1 A

### Non-patent literature cited in the description

- **M. GREEN ; G. ATENIESE.** *Identity-Based Proxy Re-encryption. In Applied Cryptography and Network Security. volume 4521 of LNCS,* 2007, vol. 4521, 288-306
- **XIAOHUI LIANG ; ZHENFU CAO ; HUANG LIN ; JUN SHAO.** Attribute based proxy re-encryption with delegating capabilities. *ASIA CCS,* 2009, 276-286
- **YUTAKA KAWAI ; KATSUYUKI TAKASHIMA.** Fully-Anonymous Functional Proxy-Re-Encryption. *Cryptology ePrint Archive: Report 2013/318*
- **CANETTI ; S. HOHENBERGER.** Chosen-Ciphertext Secure Proxy Re-encryption. *ACMCCS,* 2007
- **OKAMOTO, T ; TAKASHIMA, K.** *Decentralized Attribute-Based Signatures, http://eprint.iacr.org/2011/701*
- **OKAMOTO, T ; TAKASHIMA, K.** *Fully Secure Unbounded Inner-Product and Attribute-Based Encryption, http://eprint.iacr.org/2012/671*
- Achieving Short Ciphertexts or Short Secret-Keys for Adaptively Secure General Inner-Product Encryption. **OKAMOTO, T. ; TAKASHIMA, K.** CANS 2011, LNCS. Springer, 2011, vol. 7092, 138-159
- Ciphertext Policy Attribute-Based Proxy Re-encryption. **SONG LUO et al.** INFORMATION AND COMMUNICATIONS SECURITY. SPRINGER, 401-415